(19) **Europäisches Patentamt European Patent Office Office européen des brevets**

(11) **EP 4 589 903 A1**

(12) **EUROPEAN PATENT APPLICATION**
published in accordance with Art. 153(4) EPC

(43) Date of publication:
**23.07.2025 Bulletin 2025/30**

(21) Application number: **23896699.8**

(22) Date of filing: **24.11.2023**

(51) International Patent Classification (IPC):
***H04L 27/34*** *(2006.01)*

(52) Cooperative Patent Classification (CPC):
**H04L 25/02; H04L 27/34; H04L 27/36**

(86) International application number:
**PCT/CN2023/134170**

(87) International publication number:
**WO 2024/114548 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 CN 202211521420**

(71) Applicant: **ZTE Corporation**
**Shenzhen, Guangdong 518057 (CN)**

(72) Inventors:
• **YUAN, Zhifeng**
  **Shenzhen, Guangdong 518057 (CN)**
• **LI, Zhigang**
  **Shenzhen, Guangdong 518057 (CN)**
• **MA, Yihua**
  **Shenzhen, Guangdong 518057 (CN)**
• **LI, Weimin**
  **Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **INFORMATION TRANSMISSION METHOD, COMMUNICATION DEVICE, AND STORAGE MEDIUM**

(57) The present application provides an information transmission method, a communication device, and a storage medium. The method comprises: determining a first quantity of very sparse pilots, and then transmitting a data packet and the first quantity of very sparse pilots together to a second communication node, wherein the first quantity is greater than or equal to 1, the data packet at least comprises a modulation symbol, and the modulation symbol is obtained by modulating M1+1 pieces of bit information in the data packet according to a first constellation diagram model, or by modulating M2+2 pieces of bit information in the data packet according to a second constellation diagram model, or by modulating M3+3 pieces of bit information in the data packet according to a third constellation diagram model, M1 being an integer greater than or equal to 1, M2 being an integer greater than or equal to 1, and M3 being an integer greater than or equal to 0.

Determine a first number of extremely sparse pilots — S110

Send a data packet and the first number of extremely sparse pilots to a second communication node — S120

*FIG. 2*

EP 4 589 903 A1

**Description**

**CROSS-REFERENCE TO RELATED APPLICATION**

This application is filed on the basis of the Chinese patent application No. 202211521420.5 filed November 30, 2022, and claims priority of the Chinese patent application, the entire contents of which are incorporated herein by reference.

**TECHNICAL FIELD**

The present disclosure relates to, but is not limited to, the field of communication, in particular to a method for information transmission, a communication apparatus, and a storage medium.

**BACKGROUND**

In the case where a wireless communication system is connected with a large number of terminal devices, the wireless communication system needs to transmit information with the large number of terminal devices. Further, if the spectral efficiency of information transmission for each terminal device is not too low, it is necessary to improve the spectral efficiency by increasing the order of modulation methods.

In related schemes, Quadrature Amplitude Modulation (QAM) is commonly used, such as 16QAM, 32QAM, 64QAM and 256QAM. However, these high-order modulation methods need accurate channel estimation to ensure performance. If the channel estimation error is large, the constellation will be distorted during demodulation, which will lead to deterioration of demodulation performance, and then it is difficult to achieve information transmission with high spectral efficiency. Moreover, in the scenario where a wireless communication system is connected with a large number of terminal devices, information transmission between a large number of terminal devices and the system will increase the pilot overhead at the terminal devices. If the pilot overhead is too large, it will be difficult to ensure the accuracy of channel estimation, so it will also limit the demodulation performance of a base station or an access point, and it is also difficult to achieve information transmission with high spectral efficiency. Therefore, it is important to support mass terminal devices to realize information transmission with high spectrum efficiency.

**SUMMARY**

Provided are a method for information transmission, a communication apparatus, and a storage medium in some embodiments of the present disclosure, thereby a large number of first communication nodes are thus enabled to realize information transmission with high spectral efficiency.

According to a first aspect of the present disclosure, a method for information transmission is provided. The method is applied to a first communication node, and includes:

determining a first number of extremely sparse pilots;
transmitting a data packet and the first number of extremely sparse pilots to a second communication node;
where the first number is greater than or equal to 1, and the data packet at least contains at least one modulation symbol;
the modulation symbol is acquired by modulating $M1 + 1$ number of bits of information in the data packet according to a first constellation model; the first constellation model includes $2 * N1$ number of constellation points, where $M1$ is an integer greater than or equal to 1; and $N1$ and $M1$ satisfy $N1 = 2^{M1}$;
complex forms corresponding to the $2 * N1$ number of constellation points in the first constellation model include:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

where $\pi$ denotes Pi; $j$ is an imaginary number; the value of $j$ is equal to $\sqrt{-1}$; e denotes the natural logarithm; $\theta$ is a real number; $a_1, a_2, \cdots, a_{N1}$ are positive numbers and satisfy: $0 < a_1 < a_2 < \cdots < a_{N1}$;
or,
the modulation symbol is acquired by modulating the $M2 + 2$ number of bits of information in the data packet according to a second constellation model; the second constellation model includes $4 * N2$ number of constellation points, where

$M2$ is an integer greater than or equal to 1; and $N2$ and M2 satisfy $N2 = 2^{M2}$;

complex forms corresponding to the 4 * $N2$ number of constellation points in the second constellation model include:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

where $\pi$ denotes Pi; $j$ is an imaginary number; the value of $j$ is equal to $\sqrt{-1}$; $e$ denotes the natural logarithm; $\theta$ is a real number; $a_1, a_2, \cdots, a_{N2}$ and $b_1, b_2, \cdots, b_{N2}$ are positive numbers and satisfy: $0 < a_1 < a_2 < \cdots < a_{N2}$, and $0 < b_1 < b_2 < \cdots < b_{N2}$.
or,

the modulation symbol is acquired by modulating $M3 + 3$ number of bits of information in the data packet according to a third constellation model; the third constellation model may include 8 * $N3$ number of constellation points, where $M3$ is an integer greater than or equal to 0; and $N3$ and M3 satisfy $N3 = 2^{M3}$;
complex forms corresponding to the 8 * $N3$ number of constellation points in the third constellation model include:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

where $\pi$ denotes Pi; $j$ is an imaginary number; the value of $j$ is equal to $\sqrt{-1}$; $e$ denotes the natural logarithm; $\theta$ is a real number; $a_1, a_2, \cdots, a_{N3}$ and $b_1, b_2, \cdots, b_{N3}$ are positive numbers and satisfy: $0 < a_1 < a_2 < \cdots < a_{N3}$, and $0 < b_1 < b_2 < \cdots < b_{N3}$.

According to a second aspect of the present disclosure, a method for information transmission is provided. The method is applied to a second communication node, and includes:

receiving a data packet and a first number of extremely sparse pilots that are sent by a first communication node;

where the first number is greater than or equal to 1, and the data packet includes at least a modulation symbol; the modulation symbol is acquired by modulating $M1 + 1$ number of bits of information in the data packet according to a first constellation model; the first constellation model includes $2 * N1$ number of constellation points, where $M1$ is an integer greater than or equal to 1; and $N1$ and $M1$ satisfy $N1 = 2^{M1}$;

complex forms corresponding to the $2 * N1$ number of constellation points in the first constellation model include:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

where $\pi$ denotes Pi; $j$ is an imaginary number; the value of $j$ is equal to $\sqrt{-1}$ ; $e$ denotes the natural logarithm; $\theta$ is a real number; $a_1, a_2, \cdots, a_{N1}$ are positive numbers and satisfy: $0 < a_1 < a_2 < \cdots < a_{N1}$;

or,

the modulation symbol is acquired by modulating $M2 + 2$ number of bits of information in the data packet according to a second constellation model; the second constellation model includes $4 * N2$ number of constellation points, where $M2$ is an integer greater than or equal to 1; and $N2$ and $M2$ satisfy $N2 = 2^{M2}$;

complex forms corresponding to the $4 * N2$ number of constellation points in the second constellation model include:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

where $\pi$ denotes Pi; j is an imaginary number; the value of $j$ is equal to $\sqrt{-1}$ ; $e$ denotes the natural logarithm; $\theta$ is a real number; $a_1, a_2, \cdots, a_{N2}$ and $b_1, b_2, \cdots, b_{N2}$ are positive numbers and satisfy: $0 < a_1 < a_2 < \cdots < a_{N2}$, and $0 < b_1 < b_2 < \cdots < b_{N2}$.

or,

the modulation symbol is acquired by modulating $M3 + 3$ number of bits of information in the data packet according to a third constellation model; the third constellation model includes $8 * N3$ number of constellation points, where $M3$ is an integer greater than or equal to 0; and $N3$ and $M3$ satisfy $N3 = 2^{M3}$;

complex forms corresponding to the $8 * N3$ number of constellation points in the third constellation model include:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

where $\pi$ denotes Pi; j is an imaginary number; the value of $j$ is equal to $\sqrt{-1}$; e denotes the natural logarithm; $\theta$ is a real number; $a_1, a_2, \cdots, a_{N3}$ and $b_1, b_2, \cdots, b_{N3}$ are positive numbers and satisfy: $0 < a_1 < a_2 < \cdots < a_{N3}$, and $0 < b_1 < b_2 < \cdots < b_{N3}$.

According to a third aspect of the present disclosure, a communication apparatus is provided. The apparatus includes a memory, a processor, and a computer program stored in the memory and executable on the processor which, when executed by the processor, causes the processor to carry out any one of the methods as described above.

According to a fourth aspect of the present disclosure, a computer-readable storage medium is provided. The computer-readable storage medium stores a computer-executable instruction which, when executed by a processor, causes the processor to carry out any one of the methods as described above.

According to a fifth aspect of the present disclosure, a computer program product is provided. The product includes a computer program or a computer instruction stored in a computer-readable storage medium which, when executed by a processor of a computer device, causes the computer device to carry out any one of the methods as described above.

According to the method set forth in the embodiments of the present disclosure, the first number of extremely sparse pilots is determined. Then the data packet and the first number of extremely sparse pilots are transmitted to the second communication node. The first number is greater than or equal to 1. the data packet at least contains at least one modulation symbol. The modulation symbol is obtained by modulating the $M1 + 1$ number of bits of information in the data packet according to the first constellation model, or by modulating the $M2 + 2$ number of bits of information in the data packet according to the second constellation model, or by modulating the $M3 + 3$ number of bits of information in the data packet according to the third constellation model. $M1$ is an integer greater than or equal to 1. $M2$ is an integer greater than or equal to 1. $M3$ is an integer greater than or equal to 0. That is, the first communication node transmits the extremely sparse pilots and the data packet containing the modulation symbol to the second communication node. The second communication node can estimate part of the information of the wireless channel from the extremely sparse pilots and further extract the channel information from the modulation symbol without estimating all the information of the wireless channel from the extremely sparse pilots, thereby reducing the pilot overhead of the first communication node and further improving the accuracy of channel estimation, thereby improving the demodulation performance of the second communication node and realizing information transmission with high spectral efficiency. Further, since $M1$ is an integer greater than or equal to 1, $M2$ is an integer greater than or equal to 1, and $M3$ is an integer greater than or equal to 0, the modulation symbol can be obtained by modulating a plurality of bits of information in a data packet according to one of the first constellation model, the second constellation model or the third constellation model. That is, the modulation symbol carries a plurality of bits of information, thereby realizing high-order modulation and further improving the spectral efficiency of information transmission. Therefore, the embodiments of the present disclosure can enable a large number of first communication nodes to realize information transmission with high spectral efficiency.

**BRIEF DESCRIPTION OF DRAWINGS**

FIG. 1 depicts a constellation diagram corresponding to a 64QAM modulation symbol according to an embodiment of the present disclosure;

FIG. 2 depicts a flowchart showing a method for information transmission according to an embodiment of the present disclosure;

FIG. 3 depicts a schematic diagram showing w number of mutually independent pilots according to an embodiment of the present disclosure;

FIG. 4 depicts a flowchart showing a method for information transmission according to another embodiment of the present disclosure;

FIG. 5 depicts a schematic diagram showing a first constellation model and a second constellation model according to an embodiment of the present disclosure;

FIG. 6 depicts a schematic diagram showing a cross-shaped constellation diagram before and after channel-caused rotation and scaling according to an embodiment of the present disclosure;

FIG. 7 depicts a schematic diagram showing sectioning configuration for a two-dimensional plane coordinate system according to an embodiment of the present disclosure;

FIG. 8 depicts a schematic diagram showing a cross-shaped constellation diagram according to an embodiment of the present disclosure;

FIG. 9 depicts a schematic diagram showing a cross-shaped constellation diagram according to another embodiment of the present disclosure;

FIG. 10 depicts a schematic diagram showing a cross-shaped constellation diagram according to another embodiment of the present disclosure;

FIG. 11 depicts a schematic diagram showing a cross-shaped constellation diagram according to another embodiment of the present disclosure;

FIG. 12 depicts a schematic diagram showing a cross-shaped constellation diagram according to another embodiment of the present disclosure;

FIG. 13 depicts a schematic diagram showing a cross-shaped constellation diagram according to another embodiment of the present disclosure;

FIG. 14 depicts a schematic diagram showing a cross-shaped constellation diagram according to another embodiment of the present disclosure;

FIG. 15 depicts a schematic diagram showing a cross-shaped constellation diagram according to another embodiment of the present disclosure;

FIG. 16 depicts a schematic diagram showing a cross-shaped constellation diagram according to another embodiment of the present disclosure;

FIG. 17 depicts a schematic diagram showing a cross-shaped constellation diagram according to another embodiment of the present disclosure;

FIG. 18 depicts a schematic diagram showing a cross-shaped constellation diagram according to another embodiment of the present disclosure;

FIG. 19 depicts a schematic diagram showing a PAM constellation diagram according to an embodiment of the present disclosure;

FIG. 20 depicts a schematic diagram showing a PAM constellation diagram according to another embodiment of the present disclosure;

FIG. 21 depicts a schematic diagram showing a third constellation model according to an embodiment of the present disclosure;

FIG. 22 depicts a schematic diagram showing a third constellation model according to another embodiment of the present disclosure;

FIG. 23 depicts a schematic diagram showing the definition of physical resource block according to an embodiment of the present disclosure;

FIG. 24 depicts a schematic diagram showing the definition of demodulation reference signal according to an embodiment of the present disclosure;

FIG. 25 depicts a schematic diagram showing the identification of reference signal ports by OCC codes according to an embodiment of the present disclosure;

FIG. 26 depicts a schematic diagram showing the definition of demodulation reference signal by OCC code according to an embodiment of the present disclosure;

FIG. 27 depicts a schematic diagram showing the definition of demodulation reference signal by OCC code according to another embodiment of the present disclosure;

FIG. 28 depicts a schematic diagram showing the definition of demodulation reference signal by OCC code according to another embodiment of the present disclosure;

FIG. 29 depicts a schematic diagram showing a PRB-based transmission according to an embodiment of the present disclosure;

FIG. 30 depicts a schematic diagram showing another definition of demodulation reference signal according to an embodiment of the present disclosure;

FIG. 31 depicts a schematic diagram showing another definition of demodulation reference signal according to an embodiment of the present disclosure;

FIG. 32 depicts a schematic diagram showing another definition of demodulation reference signal according to an embodiment of the present disclosure;

FIG. 33 depicts a schematic diagram showing the definition of reference signal according to an embodiment of the present disclosure;

FIG. 34 depicts a schematic diagram showing the definition of reference signal according to an embodiment of the present disclosure;

FIG. 35 depicts a schematic diagram showing the definition of reference signal according to an embodiment of the present disclosure;

FIG. 36 depicts a schematic diagram showing the generating of a DMRS port according to an embodiment of the present disclosure;

FIG. 37 depicts a schematic diagram showing the definition of reference signal according to an embodiment of the present disclosure;

FIG. 38 depicts a schematic diagram showing the definition of reference signal according to an embodiment of the present disclosure;

FIG. 39 depicts a schematic diagram showing a communication apparatus according to an embodiment of the present disclosure.

**DETAILED DESCRIPTION**

The purpose, technical scheme and advantages of the present disclosure will become apparent through the following description for various embodiments in conjunction with the drawings. It should be understood that the embodiments described here are intended for illustration but not limitation of the present disclosure.

It shall be noted that, in some cases, the operations shown or described may be performed in a different order than the logical order shown in the flowcharts. It should be understood that in the description, the claims and the description of the drawings, the term a plurality (or plurality) means above two; greater than, less than, more than, etc. shall be understood to exclude the number being referred to; and above, below, within, etc. shall be understood to include the number being referred to. Term "first" and "second" if described, are intended for distinguishing technical features, which shall not be understood as indicating or implying relative importance or implicitly indicating the number of the indicated technical features or the order of the indicated technical features.

According to the method for information transmission, communication apparatus, and storage medium set forth in the embodiments of the present disclosure, a first number of extremely sparse pilots is determined by a first communication node. Then a data packet and the first number of extremely sparse pilots are transmitted to a second communication node. The first number is greater than or equal to 1. The data packet at least contains at least one modulation symbol. A modulation symbol is obtained by modulating the M1 + 1 number of bits of information in the data packet according to the first constellation model, or by modulating the M2 + 2 number of bits of information in the data packet according to the second constellation model, or by modulating the M3 + 3 number of bits of information in the data packet according to the third constellation model. M1 is an integer greater than or equal to 1. M2 is an integer greater than or equal to 1. M3 is an integer greater than or equal to 0. That is, the first communication node transmits the extremely sparse pilots and the data packet containing the modulation symbol to the second communication node. The second communication node can estimate part of the information of the wireless channel from the extremely sparse pilots and further extract the channel information from the modulation symbol without estimating all the information of the wireless channel from the extremely sparse pilots, thereby reducing the pilot overhead of the first communication node and further improving the accuracy of channel estimation, thereby improving the demodulation performance of the second communication node and realizing information transmission with high spectral efficiency. Further, since M1 is an integer greater than or equal to 1, M2 is an integer greater than or equal to 1, and M3 is an integer greater than or equal to 0, the modulation symbol can be obtained by modulating a plurality of bits of information in a data packet according to one of the first constellation model, the second constellation model or the third constellation model. That is, the modulation symbol carries a plurality of bits of information, thereby realizing high-order modulation and further improving the spectral efficiency of information transmission. Therefore, the embodiments of the present disclosure can enable a large number of first communication node to realize information transmission with high spectrum efficiency.

It is worth noting that in the scene where the wireless communication system is connected with a large number of terminal devices, the wireless communication system needs to transmit information with the large number of terminal devices. Further, if the spectral efficiency of information transmission for each terminal device is not too low, it is necessary to improve the spectral efficiency by increasing the order of modulation methods.

In related schemes, the commonly used high-order modulation methods are quadrature amplitude modulation, such as 16QAM, 32QAM, 64QAM and 256QAM. The constellation points in the constellation diagram are distributed evenly in the two-dimensional plane (that is, the complex plane), so the two-dimensional signal space (that is, the two-dimensional signal plane) of the complex signal can be fully utilized. It can be understood that communication signals can usually be expressed by complex numbers at baseband. That is, a communication signal can be composed of an I signal component, which is a real part, and a Q signal component, which is an imaginary part. Further, a communication signal includes modulation symbols which can also be expressed by complex numbers. That is, a modulation symbol can be expressed by a complex number. For example, the modulation symbol $s$ can be expressed as $a + j * b$, where j is an imaginary part, i.e., $j = sqrt(-1)$; $a$ is the real part, indicating that the modulation symbol is transmitted with the I component, whereas $b$ is the imaginary part of $s$, indicating that the modulation symbol is transmitted with the Q component.

Take the constellation diagram of 16QAM in the related art as an example, the constellation diagram contains 16 points, and the complex numbers corresponding to these 16 points include the following:

$$3 + 3j, 3 + j, 3 - j, 3 - 3j,$$

$$1 + 3j, 1 + j, 1 - j, 1 - 3j,$$

$$-1 + 3j, -1 + j, -1 - j, -1 - 3j,$$

$$-3 + 3j, -3 + j, -3 - j, -3 - 3j$$

From the complex numbers corresponding to the 16 points, it can be seen that the constellation points of 16QAM are evenly distributed in a two-dimensional plane (also called a complex plane, or a complex signal space, or a two-dimensional signal space) with both the real parts and the imaginary parts ranging from -3 to 3. It can be understood that a complex plane is equivalent to a two-dimensional plane, so it can also be called a two-dimensional complex plane, where the real part of a complex number is equivalent to the x coordinate of the two-dimensional plane and the imaginary part of the complex number is equivalent to the $y$ coordinate of the two-dimensional plane. Therefore, a complex number can also be expressed by a point on the two-dimensional plane. For example, the complex number $a + j * b$ can be expressed by coordinates ($a, b$) on the two-dimensional plane, where coordinates ($a, b$) indicate that the x coordinate is $a$, and the ycoordinate is $b$, on the two-dimensional plane. Therefore, the 16 points in the 16QAM constellation diagram can be expressed not only by 16 complex numbers, but also by 16 two-dimensional coordinates on the two-dimensional plane, where the 16 two-dimensional coordinates include the following:

$$(3,3), (3,1), (3,-1), (3,-3),$$

$$(1,3), (1,1), (1,-1), (1,-3),$$

$$(-1,3), (-1,1), (-1,-1), (-1,-3),$$

$$(-3,3), (-3,1), (-3,-1), (-3,-3)$$

In this embodiment, when power normalization is required for the whole constellation diagram, the whole constellation diagram can be multiplied by a normalization factor (or scaling factor). For example, the 16 complex numbers corresponding to the 16QAM modulation are multiplied by the same normalization factor $1/sqrt(40)$, and the complex numbers corresponding to 16 points included in the 16QAM constellation diagram with power normalization include the following:

$1/sqrt(40)$ * [3 + 3$j$, 3 + $j$, 3 - $j$, 3 - 3$j$, 1 + 3$j$, 1 + $j$, 1 - $j$, 1 - 3$j$, -1 + 3$j$, -1 + $j$, -1 - $j$, -1 - 3$j$, -3 + 3$j$, -3 + $j$, -3 - $j$, -3 - 3$j$]

The coordinates corresponding to the 16 points contained in the 16QAM constellation diagram with power normalization can be obtained by multiplying $1/sqrt(40)$ with the 16 two-dimensional coordinates listed above, that is, multiplying the xcoordinate and $y$ coordinate of each two-dimensional coordinate with $1/sqrt(40)$.

Understandably, power normalization only scales down the constellation diagram as a whole, and all constellation points in the scaled down constellation diagram are still evenly distributed.

Similar to 16QAM modulation, for other high-order modulations, such as 32QAM, 64QAM, 256QAM, etc., the constellation points of their constellation diagrams are evenly distributed on the two-dimensional plane, so these high-order modulation methods in related technologies can make full use of the two-dimensional signal space of complex signals, and the demodulations corresponding to these high-order modulations are not only simple, but also performance reliable. Thus, these high-order modulation methods can imply and efficiently approach the performance limit of transmission, i.e., the Shannon limit. Therefore, these high-order modulation methods can be widely used in scenes with certain requirements for spectral efficiency. However, these high-order modulation methods need accurate channel estimation to ensure their performance. If the channel estimation error is large, the constellation diagram will be distorted (i.e., rotated and scaled), which leads to a deterioration in performance of demodulation by a base station or an access point.

Taking the transmission of modulation symbols via orthogonal frequency division multiplexing (OFDM) (i.e., using OFDM subcarriers to transmit modulation symbols) as an example, after passing through a multipath channel or a frequency-selective channel, the modulation symbols carried over the OFDM subcarriers will be weighted with a complex value weight (i.e., the frequency-selective channel will lead to a distortion of the modulation symbols carried over the subcarriers). Alternatively, if there is a large synchronization error between the sender (i.e., the first communication node) and the receiver (i.e., the second communication node), the timing offset and frequency offset will also cause the situation that the modulation symbols on the subcarriers are weighted with a complex value weight, i.e., the synchronization error will lead to the distortion of the modulation symbols. Similarly, the Doppler effect, which occurs in high-speed mobile scenes or satellite communication scenes, will also superimpose a complex value weight on the modulation symbols on subcarriers. In other words, synchronization errors will cause distortion in modulation symbols. In a scene where synchronization error is large, high-speed moment scene (such as high-speed moving scene or satellite communication scene, etc.) or scene with large phase noise, the rotation and scaling amount of modulation symbols (i.e., rotation amount and scaling amount) changes very quickly. Therefore, pilots with short time intervals are needed to accurately estimate the rotation and scaling amount of modulation symbols between pilots. However, this will increase the pilot overhead and eventually lead to a deterioration in the spectral efficiency of transmission. In addition, if the temporal density of the pilots does not meet the requirements, it is also difficult to accurately estimate the rotation and scaling amount of the modulation symbols, which would also lead to deterioration in performance of demodulation.

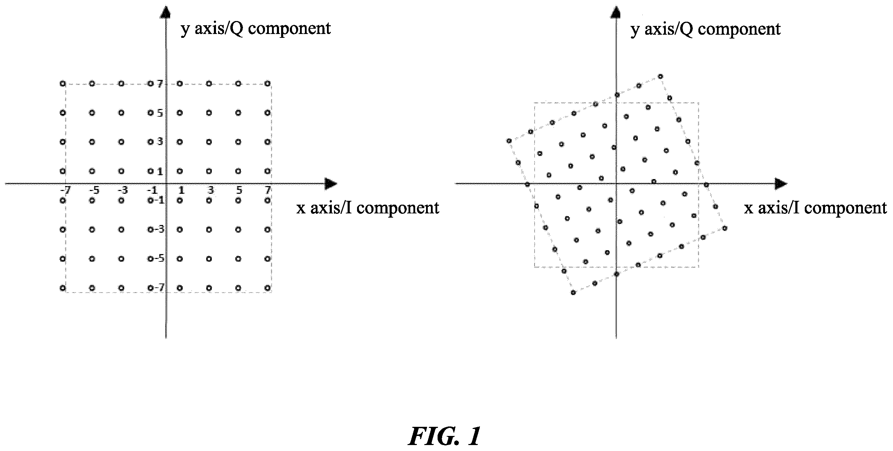

In some embodiments, these distortions occurring on the modulation symbols will be superimposed. In an example where the transmission of a modulation symbol $s$ through OFDM, it is assumed that the complex value weight of the modulation symbol $s$ on the subcarriers of OFDM caused by frequency-selective channel is $g1$, and the complex value weight of modulation symbols caused by time offset or frequency offset is $g2$. If the above-mentioned frequency-selective channel and the above-mentioned synchronization error exist at the same time, it can be regarded that the modulation symbols are weighted with a weight value $h$, where $h = g1 * g2$. That is, the received modulation symbol is $y = h * s + n = g1 * g2 * s + n$, where n is the Additive White Gaussian Noise (AWGN). If the receiving side (i.e., the second communication node) can not remove the distortion on the modulation symbol, that is, it can not balance off the weight value $h$ on the modulation symbol, then the modulation symbol will be rotated and scaled. The modulation symbols that are even slightly rotated and scaled will also seriously restrict the performance of high-order modulation. As shown in FIG. 1, each dot in the figure corresponds to a modulation symbol, in which the constellation diagram corresponding to the coordinate system on the left in FIG. 1 corresponds to the standard 64QAM modulation symbols. The constellation diagram corresponding to the coordinate system on the right in FIG. 1 corresponds to the 64QAM modulation symbols weighted by a weight value (i.e., a rotation and scaling amount), that is, the constellation diagram corresponding to the 64QAM modulation symbols with channel-caused distortion. If the receiver directly demodulates the constellation diagram corresponding to the coordinate system on the right in FIG. 1, even if the AWGN of the receiver is small, the demodulation performance will be affected. Therefore, in the traditional scene with high spectral efficiency, pilots are usually employed to estimate the complex weights (i.e., distortions) of modulation symbols. That is, $h$ in the received modulation symbol $y = h * s + n = g1 * g2 * s + n$ is estimated, and then the weights are balanced off, that is, $y$ is divided by $h$, that is $y/h = s + n/h$, the constellation diagram $s + n'$ without distortion and only affected by AWGN is obtained, so that better demodulation performance can be achieved, where $n' = n/h$. However, for scenarios such as when a large number of terminal devices directly transmit information to the wireless communication system in a non-connected state (i.e., the terminal devices are not connected to a wireless communication system), and when a large number of terminal devices transmit information based on semi-persistent scheduling (SPS), it is difficult to accurately estimate the complex weights (i.e., distortions) of the modulation symbols through pilots. Therefore, the performance of high-order modulation methods will be severely restricted.

In addition, in the scenario where the wireless communication system is connected to a huge number of terminal devices, the massive terminal devices transmit information with the system, which will increase the pilot overhead at the terminal devices, and lead to a difficulty in ensuring the accuracy of channel estimation, and therefore will also limit the demodulation performance of a base station (or an access point).

The increase in pilot overhead caused by a traditional pilot scheme to implement information transmission between a first communication node and a second communication node is described below.

In order to save power, a terminal device usually does not establish a connection with a system when there is no need to transmit information (i.e., the terminal device is not connected to the system, or the terminal device is disconnected from the system). That is, the terminal device is in a connectionless state (Non Connected state, or Non RRC Connected state, or Connectionless state, or Connection-free state, or Disconnected state, etc. each of which represents a connectionless state). It can be understood that an Idle state or an Inactive state can be regarded as equivalent to or be regarded as a connectionless state.

When a terminal device is originally in a connectionless state (i.e., has not yet transitioned to a connected state, or has not yet established a connection with a system), if the uplink information transmission scheme in the related scheme is used, in order to transmit information, the terminal device has to establish a connection with the system before the transmission. After transitioned to the connected state (also called Active state), the terminal device can further apply for uplink transmission resources to the system (such as a base station or an access point), and can transmit information only after obtaining the grant of the resource or the scheduling of the resource from the system. It can be seen that the terminal device has to complete many operations in advance to complete a traditional uplink information transmission, which will inevitably increase the power consumption generated by the terminal device and the signaling overhead of the system.

On the contrary, if a terminal device transmits information with a system in a connectionless state, then before the transmission of the information, the terminal device does not need to establish a connection or apply for dedicated transmission resources from a base station (or an access point). That is, the terminal device in a connectionless state does not need to notify the base station (or access point) before information transmission, but autonomously transmits information to the base station directly over a preset public transmission resource. Therefore, information transmission in a connectionless state can reduce the complexity of information transmission, reduce the power consumption generated by the terminal device during information transmission, and the transmission delay of data to the base station (or access point), and also saves the signaling overhead required for information transmission.

However, in the scenario of information transmission in a connectionless state, a first communication node (e.g., a terminal device) needs to autonomously select a pilot (or a reference signal) from a preset pilot set. However, this will lead to a problem that results from no central node to coordinate the pilots sent by different first communication nodes. In this case, different first communication nodes autonomously select pilots from a preset pilot set with a limited number of pilots. The selected pilots may be the same, which will cause a pilot collision problem. In a high overload scenario (i.e., there are many first communication nodes sending data packets to the same second communication node), the likelihood of pilot collision is very high. In case of the pilot collisions of different first communication nodes, it is difficult for the second communication node to distinguish the multiple first communication nodes through the pilots.

Therefore, in order to reduce the number of times of pilot collisions, more pilots need to be defined, that is, the number of pilots in the preset pilot set should be as many as possible, and increasing the number of pilots means that the overhead occupied by the pilots also increases. In addition, if the traditional pilot scheme is employed, it is required to estimate the channel and time-frequency offset through each pilot to complete the relevant demodulation of the modulation symbols. Therefore, each pilot needs to have a signal in the entire transmission bandwidth and period. In other words, each pilot cannot be distributed too sparsely in the entire transmission bandwidth and period. Only in this way can the channel information of the entire transmission bandwidth (such as a wireless multipath channel, also known as a frequency selective channel) and the frequency offset within the transmission period be estimated. Therefore, to ensure the transmission performance of information transmission in a connectionless state, the employment of traditional pilot schemes will cause exponential increase in the overhead occupied by the pilots and significant increase in the detection complexity.

Furthermore, a method of uplink information transmission is provided in the related schemes, i.e., semi-persistent scheduling, which aims to reduce the physical control signaling overhead and delay of transmission and is very suitable for periodic services. However, if the SPS method is still employed for information transmission of a large number of terminal devices, a SPS resource can be reserved and shared by the terminal devices in order to improve the utilization rate of periodic reserved resources, which requires defining a large number of pilots within a certain time-frequency resource. Similarly, under certain pilot resources, extremely sparse pilots can maximize the number of available pilots, and thus maximize the number of terminal devices using the same SPS resources. Therefore, extremely sparse pilots are very suitable for information transmission scenarios based on SPS for massive terminal devices.

In view of the above situations, the present disclosure proposes to support mass terminal devices to transmit information with high spectral efficiency by incorporating extremely sparse pilots into modulation methods.

It can be understood that the extremely sparse pilot-based scheme allows a system to support more terminal devices to access. Therefore, the extremely sparse pilot-based scheme is very suitable for large scale connection scenarios, such as scenarios where a large number of terminal devices directly transmit information in a connectionless state, and scenarios where a large number of users transmit information based on SPS. However, the extremely sparse pilot-based scheme requires the receiver (i.e., the second communication node) to be able to perform channel estimation based on the characteristics of the modulation symbols themselves, while the constellation diagram of traditional high-order modulation methods is too dense, which is not suitable for the receiving side to extract channel information through modulation symbols. In view of this, a method for information transmission is provided in embodiments of the present disclosure, which can not only support the scenario for high spectral efficiency, but also reduce the complexity of extracting channel information by modulation symbols at the receiving side and improve the accuracy of channel information extracted by modulation symbols at the receiving side.

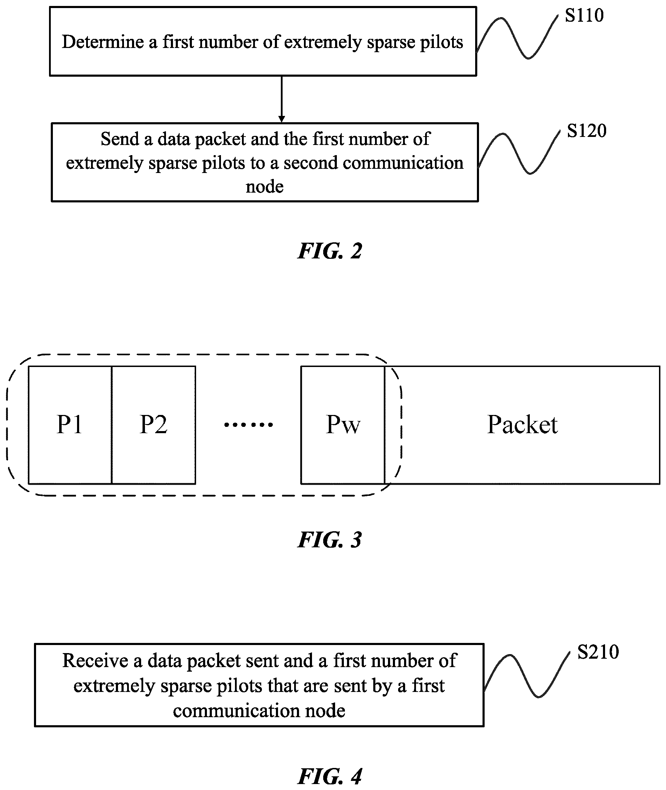

Referring to FIG. 2, which depicts a flowchart showing a method for information transmission according to an embodiment of the present disclosure. The method is performed by a first communication node. The method includes, but is not limited to, operations S110, and S120.

At operation S110, a first number of extremely sparse pilots is determined.

At operation S120, a data packet and the first number of extremely sparse pilots are sent to a second communication node.

In an embodiment, the first number is greater than or equal to 1. The data packet at least contains at least one modulation symbol.

In an embodiment, the modulation symbol is obtained by modulating the M1 + 1 number of bit of information in the data packet according to a first constellation model. The first constellation model includes 2 ∗ N1 number of constellation points, where M1 is an integer greater than or equal to 1, $N1$ and $M1$ satisfy the equation N1 = $2^{M1}$.

The complex form corresponding to the 2 * $N1$ number of constellation points in the first constellation model includes the following:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)}$$

where $\pi$ denotes Pi; j is an imaginary number; the value of *j* is equal to $\sqrt{-1}$ ; e denotes the natural logarithm; $\theta$ is a real number; $a_1, a_2, \cdots, a_{N1}$ are positive numbers and satisfy: $0 < a_1 < a_2 < \cdots < a_{N1}$.

Alternatively, the modulation symbol is obtained by modulating the M2 + 2 number of bits of information in the data packet according to a second constellation model, where the second constellation model contains 4 ∗ N2 number of constellation points, $M2$ is an integer greater than or equal to 1, and $N2$ and $M2$ satisfy N2 = $2^{M2}$.

The complex forms corresponding to the 4 ∗ N2 number of constellation points in the second constellation model include the following:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

where $\pi$ denotes Pi; $j$ is an imaginary number; the value of $j$ is equal to $\sqrt{-1}$; e denotes the natural logarithm; $\theta$ is a real number; $a_1, a_2, \cdots, a_{N2}$ and $b_1, b_2, \cdots, b_{N2}$ are positive numbers and satisfy: $0 < a_1 < a_2 < \cdots < a_{N2}$, and $0 < b_1 < b_2 < \cdots < b_{N2}$.

Alternatively, the modulation symbol is obtained by modulating the $M3 + 3$ number of bits of information in the data packet according to a third constellation model, where the third constellation model contains $8 * N3$ number of constellation points, $M3$ is an integer greater than or equal to 0, and $N3$ and $M3$ satisfy $N3 = 2^{M3}$.

The complex forms corresponding to the $8 * N3$ number of constellation points in the third constellation model include the following:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

where $\pi$ denotes Pi; j is an imaginary number; the value of $j$ is equal to $\sqrt{-1}$; e denotes the natural logarithm; $\theta$ is a real number; $a_1, a_2, \cdots, a_{N3}$ and $b_1, b_2, \cdots, b_{N3}$ are positive numbers and satisfy: $0 < a_1 < a_2 < \cdots < a_{N3}$, and $0 < b_1 < b_2 < \cdots < b_{N3}$.

According to the method including the above operations S110 and S120 set forth in this embodiment, the first number of extremely sparse pilots is determined. Then the data packet and the first number of extremely sparse pilots are transmitted to the second communication node. The first number is greater than or equal to 1. The data packet at least contains at least one modulation symbol. The modulation symbol is obtained by modulating the $M1 + 1$ number of bits of information in the data packet according to the first constellation model, or by modulating the $M2 + 2$ number of bits of information in the data packet according to the second constellation model, or by modulating the $M3 + 3$ number of bits of information in the data packet according to the third constellation model. $M1$ is an integer greater than or equal to 1. $M2$ is an integer greater than or equal to 1. $M3$ is an integer greater than or equal to 0. That is, the first communication node transmits the extremely sparse pilots and the data packet containing the modulation symbol to the second communication node. The second communication node can estimate part of the information of the wireless channel from the extremely sparse pilots and further extract the channel information from the modulation symbol without estimating all the information of the wireless channel from the extremely sparse pilots, thereby reducing the pilot overhead of the first communication node and further improving the accuracy of channel estimation, thereby improving the demodulation performance of the second communication node and realizing information transmission with high spectral efficiency. Further, since $M1$ is an integer greater than or equal to 1, $M2$ is an integer greater than or equal to 1, and $M3$ is an integer greater than or equal to 0, the modulation symbol can be obtained by modulating a plurality of bits of information in a data packet according to one of the first constellation model, the second constellation model or the third constellation model. That is, the modulation symbol carries a plurality of bits of information, thereby realizing high-order modulation and further improving the spectral efficiency of information transmission. Therefore, according to the embodiments of the present disclosure, it is possible to support a huge number of first communication nodes to realize information transmission with high spectral efficiency.

It can be understood that the pilot can be called a pilot signal, or a Reference Signal (RS), or a demodulation reference signal, or a preamble. A pilot is typically in the form of a sequence or a string of symbols, the pilot is thus also called a pilot sequence.

In a feasible embodiment, each extremely sparse pilot includes a second number of non-zero value symbols, where the second number is greater than 0 and less than 5. The second number of non-zero value symbols are carried over a third number of adjacent Resource Elements (REs) in time-frequency domain, or over a third number of symbols arranged in a temporal order, or over a third number of REs on adjacent subcarriers in frequency domain. The third number is equal to the second number (i.e., the third number is greater than 0 and less than 5). It can be understood that each extremely sparse pilot has only one Reference Signal Element (RSE) containing a second number of non-zero symbols. It can be understood that for OFDM, one resource element (RE) can carry one symbol. In addition, if the second number of non-zero symbols are carried over the adjacent REs, it can be considered that the second number of symbols are carried over the adjacent time-frequency resources. Alternatively, for OFDM, if the second number of non-zero value symbols are carried over the adjacent time-frequency resources, it can be considered that the second number of non-zero value symbols are carried over adjacent REs.

In a feasible embodiment, the value of the second number is 4, and the second number of non-zero value symbols constitute a non-zero value symbol set [$p1,p2,p3,p4$], and the value of [$p1,p2,p3,p4$] at least includes various situations as shown in Table 1, with different serial numbers in Table 1 corresponding to different situations.

Table 1

| Serial Number | $p1$ | $p2$ | $p3$ | $p4$ | Serial Number | $p1$ | $p2$ | $p3$ | $p4$ |
|---|---|---|---|---|---|---|---|---|---|
| 1 | 1 | 1 | 1 | 1 | 33 | 1 | 1 | 1 | j |
| 2 | 1 | 1 | -1 | -1 | 34 | 1 | 1 | -1 | -j |
| 3 | 1 | -1 | 1 | -1 | 35 | 1 | -1 | 1 | -j |
| 4 | 1 | -1 | -1 | 1 | 36 | 1 | -1 | -1 | j |
| 5 | 1 | 1 | j | -j | 37 | 1 | 1 | j | 1 |
| 6 | 1 | 1 | -j | j | 38 | 1 | 1 | -j | -1 |
| 7 | 1 | -1 | j | j | 39 | 1 | -1 | j | -1 |
| 8 | 1 | -1 | -j | -j | 40 | 1 | -1 | -j | 1 |
| 9 | 1 | j | 1 | -j | 41 | 1 | j | 1 | 1 |
| 10 | 1 | j | -1 | j | 42 | 1 | j | -1 | -1 |
| 11 | 1 | -j | 1 | j | 43 | 1 | -j | 1 | -1 |
| 12 | 1 | -j | -1 | -j | 44 | 1 | -j | -1 | 1 |
| 13 | 1 | j | j | -1 | 45 | 1 | j | j | -j |
| 14 | 1 | j | -j | 1 | 46 | 1 | j | -j | j |
| 15 | 1 | -j | j | 1 | 47 | 1 | -j | j | j |
| 16 | 1 | -j | -j | -1 | 48 | 1 | -j | -j | -j |
| 17 | 1 | 1 | 1 | -1 | 49 | 1 | 1 | 1 | -j |
| 18 | 1 | 1 | -1 | 1 | 50 | 1 | 1 | -1 | j |
| 19 | 1 | -1 | 1 | 1 | 51 | 1 | -1 | 1 | j |
| 20 | 1 | -1 | -1 | -1 | 52 | 1 | -1 | -1 | -j |
| 21 | 1 | 1 | j | j | 53 | 1 | 1 | j | -1 |
| 22 | 1 | 1 | -j | -j | 54 | 1 | 1 | -j | 1 |
| 23 | 1 | -1 | j | -j | 55 | 1 | -1 | j | 1 |

(continued)

| Serial Number | $p1$ | $p2$ | $p3$ | $p4$ | Serial Number | $p1$ | $p2$ | $p3$ | $p4$ |
|---|---|---|---|---|---|---|---|---|---|
| 24 | 1 | -1 | -j | j | 56 | 1 | -1 | -j | -1 |
| 25 | 1 | j | 1 | j | 57 | 1 | j | 1 | -1 |
| 26 | 1 | j | -1 | -j | 58 | 1 | j | -1 | 1 |
| 27 | 1 | -j | 1 | -j | 59 | 1 | -j | 1 | 1 |
| 28 | 1 | -j | -1 | j | 60 | 1 | -j | -1 | -1 |
| 29 | 1 | j | j | 1 | 61 | 1 | j | j | j |
| 30 | 1 | j | -j | -1 | 62 | 1 | j | -j | -j |
| 31 | 1 | -j | j | -1 | 63 | 1 | -j | j | -j |
| 32 | 1 | -j | -j | 1 | 64 | 1 | -j | -j | j |

In a feasible embodiment, the value of the second number is 1, that is, one non-zero value symbol is provided. Alternatively, the value of the second number is 2, and the non-zero value symbols of the second number form a non-zero value symbol pair [$p1$,$p2$]. The value of [$p1$,$p2$] is [$a1$,$a2$] or [$b1$,$b2$], where [$a1$,$a2$] is orthogonal to *[b1, b2]*, i.e., $a1' * b1 + a2' * b2 = 0$. Alternatively, the value of the second number is 2, and the non-zero value symbols of the second number form a non-zero value symbol pair *[p1, p2]*. The value of *[p1, p2]* includes at least [$p1$,$p2$] = [1,1] ; [$p1$,$p2$] = [1, -1] ; [$p1$,$p2$] = [1,$j$]; [$p1$,$p2$] = [1,-$j$], and the like. Alternatively, the value of the second number is 4, and the non-zero value symbols of the second number constitute a non-zero value symbol set [$p1$,$p2$,$p3$,$p4$]. The value of [$p1$,$p2$,$p3$,$p4$] is one of [$a1$,$a2$,$a3$,$a4$], [$b1$,$b2$,$b3$,$b4$]*,* [$c1$,$c2$,$c3$,$c4$] or, [$d1$,$d2$,$d3$,$d4$], where, each of [$a1$,$a2$,$a3$,$a4$], [$b1$,$b2$,$b3$,$b4$] , [$c1$,$c2$,$c3$,$c4$], and [$d1$,$d2$,$d3$,$d4$] are orthogonal to another one. That is, any two of, [$a1$,$a2$,$a3$,$a4$], [$b1$,$b2$,$b3$,$b4$], [$c1$,$c2$,$c3$,$c4$], and [$d1$,$d2$,$d3$,$d4$] are orthogonal to each other. Specifically, [$a1$,$a2$,$a3$,$a4$] is orthogonal to *[b1,b2,b3, b4]*, that is $a1' * b1 + a2' * b2 + a3' * b3 + a4' * b4 = 0$. And [$a1$,$a2$,$a3$,$a4$] is orthogonal to *[c1, c2, c3, c4]*, that is, $a1' * c1 + a2' * c2 + a3' * c3 + a4' * c4 = 0$ and so on.

In a feasible embodiment, the symbol length of each extremely sparse pilot is greater than 24, that is, the total number of non-zero value symbols and zero value symbols of each extremely sparse pilot is greater than 24, and no limitations are posed thereto here.

In a feasible embodiment, when the value of the first number is greater than or equal to 2, the extremely sparse pilots of the first number are independent of each other. In other words, the extremely sparse pilots of the first number are not related or uncorrelated with one another. The value of the first number can be greater than or equal to 1, that is, the value of the first number can be 1, 2 or other values, and no limitations are posed thereto here. In an embodiment, the technology of including two or more pilots that are unrelated or independent of each other in one transmission is called independent multi-pilot technology, and the multiple independent pilots are called independent multi-pilots. As shown in FIG. 3, w number of extremely sparse pilots i.e., P1, P2, ..., and Pw, are contained within one transmission, where w can be a positive integer greater than 2. The data packet contains information of the w number of extremely sparse pilots. For example, the data packet contains the indices of the w number of extremely sparse pilots (that is, the indices of the extremely sparse pilots in the preset pilot set). In this way, once the data packet of a terminal device is decoded successfully, the information of all extremely sparse pilots used by the terminal device in the current information transmission can be determined, such that interference elimination of the pilot signal can be performed.

It can be understood that independent multi-pilot can be adopted during the information transmission between the first communication node and the second communication node. In this way, with the same pilot overhead, the likelihood of simultaneous collision of independent pilots of different first communication nodes will be lower than that of traditional single-pilot collision. Therefore, in the transmission scenario of Contention-Based Connection-free state (or Contention-Based scheduling-free mode), independent multi-pilot can be adopted to support more first communication nodes to transmit information. Furthermore, the independent multi-pilot and the extremely sparse pilot technology can be combined, that is, a plurality of mutually independent extremely sparse pilots are adopted to further reduce the likelihood of collision of pilots and further increase the number of the accessed first communication nodes.

In an embodiment, when the second communication node is a base station, through an iterative receiver, the base station can demodulate the corresponding first communication node in each turn through multiple non-collision (i.e., independent of each other) extremely sparse pilots, and then reconstruct the data packet and extremely sparse pilot of the first communication node, and eliminate the data packet and extremely sparse pilot corresponding to the first communication node from the received signal, and iterate until all identifiable first communication nodes are demodulated to reduce the likelihood of pilot collision and further increase the number of connected first communication nodes.

In an embodiment where the value of the first number is greater than or equal to 2, the first number of extremely sparse pilots can be determined according to the information contained in the data packet.

In another embodiment where the value of the first number is greater than or equal to 2, the first number of extremely sparse pilots can be determined according to one or more bits of information in the data packet. For example, an extremely sparse pilot can be determined according to one bit of information in the data packet. For another example, an extremely sparse pilot can be determined according to two bits of information in a data packet. For another example, two extremely sparse pilots are determined according to multiple bits of information in the data packet, and so on, and no limitations are posed to the first number and the number of bits of information in the present disclosure.

In another embodiment where the value of the first number is greater than or equal to 2, each extremely sparse pilot is determined from a preset pilot set according to the fourth number of bits of information in the data packet. The preset pilot set includes a fifth number of pilots, and the fourth number and the fifth number are in a logarithmic function relation with 2 as the base. In an example where the fifth number is D, the fourth number is *log2(D),* and the present disclosure is not limited thereto. It can be understood that the fifth number can be 64, 128 or greater, and the present disclosure is not limited thereto.

In a feasible implementation, when the modulation symbol is obtained by the modulation according to the first constellation model, $a_1, a_2, \cdots, a_{N1}$ can be expressed by:

$$a_n = (2n - 1 + \Delta)d.$$

In an embodiment, the value of n includes 1,2,...,N1, that is, $a_n$ can be one of, $a_1$, $a_2$, $a_3$, $a_{N1}$, or the like. *d* is a positive real number, and $\Delta$ is a real number greater than or equal to 0, such that $a_1, a_2, \cdots, a_{N1}$ forms an arithmetic progression.

Further, when the value of $\Delta$ is 0 and the value of d is 1, then $a_n$ satisfies $a_n = 2n$ - 1. When the value of $\Delta$ is 1, and the value of d is 1/2, then $a_n$, satisfies $a_n = n$. When the value of $\Delta$ is 3, and the value of *d* is 1/2, then $a_n$ satisfies $a_n = n + 1$.

Alternatively, the value of $\Delta$ can be $\Delta = \sqrt{2} - 1$, in this case, when the value of d is 1, then $a_n$ satisfies $a_n = 2n - 2 + \sqrt{2}$; and when the value of d is 1/2, $a_n$ satisfies $a_n = n - 1 + \sqrt{2}/2$.

In a feasible embodiment, when the modulation symbol is modulated according to the second constellation model, each of $a_1, a_2, \cdots, a_{N2}$ can be expressed by

$$a_n = (2n - 1 + \Delta)d;$$

Each of $b_1, b_2, \cdots, b_{N2}$ can be expressed by

$$b_n = a_n + \beta;$$

where the values of n include 1,2,...,N2, that is, $a_n$ can be one of, $a_1$, $a_2$, $a_3$, or $a_{N2}$. Similarly, $b_n$ can be one of, $b_1$, $b_2$, $b_3$, or $b_{N2}$. *d* is a positive real number, and both $\Delta$ and $\beta$ are real numbers greater than or equal to 0, such that $a_1, a_2, \cdots, a_{N2}$ forms an arithmetic progression and $b_1, b_2, \cdots, b_{N2}$ forms an arithmetic progression.

In an example, when the value of $\Delta$ is 0 and the value of d is 1, $a_n$ satisfies $a_n = 2n$ - 1. When the value of $\Delta$ is 1, and the value of d is 1/2, $a_n$ satisfies $a_n = n$. When the value of $\Delta$ is 3, and the value of *d* is 1/2, $a_n$ satisfies $a_n = n + 1$.

Alternatively, the value of $\Delta$ can be $\Delta = \sqrt{2} - 1$, in this case, when the value of d is 1, $a_n$ satisfies $a_n = 2n - 2 + \sqrt{2}$; when the value of *d* is 1/2, $a_n$ satisfies $a_n = n - 1 + \sqrt{2}/2$.

In a feasible embodiment, when the modulation symbol is modulated according to the third constellation model, each of $a_1, a_2, \cdots, a_{N3}$ can be expressed by

$$a_n = (2n - 1 + \Delta)d;$$

Each of $b_1, b_2, \cdots, b_{N3}$ can be expressed by

$$b_n = a_n + \beta;$$

where the values of n include 1,2,...,N3, that is, $a_n$ can be one of, $a_1$, $a_2$, $a_3$, or $a_{N3}$. Similarly, $b_n$ can be one of, $b_1$, $b_2$, $b_3$, or $b_{N3}$. *d* is a positive real number, and both $\Delta$ and $\beta$ are real numbers greater than or equal to 0, such that $a_1, a_2, \cdots, a_{N3}$ forms an arithmetic progression and $b_1, b_2, \cdots, b_{N3}$ forms an arithmetic progression.

In an example, when the value of $\Delta$ is 0 and the value of $d$ is 1, $a_n$ satisfies $a_n = 2n - 1$. When the value of $\Delta$ is 1, and the value of d is 1/2, $a_n$ satisfies $a_n$ = n. When the value of $\Delta$ is 3, and the value of $d$ is 1/2, $a_n$ satisfies $a_n$ = n + 1.

Alternatively, the value of $\Delta$ can be $\Delta = \sqrt{2} - 1$, in this case, when the value of $d$ is 1, $a_n$ satisfies $a_n = 2n - 2 + \sqrt{2}$; when the value of $d$ is 1/2, $a_n$ satisfies $a_n = n - 1 + \sqrt{2}/2$.

In a feasible embodiment, when the modulation symbol is modulated according to the second constellation model or the third constellation model, $\beta$ is equal to 0.

In a feasible embodiment, when the modulation symbol is modulated according to the third constellation model, $\beta$ is greater than 0.

In a feasible embodiment, when the modulation symbol is modulated according to the first constellation model, the value of $d$ is taken such that the average power of the modulation symbol modulated by the first constellation model is equal to 1, that is, the value of $d$ is taken such that the average of the modular squares of the constellation points in the first constellation model is 1, that is, the value of $d$ is taken such that the average power of the first constellation model is 1, and the present disclosure is not limited thereto.

In a feasible embodiment, when the modulation symbol is modulated according to the second constellation model, the value of $d$ is taken such that the average power of the modulation symbol modulated by the second constellation model is equal to 1, that is, the value of $d$ is taken such that the average of the modular squares of the constellation points in the second constellation model is 1, that is, the value of $d$ is taken such that the average power of the second constellation model is 1, and the present disclosure is not limited thereto.

In a feasible embodiment, when the modulation symbol is modulated according to the third constellation model, the value of $d$ is taken such that the average power of the modulation symbol modulated by the third constellation model is equal to 1, that is, the value of $d$ is taken such that the average of the modular squares of the constellation points in the third constellation model is 1, that is, the value of $d$ is taken such that the average power of the third constellation model is 1, and the present disclosure is not limited thereto.

In a feasible embodiment, the value of $\theta$ can be 0. Alternatively, the value of $\theta$ can be $\pi/4$, which satisfies $\theta = \pi/4$. Alternatively, the value of $\theta$ satisfies $\theta = \pi/8$, and the present disclosure is not limited thereto.

FIG. 4 depicts a method for information transmission according to another embodiment of the present disclosure. The method is applied to a second communication node. The method includes but is not limited to operation S210.

At operation S210, a data packet and a first number of extremely sparse pilots that are sent by a first communication node, are received.

The first number is greater than or equal to 1. The data packet at least contains a modulation symbol that is obtained by modulating $M1 + 1$ number of bits of information in the data packet according to a first constellation model. The first constellation model contains $2 * N1$ number of constellation points, where $M1$ is an integer greater than or equal to 1, and $N1$ and $M1$ satisfy the $N1 = 2^{M1}$.

The complex forms corresponding to the $2 * N1$ number of constellation points in the first constellation model include the following:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

where $\pi$ denotes Pi; $j$ is an imaginary number; the value of $j$ is equal to $\sqrt{-1}$; e denotes the natural logarithm; $\theta$ is a real number; $a_1, a_2, \cdots, a_{N1}$ are positive numbers and satisfy: $0 < a_1 < a_2 < \cdots < a_{N1}$.

Alternatively, the modulation symbol is obtained by modulating the $M2 + 2$ number of bits of information in the data packet according to a second constellation model, where the second constellation model contains $4 * N2$ number of constellation points, $M2$ is an integer greater than or equal to 1, and N2 and $M2$ satisfy $N2 = 2^{M2}$.

The complex forms corresponding to the $4 * N2$ number of constellation points in the second constellation model include the following:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

where $\pi$ denotes Pi; $j$ is an imaginary number; the value of $j$ is equal to $\sqrt{-1}$; e denotes the natural logarithm; $\theta$ is a real number; $a_1, a_2, \cdots, a_{N2}$ and $b_1, b_2, \cdots b_{N2}$ are positive numbers and satisfy: $0 < a_1 < a_2 < \cdots < a_{N2}$, and $0 < b_1 < b_2 < \cdots < b_{N2}$.

Alternatively, the modulation symbol is obtained by modulating the $M3 + 3$ number of bits of information in the data packet according to a third constellation model, where the third constellation model contains $8 * N3$ number of constellation points, $M3$ is an integer greater than or equal to 0, and $N3$ and $M3$ satisfy $N3 = 2^{M3}$.

The complex forms corresponding to the $8 * N3$ number of constellation points in the third constellation model include the following:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

where $\pi$ denotes Pi; $j$ is an imaginary number; the value of $j$ is equal to $\sqrt{-1}$; e denotes the natural logarithm; $\theta$ is a real number; $a_1, a_2, \cdots, a_{N3}$ and $b_1, b_2, \cdots, b_{N3}$ are positive numbers and satisfy: $0 < a_1 < a_2 < ... < a_{N3}$, and $0 < b_1 < b_2 < \cdots < b_{N3}$.

According to the method including the above operation S210 set forth in this embodiment, the second communication node can receive the data packet and the first number of extremely sparse pilots sent by the first communication node. The first number is greater than or equal to 1. The data packet at least contains at least one modulation symbol. The modulation symbol is obtained by modulating the $M1 + 1$ number of bits of information in the data packet according to the first constellation model, or by modulating the $M2 + 2$ number of bits of information in the data packet according to the second constellation model, or by modulating the $M3 + 3$ number of bits of information in the data packet according to the third constellation model. $M1$ is an integer greater than or equal to 1. $M2$ is an integer greater than or equal to 1. $M3$ is an integer greater than or equal to 0. That is, the second communication node can estimate part of the information of the wireless channel from the extremely sparse pilots and further extract the channel information from the modulation symbol that are sent by the first communication node, without estimating all the information of the wireless channel from the extremely sparse pilots, thereby reducing the pilot overhead of the first communication node and further improving the accuracy of channel estimation, thereby improving the demodulation performance of the second communication node and realizing information transmission with high spectral efficiency. Further, since $M1$ is an integer greater than or equal to 1, $M2$ is an integer greater than or equal to 1, and $M3$ is an integer greater than or equal to 0, the modulation symbol can be obtained by modulating a plurality of bits of information in a data packet according to one of the first constellation model, the second constellation model or the third constellation model. That is, the modulation symbol carries a plurality of bits of information, thereby realizing high-order modulation and further improving the spectral efficiency of information transmission. Therefore, according to the embodiments of the present disclosure, it is possible to support a huge number of first communication nodes to realize information transmission with high spectral efficiency.

It can be understood that the pilot can be called a pilot signal, or a Reference Signal (RS), or a demodulation reference signal, or a preamble. A pilot is typically in the form of a sequence or a string of symbols, the pilot is thus also called a pilot sequence.

In a feasible embodiment, each extremely sparse pilot includes a second number of non-zero value symbols, where the second number is greater than 0 and less than 5. The second number of non-zero value symbols are carried over a third number of adjacent Resource Elements (REs) in time-frequency domain, or over a third number of symbols arranged in a temporal order, or over a third number of REs on adjacent subcarriers in frequency domain. The third number is equal to the second number (i.e., the third number is greater than 0 and less than 5). It can be understood that each extremely sparse pilot has only one Reference Signal Element (RSE) containing a second number of non-zero symbols. It can be understood that for OFDM, one resource element (RE) can carry one symbol. In addition, if the second number of non-zero symbols are carried over the adjacent REs, it can be considered that the second number of symbols are carried over the adjacent time-frequency resources. Alternatively, for OFDM, if the second number of non-zero value symbols are carried over the adjacent time-frequency resources, it can be considered that the second number of non-zero value symbols are carried over adjacent REs.

In a feasible embodiment, the value of the second number is 1, that is, one non-zero value symbol is provided. Alternatively, the value of the second number is 2, and the non-zero value symbols of the second number form a non-zero value symbol pair $[p1, p2]$. The value of $[p1, p2]$ is $[a1, a2]$ or $[b1, b2]$, where $[a1, a2]$ is orthogonal to $[b1, b2]$, i.e., $a1' * b1 + a2' * b2 = 0$. Alternatively, the value of the second number is 2, and the non-zero value symbols of the second number form a non-zero value symbol pair $[p1, p2]$. The value of $[p1, p2]$ includes at least $[p1, p2] = [1,1]$ ; $[p1, p2] = [1, -1]$ ; $[p1, p2] = [1, j]$; $[p1, p2] = [1, -j]$, and the like. Alternatively, the value of the second number is 4, and the non-zero value symbols of the second number constitute a non-zero value symbol set $[p1, p2, p3, p4]$. The value of $[p1, p2, p3, p4]$ is one of $[a1, a2, a3, a4]$, $[b1, b2, b3, b4]$, $[c1, c2, c3, c4]$ or $[d1, d2, d3, d4]$, where each of $[a1, a2, a3, a4]$, $[b1, b2, b3, b4]$, $[c1, c2, c3, c4]$, and $[d1, d2, d3, d4]$ is orthogonal to another one. That is, any two of, $[a1, a2, a3, a4]$, $[b1, b2, b3, b4]$, $[c1, c2, c3, c4]$, and $[d1, d2, d3, d4]$ are orthogonal to each other. Specifically, $[a1, a2, a3, a4]$ is orthogonal to $[b1, b2, b3, b4]$, that is $a1' * b1 + a2' * b2 + a3' * b3 + a4' * b4 = 0$. And $[a1, a2, a3, a4]$ is orthogonal to $[c1, c2, c3, c4]$, that is $a1' * c1 + a2' * c2 + a3' * c3 + a4' * c4 = 0$, and so on.

In a feasible embodiment, the value of the second number is 4, and the second number of non-zero value symbols constitute a non-zero value symbol set $[p1, p2, p3, p4]$, and the value of $[p1, p2, p3, p4]$ at least includes various situations as shown in Table 1, with different serial numbers in Table 1 corresponding to different situations.

In a feasible embodiment, the symbol length of each extremely sparse pilot is greater than 24, that is, the total number of non-zero value symbols and zero value symbols of each extremely sparse pilot is greater than 24, and no limitations are posed thereto here.

In a feasible embodiment, when the value of the first number is greater than or equal to 2, the extremely sparse pilots of the first number are independent of each other. In other words, the extremely sparse pilots of the first number are not related or uncorrelated with one another. The value of the first number can be greater than or equal to 1, that is, the value of the first number can be 1, 2 or other values, and no limitations are posed thereto here. In an embodiment, the technology of including two or more pilots that are unrelated or independent of each other in one transmission is called independent multi-pilot technology, and the multiple independent pilots are called independent multi-pilots. As shown in FIG. 3, w number of extremely sparse pilots i.e., P1, P2, ..., and Pw, are contained within one transmission, where w can be a positive integer greater than 2. The data packet contains information of the w number of extremely sparse pilots. For example, the data packet contains the indices of the w number of extremely sparse pilots (that is, the indices of the extremely sparse pilots in the preset pilot set). In this way, once the data packet of a terminal device is decoded successfully, the information of all extremely sparse pilots used by the terminal device in the current information transmission can be determined, such that interference elimination of the pilot signal can be performed.

It can be understood that independent multi-pilot can be adopted during the information transmission between the first communication node and the second communication node. In this way, with the same pilot overhead, the likelihood of simultaneous collision of independent pilots of different first communication nodes will be lower than that of traditional single-pilot collision. Therefore, in the transmission scenario of Contention-Based Connection-free state (or Contention-Based scheduling-free mode), independent multi-pilot can be adopted to support more first communication nodes to transmit information. Furthermore, the independent multi-pilot and the extremely sparse pilot technology can be combined, that is, a plurality of mutually independent extremely sparse pilots are adopted to further reduce the likelihood of collision of pilots and further increase the number of the accessed first communication nodes.

In an embodiment, when the second communication node is a base station, through an iterative receiver, the base station can demodulate the corresponding first communication node in each turn through multiple non-collision (i.e., independent of each other) extremely sparse pilots, and then reconstruct the data packet and extremely sparse pilot of the first communication node, and eliminate the data packet and extremely sparse pilot corresponding to the first communication node from the received signal, and iterate until all identifiable first communication nodes are demodulated to reduce the likelihood of pilot collision and further increase the number of connected first communication nodes.

In an embodiment where the value of the first number is greater than or equal to 2, the first number of extremely sparse pilots can be determined according to the information contained in the data packet.

In another embodiment where the value of the first number is greater than or equal to 2, the first number of extremely sparse pilots can be determined according to one or more bits of information in the data packet. For example, an extremely sparse pilot can be determined according to one bit of information in the data packet. For another example, an extremely sparse pilot can be determined according to two bits of information in a data packet. For another example, two extremely sparse pilots are determined according to multiple bits of information in the data packet, and so on, and no limitations are posed to the first number and the number of bits of information in the present disclosure.

In another embodiment where the value of the first number is greater than or equal to 2, each extremely sparse pilot is determined from a preset pilot set according to the fourth number of bits of information in the data packet. The preset pilot set includes a fifth number of pilots, and the fourth number and the fifth number are in a logarithmic function relation with 2 as the base. In an example where the fifth number is D, the fourth number is *log2(D),* and the present disclosure is not limited thereto. It can be understood that the fifth number can be 64, 128 or greater, and the present disclosure is not limited thereto.

In a feasible implementation, when the modulation symbol is obtained by the modulation according to the first constellation model, $a_1, a_2, \cdots, a_{N1}$ can be expressed by:

$$a_n = (2n - 1 + \Delta)d;$$

In an embodiment, the value of *n* includes 1,2,...,N1, that is, $a_n$ can be one of, $a_1$, $a_2$, $a_3$, $a_{N1}$, or the like. *d* is a positive real number, and $\Delta$ is a real number greater than or equal to 0, such that $a_1, a_2, \cdots, a_{N1}$ forms an arithmetic progression.

In an example, when the value of $\Delta$ is 0 and the value of d is 1, then $a_n$ satisfies $a_n = 2n - 1$. When the value of $\Delta$ is 1, and the value of d is 1/2, then $a_n$ satisfies $a_n = n$; when the value of $\Delta$ is 3, and the value of d is 1/2, then $a_n$ satisfies $a_n = n + 1$.

Alternatively, the value of $\Delta$ can be $\Delta = \sqrt{2} - 1$, in this case, when the value of d is 1, then $a_n$ satisfies $a_n = 2n - 2 + \sqrt{2}$; and when the value of d is 1/2, $a_n$ satisfies $a_n = n - 1 + \sqrt{2}/2$.

In a feasible embodiment, when the modulation symbol is modulated according to the second constellation model, each of $a_1, a_2, \cdots, a_{N2}$ can be expressed by

$$a_n = (2n - 1 + \Delta)d;$$

Each of $b_1, b_2, \cdots, b_{N2}$ can be expressed by

$$b_n = a_n + \beta;$$

where the values of n include 1,2,...,N2, that is, $a_n$ can be one of, $a_1$, $a_2$, $a_3$, or $a_{N2}$. Similarly, $b_n$ can be one of, $b_1$, $b_2$, $b_3$, or $b_{N2}$. *d* is a positive real number, and both $\Delta$ and $\beta$ are real numbers greater than or equal to 0, such that $a_1, a_2, \cdots, a_{N2}$ forms an arithmetic progression and $b_1, b_2, \cdots, b_{N2}$ forms an arithmetic progression.

In an example, when the value of $\Delta$ is 0 and the value of d is 1, $a_n$ satisfies $a_n = 2n - 1$. When the value of $\Delta$ is 1, and the value of d is 1/2, $a_n$ satisfies $a_n = n$. When the value of $\Delta$ is 3, and the value of *d* is 1/2, $a_n$ satisfies $a_n = n + 1$.

Alternatively, the value of $\Delta$ can be $\Delta = \sqrt{2} - 1$, in this case, when the value of d is 1, $a_n$ satisfies $a_n = 2n - 2 + \sqrt{2}$; when the value of *d* is 1/2, $a_n$ satisfies $a_n = n - 1 + \sqrt{2}/2$.

In a feasible embodiment, when the modulation symbol is modulated according to the third constellation model, each of $a_1, a_2, \cdots, a_{N3}$ can be expressed by

$$a_n = (2n - 1 + \Delta)d;$$

Each of $b_1, b_2, \cdots, b_{N3}$ can be expressed by

$$b_n = a_n + \beta;$$

where the values of n include 1,2,...,N3, that is, $a_n$ can be one of, $a_1$, $a_2$, $a_3$, or $a_{N3}$. Similarly, $b_n$ can be one of, $b_1$, $b_2$, $b_3$, or $b_{N3}$. *d* is a positive real number, and both $\Delta$ and $\beta$ are real numbers greater than or equal to 0, such that $a_1, a_2, \cdots, a_{N3}$ forms

an arithmetic progression and $b_1, b_2, \cdots, b_{N3}$ forms an arithmetic progression.

In an example, when the value of $\Delta$ is 0 and the value of d is 1, $a_n$ satisfies $a_n = 2n - 1$. When the value of $\Delta$ is 1, and the value of d is 1/2, $a_n$ satisfies $a_n = n$. When the value of $\Delta$ is 3, and the value of $d$ is 1/2, $a_n$ satisfies $a_n = n + 1$.

Alternatively, the value of $\Delta$ can be $\Delta = \sqrt{2} - 1$, in this case, when the value of d is 1, $a_n$ satisfies $a_n = 2n - 2 + \sqrt{2}$; when the value of $d$ is 1/2, $a_n$ satisfies $a_n = n - 1 + \sqrt{2}/2$.

In a feasible embodiment, when the modulation symbol is modulated according to the second constellation model or the third constellation model, $\beta$ is equal to 0.

In a feasible embodiment, when the modulation symbol is modulated according to the third constellation model, $\beta$ is greater than 0.

In a feasible embodiment, when the modulation symbol is modulated according to the first constellation model, the value of $d$ is taken such that the average power of the modulation symbol modulated by the first constellation model is equal to 1, that is, the value of $d$ is taken such that the average of the modular squares of the constellation points in the first constellation model is 1, that is, the value of $d$ is taken such that the average power of the first constellation model is 1, and the present disclosure is not limited thereto.

In a feasible embodiment, when the modulation symbol is modulated according to the second constellation model, the value of $d$ is taken such that the average power of the modulation symbol modulated by the second constellation model is equal to 1, that is, the value of $d$ is taken such that the average of the modular squares of the constellation points in the second constellation model is 1, that is, the value of $d$ is taken such that the average power of the second constellation model is 1, and the present disclosure is not limited thereto.

In a feasible embodiment, when the modulation symbol is modulated according to the third constellation model, the value of $d$ is taken such that the average power of the modulation symbol modulated by the third constellation model is equal to 1, that is, the value of $d$ is taken such that the average of the modular squares of the constellation points in the third constellation model is 1, that is, the value of $d$ is taken such that the average power of the third constellation model is 1, and the present disclosure is not limited thereto.

In a feasible embodiment, the value of $\theta$ can be 0. Alternatively, the value of $\theta$ can be $\pi/4$, which satisfies $\theta = \pi/4$. Alternatively, the value of $\theta$ satisfies $\theta = \pi/8$, and the present disclosure is not limited thereto.

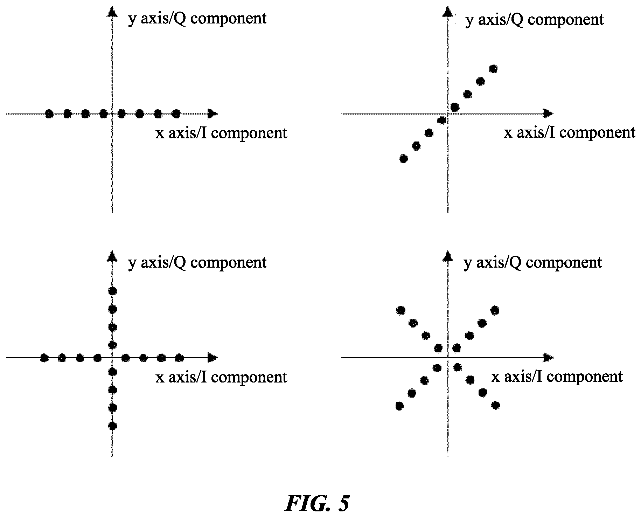

FIG. 5 depicts a schematic diagram showing a first constellation model and a second constellation model according to an embodiment of the present disclosure. In an embodiment, the second constellation model can be a cross-shaped constellation diagram corresponding to the coordinate system in the lower left corner or a cross-shaped constellation diagram corresponding to the coordinate system in the lower right corner, as shown in FIG. 5. The cross-shaped constellation diagram is a constellation diagram in which half of the constellation points are located on a straight line passing through the zero point (i.e., the origin), and the other half of the constellation points are located on another straight line passing through the zero point (i.e., the origin), and these two straight lines are perpendicular to each other. The cross-shaped constellation diagram exhibits high spectral efficiency and has a simple geometric shape. In particular, the cross-shaped constellation diagrams shown in FIG. 5 are constellation diagrams in a two-dimensional signal plane. Each of these cross-shaped constellation diagrams includes 16 constellation points each corresponding to a modulation symbol. Each modulation symbol can carry 4 bits of information, that is, 4 bits of information will be mapped (i.e., modulated) to a modulation symbol. The constellation points in the cross-shaped constellation diagram in the lower left corner of FIG. 5 are distributed along the x axis (I-component) and the y axis (Q-component). The constellation points in the cross-shaped constellation diagram in the lower right corner of FIG. 5 are distributed along the straight line angled with 45° passing through the origin and along a straight line angled with 135° passing through the origin respectively. The cross-shaped constellation diagram in the lower right corner of FIG. 5 can be formed by rotating the cross-shaped constellation diagram in the lower left corner of FIG. 5 by 45°. It can be understood that the second constellation model can also be another cross-shaped constellation diagram in addition to those shown in the lower left corner and the lower right corner of FIG. 5, and no limitation is posed to the form of the second constellation model in the embodiments of the present disclosure.

In an embodiment, the first constellation model can be a Pulse Amplitude Modulation (PAM) constellation diagram (i.e., a linear constellation diagram) corresponding to the upper left coordinate system, or a PAM constellation diagram corresponding to the upper right coordinate system, as shown in FIG. 5. Each of the constellation points in a PAM constellation diagram is positioned along a straight line passing through the zero point (i.e., the origin). It can be understood that the first constellation model can also be another cross-shaped constellation diagram in addition to those shown in the upper left corner and the upper right corner of FIG. 5, and no limitation is posed to the form of the first constellation model in the embodiments of the present disclosure.

Each modulation symbol (i.e., each constellation point) can carry a plurality of bits of information, that is, the effect of high-order modulation can be achieved, thus achieving high spectral efficiency. In an embodiment, each modulation symbol carries 4 bits of information, that is, 4 bits of information will be mapped (i.e. modulated) in one modulation symbol.

In another embodiment, each modulation symbol carries 5 bits, that is, 5 bits of information will be mapped (i.e., modulated) to one modulation symbol.

It can be understood that each of the linear constellation diagram (i.e., PAM constellation diagram), cross-shaped constellation diagram and 8-arm constellation diagram corresponding to the modulation symbols has the advantages of simple geometry. Even if the modulation symbol received by the receiving side (the second communication node) is subjected to the rotation and scaling by the channel, the constellation diagram corresponding to the modulation symbols is only a rotated and scaled linear constellation diagram, cross-shaped constellation diagram or 8-arm constellation diagram, and the resulted geometry is still relatively simple.

A linear constellation diagram is relatively simple, and which is usually simpler than a cross-shaped constellation diagram. A slightly complicated cross-shaped constellation diagram will be illustrated below by way of an example.

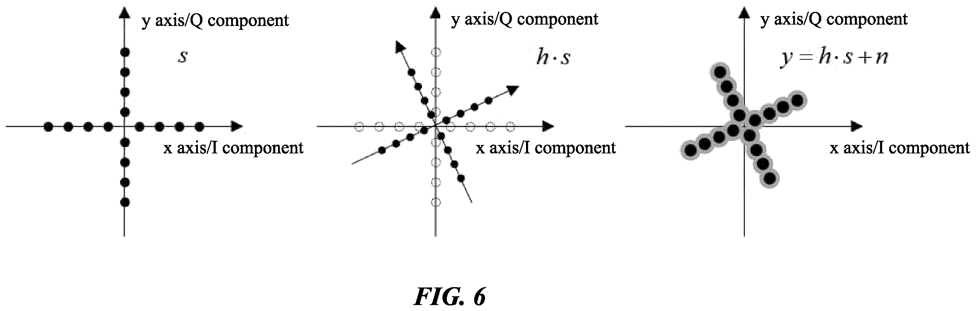

FIG. 6 depicts a schematic diagram showing cross-shaped constellation diagrams before and after channel rotation and scaling, in which the left coordinate system of FIG. 6 is a schematic diagram of a cross-shaped constellation diagram corresponding to the transmitted modulation symbols $s$ (i.e., modulation symbols $s$ at a first communication node and without channel rotation and scaling), and the middle coordinate system of FIG. 6 is a schematic diagram of a cross-shaped constellation diagram corresponding to modulation symbols after rotation and scaling $h * s$ (i.e., $h$ multiplies $s$, which can also be expressed as $h \cdot s$ or hs) received by a second communication node, where complex number $h$ is an amount of rotation and scaling.

It is worth noting that the middle coordinate system in FIG. 6 is a schematic diagram of a cross-shaped constellation diagram corresponding to the received modulation symbols without AWGN (i.e., the modulation symbols with rotation and scaling received by the second communication node), and the right coordinate system in FIG. 6 is a schematic diagram of the cross-shaped constellation diagram corresponding to the received modulation symbol $(y = h * s + n)$ with AWGN. It can be understood that the constellation diagram shown on the right of FIG. 6 can be formed by adding complex numbers corresponding to AWGN to the constellation points in the constellation diagram shown in the middle of FIG. 6, that is, the constellation points corresponding to the received modulation symbols $(h * s + n)$ with AWGN will be distributed around the constellation points $(h * s)$ corresponding to the constellation diagram shown in the middle of FIG. 6 according to the probability density of AWGN. In the constellation diagram on the right of FIG. 6, the colors (grey scale) of constellation points are from deep to light from the middle to the edge, and these constellation points are a set of points formed by the corresponding modulation symbols influenced by AWGN. It can also be seen from the constellation diagram on the right of FIG. 6 that even if with the AWGN, the general shape of the cross-shaped constellation diagram corresponding to the received modulation symbols is still cross-shaped. Therefore, a receiving side (i.e., the second communication node) can use the geometric shape of the cross-shaped constellation diagram as shown on the right of FIG. 6 to estimate the rotation and scaling amount of the constellation, that is to estimate the $h$.

In the following, a method for estimating the rotation and scaling amount is described.

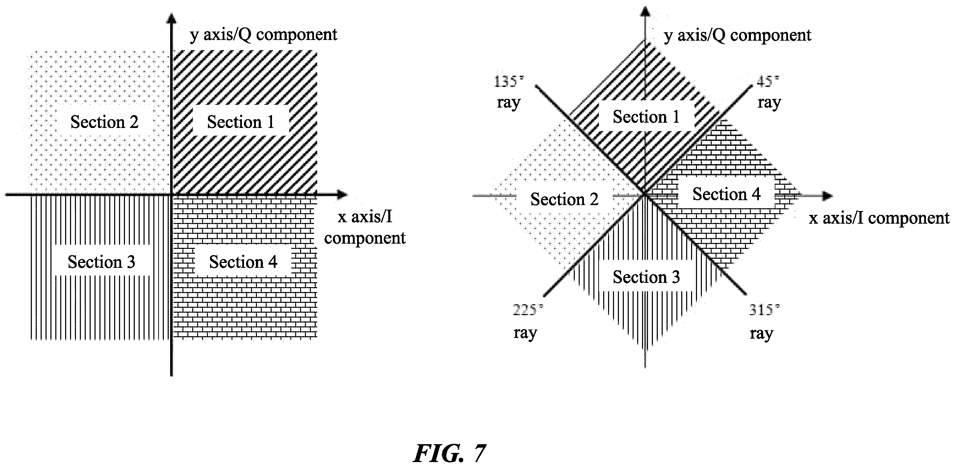

As shown in FIG. 7, firstly, the two-dimensional plane (that is, the two-dimensional signal plane) is composed of four sections, which shows two configurations. In an embodiment, as shown in the coordinate system on the left in FIG. 7, i.e., the first sectioning configuration, with four quadrants are naturally serve as the four sections. That is, the x axis and the $y$ axis serve as section lines, where the section marked with diagonal lines is section 1, the section marked with dots is section 2, the section marked with vertical lines is section 3, and the section filled with bricks is section 4. As shown in the coordinate system on the right in FIG. 7, the four sections in the second sectioning configuration are formed by rotating the four sections in the first sectioning configuration by 45 degrees. That is, the section enclosed by the 45-degree line from the origin to the 135-degree line from the origin is section 1, which is marked with diagonal lines. The section enclosed by the 135-degree line from the origin to the 225-degree line from the origin is section 2, which is marked with dots. The section enclosed by the 225-degree line from the origin to the 315-degree line from the origin is section 3, which is marked with vertical lines. The section enclosed by the 315-degree line from the origin to the 45-degree line from the origin is section 4, which is marked with bricks. The two sectioning configurations as shown in FIG. 7 are used to identify which section a constellation point falls in. In this case, the identification of the section in which a constellation point falls can be done by some simple addition and subtraction of the coordinates of the constellation points merely, without complicated multiplication operation. Hence, the identification is simple and convenient. In addition to the above two sectioning configurations, other sectioning configurations can be selected to section the two-dimensional plane into four sections, and the present disclosure is not limited thereto.

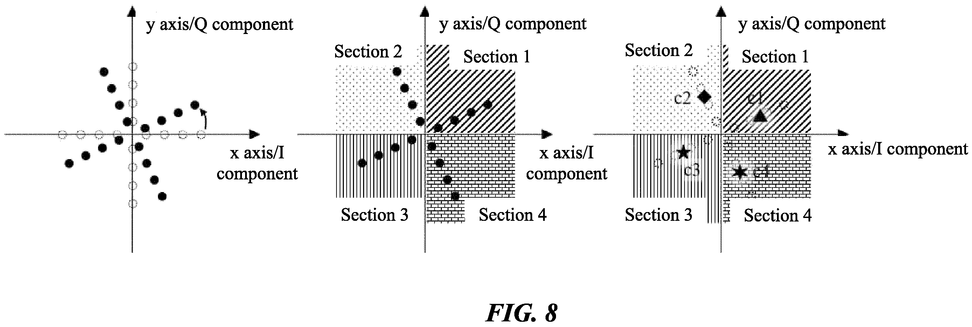

As shown in FIGS. 6 to 8, after the receiving side (i.e., the second communication node) sections the two-dimensional signal plane into four sections, the constellation points in each section (i.e. the modulation symbols corresponding to the constellation points) are added up respectively, and then divided by the number of constellation points (i.e., the number of modulation symbols) in the section, and then a coordinate can be calculated, which is the arithmetic mean center of the constellation points in the section. The cross-shaped constellation diagram shown in the middle of FIG. 6 is a schematic diagram of the constellation diagram by rotating and scaling the cross-shaped constellation diagram shown on the left of FIG. 6. As an example, the sectioning configuration shown in the left coordinate system in FIG. 7 is applied to the left coordinate system in FIG. 8. In such a case, after the sectioning, all the constellation points are distributed over the four sections, as shown in the middle coordinate system and the right coordinate system in FIG. 8. The coordinates of the constellation points in section 1 are summed and the sum is divided by the number of constellation points in this section, and the center c1 of the constellation points in section 1 can be identified, which is the position of the triangle shown in the right coordinate system in FIG. 8. Similarly, the coordinates of the constellation points in section 2 are summed and the sum is divided by the number of constellation points in this section, and the center $c2$ of the constellation points in section 2 can be identified, which is the position of the diamond shown in the right coordinate system in FIG. 8. The coordinates of the constellation points in section 3 are summed and the sum is divided by the number of constellation points in this section, and the center $c3$ of the constellation points in section 3 can be identified, which is the position of the star shown in the right coordinate system in FIG. 8. Again, the coordinates of the constellation points in section 4 are summed and the sum is divided by the number of constellation points in this section, and the center $c4$ of the constellation points in section 4 can be identified, which is the position of the hexagonal star shown in the right coordinate system in FIG. 8.

As shown in FIGS. 7 and 8, the rotation and scaling amount of the whole constellation diagram can be calculated according to the constellation point centers of all sections. In particular, taking a sectioning configuration shown in Figure 8 as an example, it is assumed that the calculated constellation point centers of the four sections are, $c1$, $c2$, $c3$, and $c4$, respectively. $c2'$ is obtained by rotating the constellation point center c2of section 2 clockwise by 90 degrees, i.e., $c2' = c2 * (-j)$. $c3'$ is obtained by rotating the constellation point center $c3$ of section 3 clockwise by 180 degrees, i.e., $c3' = -c3$. $c4'$ is obtained by rotating the constellation point center $c4$ of section 4 counterclockwise by 90 degrees, i.e., $c4' = c4 * j$. Then, the rotation and scaling amount that the whole constellation diagram subjected to can be estimated according to $c1$, $c2'$, $c3'$, $c4'$, where the rotation and scaling amount can be expressed by the following equation (1), i.e.:

$$c = (c1 + c2' + c3' + c4')/4 \qquad (1)$$

With the presence of AWGN, especially when some modulation symbols are subjected to larger AWGN, some modulation symbols may be shifted across sections. In order to estimate the rotation and scaling amount more accurately, it is usually necessary to use the two section configurations as shown in FIG. 7. For the two section configurations, two rotation and scaling amounts of the constellation diagram are calculated according to the above estimation method, and then the one with the larger magnitude of the two rotation and scaling amounts is taken as the rotation and scaling amount of the constellation diagram.

Referring again to FIG. 5, for the linear constellation diagram shown in the upper left corner or upper right corner of FIG. 5, only two sections can be used to calculate the rotation and scaling amount of the constellation diagram. For example, after the receiving side (i.e., the second communication node) sections the two-dimensional signal plane into two sections through the $y$ axis, the coordinates of the constellation points (i.e., the modulation symbols corresponding to the constellation points) in each section are summed respectively, and then divided by the number of constellation points in the respective section (i.e. the number of modulation symbols). Then the coordinates of a constellation point (i.e., the center of the constellation points of the section) can be calculated. Then the rotation and scaling amount of the whole constellation diagram can be obtained through the constellation point centers of all sections. Assuming that the right side of the x axis (that is, $x > = 0$) is section 1, and the center of the constellation points of section 1 is $c1$. The left side of the $x$ axis (that is, $x < 0$) is section 2, and the center of the constellation points of section 2 is c2. c2' is obtained by rotating the center of the constellation points of section 2 clockwise by 90 degrees, i.e., $c2' = -c2$. Then, the rotation and scaling amount c that the whole constellation diagram subjected to can be estimated according to c1, c2', where the rotation and scaling amount can be expressed by the following equation (2), i.e.:

$$c = (c1 + c2')/2 \qquad (2);$$

In order to estimate the rotation and scaling amount more accurately, the following four different 2-section configurations can be used for sectioning. In the first sectioning configuration, the two-dimensional signal plane is divided into 2 sections with the x axis as the section line. In the second configuration, the two-dimensional signal plane is divided into two sections with the $y$ axis as the section line. In the third configuration, the two-dimensional signal plane is divided into two sections with a 45° tilted line passing through the origin as the section line. In the fourth configuration, the two-dimensional signal plane is divided into two sections with a 135° tilted line passing through the origin as the section line.

Based on the above four different 2-section configurations, four rotation and scaling amounts are calculated, and then the one with the largest magnitude among the four rotation and scaling amount is taken as the rotation and scaling amount of the constellation diagram. After the receiving side (i.e., the second communication node) estimates the rotation and scaling amount of the constellation diagram, the rotation and scaling amount experienced by the constellation diagram can be balanced off, and the constellation diagram without distortion and only affected by AWGN can be obtained.

Therefore, a plurality of modulation symbols obtained by any one of the first constellation model, the second constellation model or the third constellation model can form a constellation diagram with simple geometry. After the modulation symbols are distorted by channel interference, the formed constellation diagram still presents a simple geometric pattern, hence the method for information transmission set forth in the present disclosure can perform compensation by means of the shape characteristics of the constellation diagram merely. As such, highfrequency spectral efficiency is achieved with no necessity to increase pilot overhead to improve demodulation performance.

Some example embodiments are illustrated below for the method for information transmission described in the above embodiments.

EXAMPLE EMBODIMENT ONE

Referring again to FIG. 6, the cross-shaped constellation diagram in FIG. 6 can be divided into two sections, and the constellation points of each section are on a line passing through the zero point (that is, the origin). For example, as shown in the cross-shaped constellation diagram corresponding to the coordinate system on the left of FIG. 6, half of the constellation points fall on the line of the $x$ axis and the other half fall on the line of the $y$ axis. For another example, in the cross-shaped constellation diagram corresponding to the middle coordinate system in FIG. 6, half of the constellation points fall on the line passing through the zero point (i.e. the origin) and angled 45° with the positive side of the x axis, and the other half of the constellation points fall on the line passing through the zero point (i.e. the origin) and angled 135° with the positive side of the $x$ axis.

In a case where the distances between adjacent constellation points along a line passing through the origin are equal and the distance between adjacent two points on the line is set to $2d$, then the distance between adjacent constellation points is only $\sqrt{2}d$ among the four constellation points closest to the origin. That is, the distance between adjacent constellation points among the four constellation points closest to the origin is smaller than that between adjacent constellation points on the same line passing through the origin, that is, the four constellation points closest to the origin are more densely distributed. Therefore, the constellation diagram is more susceptible to AWGN interference, which will cause the deterioration in demodulation performance.

Further, the cross-shaped constellation diagram can be composed of four sections. For example, the cross-shaped constellation diagram corresponding to the coordinate system on the left of FIG. 6 can be composed of four sections when the sectioning configuration shown in the coordinate system on the right of FIG. 7 is applied thereto. In particular, the constellation points of the first section are the constellation points on the $x$ axis with values greater than 0, i.e., the constellation points falling on the positive side of the $x$ axis. The first section corresponds to section 4 of the coordinate system on the right of FIG. 7. The constellation points of the second section are the constellation points on the $x$ axis with values less than 0, i.e., the constellation points falling on the negative side of the x axis. The second section corresponds to section 2 of the right coordinate system in FIG. 7. The constellation points of the third section are the constellation points on the $y$ axis with values greater than 0, i.e., the constellation points on the positive side of $y$ axis. The third section corresponds to section 1 of the right coordinate system in FIG. 7. The constellation points of the fourth section are the constellation points on the $y$ axis with values less than 0, i.e., the constellation points falling on the negative side of the $y$ axis. The fourth section corresponds to section 3 of the right coordinate system in FIG. 7.

In an embodiment, in order to avoid the above problem (that is, the distance between adjacent constellation points among the four constellation points closest to the origin is smaller than the distance between adjacent constellation points on the same line), an offset $\Delta$ greater than 0 can be added to the constellation points of the four sections of the cross-shaped constellation diagram respectively, such that the distance between adjacent constellation points in the four constellation points closest to the origin is greater than or equal to the distance between adjacent constellation points on the same line, that is, the constellation points of the four sections are entirely moved away from the origin, to avoid the dense distribution of the four constellation points closest to the origin, in order to enhance the demodulation performance.

Alternatively, the constellation points of the four sections of the cross-shaped constellation diagram are not added an offset $\Delta$ greater than 0, that is, the offset of the constellation points of each section of the cross-shaped constellation diagram is 0, instead, in the cross-shaped constellation diagram with the offset of all the constellation points of 0, the distances between adjacent constellation points on the same line are configured to be equal, so the average power of the constellation diagram is lower. In particular, in the case where $a_n = (2n - 1 + \Delta)d$, the value of $\Delta$ can be $\sqrt{2} - 1$. In this case, $a_n = (2n - 1 + \Delta)d = (2n - 2 + \sqrt{2})d$. In such a case the distances between adjacent constellation points among the four constellation points closest to the origin, are all 2d, and the distances between adjacent constellation points on the same line are also 2d. That is, the distances between adjacent constellation points among the four constellation points closest to the origin are equal to the distances between adjacent constellation points on the same line in each section.

It can be understood that in order to improve the transmission performance of the four constellation points closest to the origin in the cross-shaped constellation diagram, the distance between adjacent constellation points in the four constellation points closest to the origin can be increased. As such, the formed cross-shaped constellation diagram can be expanded outward, and the dense distribution of the four constellation points closest to the origin can be avoided. Thereby, the influence of AWGN on the constellation points (i.e. modulation symbols) is reduced and the robustness of the cross-shaped constellation diagram is improved. For example, let $a_n = nd,$ where $d$ is a positive real number, such that the distance between adjacent constellation points among the four constellation points closest to the origin is $\sqrt{2}d$, while the distance between adjacent constellation points on the same line of each section is $d$. That is, the distance between adjacent constellation points among the four constellation points closest to the origin is greater than that between adjacent constellation points on the same line of each section. In other words, the constellation points of all four sections are displaced away from the origin, so as to reduce the influence of AWGN on the constellation points (i.e., the modulation symbols), and to enhance the demodulation performance of the second communication node. However, the addition of an offset $\Delta$ greater than 0 to the constellation points of the four sections of the cross-shaped constellation diagram respectively would lead to greater average power of the constellation diagram. Therefore, in some scenarios, a cross-shaped constellation diagram with an offset $\Delta$ of 0 is employed, and the present disclosure is not limited thereto

EXAMPLE EMBODIMENT TWO

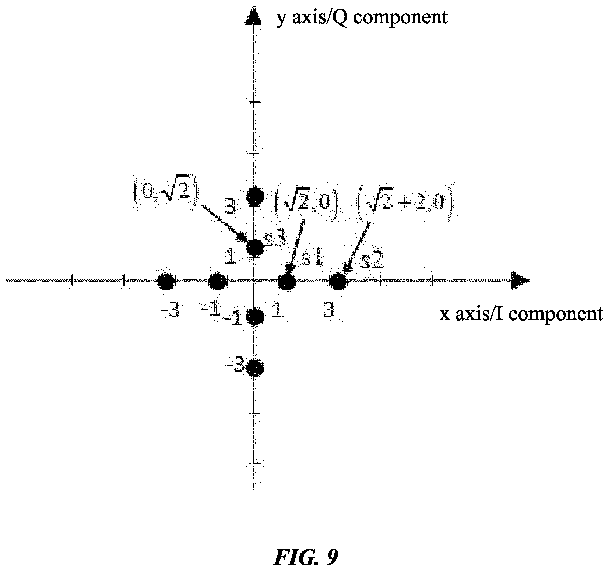

FIG. 9 shows a case where the value of $\Delta$ satisfies $\Delta = \sqrt{2} - 1$. As shown in FIG. 9, the second constellation model is a cross-shaped constellation diagram, the value of $M2$ is 1, that is, the second constellation model can be used to modulate three bits of information in the data packet to obtain one modulation symbol. Since $N2 = 2^{M2}$, and correspondingly $N2 = 2$, thus, the second constellation model is a cross-shaped constellation diagram including eight constellation points. The value of $d$ is 1, that is, the scaling amount of the cross-shaped constellation is 1. The value of $\theta$ is 0, that is, the rotation amount of the cross-shaped constellation diagram is 0. In other words, the constellation points in the cross-shaped constellation diagram are distributed on the x axis (I component) and the y axis (Q component). Then, it can be known from $a_n = 2n - 2 + \sqrt{2}$ that, $a_1 = 2 + \sqrt{2} - 2 = \sqrt{2}$, and $a_2 = 2 * 2 + \sqrt{2} - 2 = 2 + \sqrt{2}$. Therefore, the distance between the constellation point $a_1 e^{j0}$ (i.e. $s1$) and the constellation point $b_1 e^{j(0+\pi/2)}$ (i.e. $s3$) is 2, i.e., $\left| \sqrt{2}e^{j0} - \sqrt{2}e^{j(0+\pi/2)} \right| = 2$ where $e^{j0} = \cos 0 + j \sin 0 = 1$, $e^{j(0+\pi/2)} = \cos(0 + \pi/2) + j \sin(0 + \pi/2) = j$. Thus, it can be determined that the distance between adjacent constellation points on the same line is 2. Similarly, the distance between the constellation point $a_1 e^{j0}$ (i.e., $s1$) and the constellation point $a_2 e^{j0}$ (i.e., $s2$) is 2, i.e., $\left| \sqrt{2}e^{j0} - (2 + \sqrt{2})e^{j0} \right| = 2$. That is, the distance between the adjacent points of the four constellation points closest to the origin is 2. Thus, the distance between the constellation point $s1$ and the constellation point $s3$ equals to that between the constellation point s1 and the constellation point s2. Therefore, the distance between adjacent points of the four constellation points closest to the origin is equal to the distance between adjacent constellation points on the same line. The coordinates of the constellation point s1 are ($\sqrt{2}$, 0), the coordinates of the constellation point s2 are ($\sqrt{2} + 2, 0$), and the coordinates of the constellation point s3 are (0, $\sqrt{2}$). It can be understood that the two-dimensional coordinates of other constellation points can be calculated in the form of complex numbers corresponding to the constellation points in the second constellation model, which will not be further described here.

Therefore, when the value $\Delta$ is equal to $\sqrt{2} - 1$, that is, the two-dimensional coordinates of the eight constellation points as shown in FIG. 9 are as follows:

$$\left(\sqrt{2}, 0\right), \left(\sqrt{2} + 2, 0\right),$$

$$\left(0, \sqrt{2}\right), \left(0, \sqrt{2} + 2\right),$$

$$\left(-\sqrt{2}, 0\right), \left(-\sqrt{2} - 2, 0\right),$$

$$\left(0, -\sqrt{2}\right), \left(0, -\sqrt{2} - 2\right)$$

In addition, the two-dimensional coordinates of the eight constellation points can include the following:

$$(1+\Delta,0),(3+\Delta,0),$$

$$(0,1+\Delta),(0,3+\Delta),$$

$$(-(1+\Delta),0),(-(3+\Delta),0),$$

$$(0,-(1+\Delta)),(0,-(3+\Delta))$$

In an embodiment, $\Delta$ can be expressed as a finite decimal, for example $\Delta=\sqrt{2}-1=1.141-1=0.141$, and the present disclosure is not limited thereto.

When it is necessary to normalize the power of the second constellation model, each of the two-dimensional coordinates of the eight constellation points corresponding to the second constellation model can be multiplied by the same normalization factor.

EXAMPLE EMBODIMENT THREE

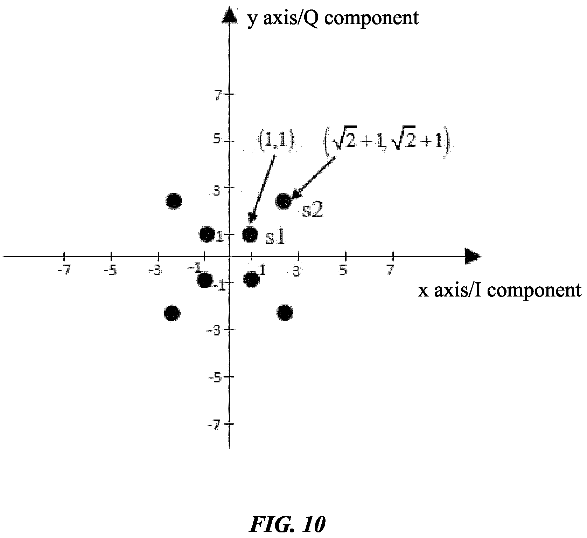

FIG. 10 shows a case where the value of $\Delta$ satisfies $\Delta=\sqrt{2}-1$. As shown in FIG. 10, the second constellation model is a cross-shaped constellation diagram, the value of M2 is 1, that is, the second constellation model can be used to modulate three bits of information in the data packet to obtain one modulation symbol. Since $N2 = 2^{M2}$, and correspondingly $N2 = 2$, thus, the second constellation model is a cross-shaped constellation diagram including eight constellation points. The value of d is 1, that is, the scaling amount of the cross-shaped constellation diagram is 1. The value of $\theta$ is $\pi/4$, that is, the rotation amount of the cross-shaped constellation diagram is $\pi/4$. In other words, half of the constellation points in the cross-shaped constellation diagram are distributed on the line passing through the origin and angled 45° with the positive side of x axis, and the other half of the constellation points in the cross-shaped constellation diagram are distributed on the line passing through the origin and angled 135° with the positive side of x axis.

Then, it can be seen from $a_n = 2n - 2 + \sqrt{2}$ that, $a_1 = 2*1+\sqrt{2}-2 = \sqrt{2}$, $a_2 = 2*2+\sqrt{2}-2 = 2+\sqrt{2}$, then $a_1 e^{j\pi/4} = \sqrt{2}e^{j\pi/4} = 1+j$, and $a_2 e^{j\pi/4} = (2+\sqrt{2})e^{j\pi/4} = (\sqrt{2}+1)+j(\sqrt{2}+1)$. Therefore, the coordinates of the constellation point s1 corresponding to $a_1 e^{j\pi/4}$ are $(1,1)$, and the coordinates of the constellation point s2 corresponding to $a_2 e^{j\pi/4}$ are ($\sqrt{2}+1,\sqrt{2}+1$). It can be understood that the two-dimensional coordinates of other constellation points can be calculated in the form of complex numbers corresponding to the constellation points in the second constellation model, which will not be further described here.

Therefore, when the value $\Delta$ is equal to $\sqrt{2}-1$, the two-dimensional coordinates of the eight constellation points as shown in FIG. 10 are as follows:

$$(1,1),(\sqrt{2}+1,\sqrt{2}+1),$$

$$(-1,1),(-\sqrt{2}-1,\sqrt{2}+1),$$

$$(-1,-1),(-\sqrt{2}-1,-\sqrt{2}-1),$$

$$(1,-1),(\sqrt{2}+1,-\sqrt{2}-1)$$

It can be understood that the value of $\Delta$ can also satisfy $\Delta=1-\frac{\sqrt{2}}{2}$, where $\Delta$ can be expressed by a finite

decimal, for example, $\Delta = 1 - 0.707 = 0.293$ and the present disclosure is not limited thereto.

When the value of $\Delta$ satisfies $\Delta = 1 - \frac{\sqrt{2}}{2}$, the two-dimensional coordinates of the eight constellation points can include the following:

$$\left(\left(\frac{\sqrt{2}}{2}+\Delta\right),\left(\frac{\sqrt{2}}{2}+\Delta\right)\right),\left(\left(\frac{3\sqrt{2}}{2}+\Delta\right),\left(\frac{3\sqrt{2}}{2}+\Delta\right)\right),$$

$$\left(-\left(\frac{\sqrt{2}}{2}+\Delta\right),-\left(\frac{\sqrt{2}}{2}+\Delta\right)\right),\left(-\left(\frac{3\sqrt{2}}{2}+\Delta\right),-\left(\frac{3\sqrt{2}}{2}+\Delta\right)\right),$$

$$\left(\left(\frac{\sqrt{2}}{2}+\Delta\right),-\left(\frac{\sqrt{2}}{2}+\Delta\right)\right),\left(\left(\frac{3\sqrt{2}}{2}+\Delta\right),-\left(\frac{3\sqrt{2}}{2}+\Delta\right)\right),$$

$$\left(-\left(\frac{\sqrt{2}}{2}+\Delta\right),\left(\frac{\sqrt{2}}{2}+\Delta\right)\right),\left(-\left(\frac{3\sqrt{2}}{2}+\Delta\right),\left(\frac{3\sqrt{2}}{2}+\Delta\right)\right)$$

When it is necessary to normalize the power of the second constellation model, each of the two-dimensional coordinates of the eight constellation points corresponding to the second constellation model can be multiplied by the same normalization factor.

EXAMPLE EMBODIMENT FOUR

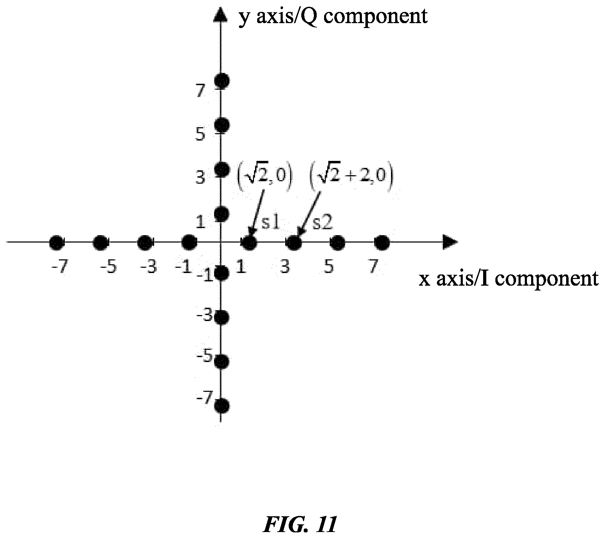

FIG. 11 shows a case where the value of M2 is 2. As shown in FIG. 11, the second constellation model is a cross-shaped constellation diagram, the value of $M2$ is 2, that is, the second constellation model can be used to modulate four bits of information in the data packet to obtain one modulation symbol. Since $N2 = 2^{M2}$ and correspondingly $N2 = 4$, thus, the second constellation model is a cross-shaped constellation diagram including sixteen constellation points. The value of $d$ is 1, that is, the scaling amount of the cross-shaped constellation diagram is 1. The value of $\theta$ is 0, that is, the rotation amount of the cross-shaped constellation diagram is 0. In other words, the constellation points in the cross-shaped constellation diagram are distributed on the $x$ axis (I component) and the $y$ axis (Q component). Then, it can be known from $a_n = 2n - 2 + \sqrt{2}$ that, $a_1 = 2 - 2 + \sqrt{2} = \sqrt{2}$, $a_2 = 4 - 2 + \sqrt{2} = 2 + \sqrt{2}$. Since $e^{j0} = cos0 + jsin0 = 1$, and then $\left|\sqrt{2}e^{j0} - \left(2+\sqrt{2}\right)e^{j0}\right| = 2$, therefore, it can be determined that the distance between $a_1e^{j0}$ and $a_2e^{j0}$ is 2, that is, the distance between adjacent constellation points on the same line is 2. In addition, according to $b_n = a_n + \beta$, when the value of $\beta$ is 0, $b_n = a_n$, that is, $b_n$ equals to $a_n$. Since $e^{j(0+\pi/2)} = \cos(0 + \pi/2) + j \sin(0 + \pi/2) = j$, and hence $\left|\sqrt{2}e^{j0} - \left(2+\sqrt{2}\right)e^{j(0+\pi/2)}\right| = 2$, it can be determined that the distance between $a_1e^{j0}$ and $b_1e^{j(0+\pi/2)}$ is 2, that is, the distance between adjacent points of the four constellation points closest to the origin is 2. Therefore, the distance between adjacent points of the four constellation points closest to the origin is equal to the distance between adjacent constellation points on the same line. Referring to the calculation in Example Embodiment Three above, it can be determined that the coordinates of the constellation point $s1$ are $(\sqrt{2},0)$, and the coordinates of the constellation point $s2$ are $(\sqrt{2}+2,0)$, and the two-dimensional coordinates of other constellation points can be calculated by using the complex number form corresponding to the constellation point in the second constellation model, which is not further discussed here.

Therefore, when the value of $\Delta$ is equal to $\sqrt{2} - 1$, the two-dimensional coordinates of the sixteen constellation points as shown in FIG. 11 are as follows:

$$\left(\sqrt{2}, 0\right), \left(2 + \sqrt{2}, 0\right), \left(4 + \sqrt{2}, 0\right), \left(6 + \sqrt{2}, 0\right),$$

$$\left(-\sqrt{2}, 0\right), \left(-2 - \sqrt{2}, 0\right), \left(-4 - \sqrt{2}, 0\right), \left(-6 - \sqrt{2}, 0\right),$$

$$\left(0, \sqrt{2}\right), \left(0, 2 + \sqrt{2}\right), \left(0, 4 + \sqrt{2}\right), \left(0, 6 + \sqrt{2}\right),$$

$$\left(0, -\sqrt{2}\right), \left(0, -2 - \sqrt{2}\right), \left(0, -4 - \sqrt{2}\right), \left(0, -6 - \sqrt{2}\right)$$

In addition, the two-dimensional coordinates of the sixteen constellation points can include the following:

$$(1 + \Delta, 0), (3 + \Delta, 0), (5 + \Delta, 0), (7 + \Delta, 0),$$

$$\left(-(1 + \Delta), 0\right), \left(-(3 + \Delta), 0\right), \left(-(5 + \Delta), 0\right), \left(-(7 + \Delta), 0\right),$$

$$(0, 1 + \Delta), (0, 3 + \Delta), (0, 5 + \Delta), (0, 7 + \Delta),$$

$$\left(0, -(1 + \Delta)\right), \left(0, -(3 + \Delta)\right), \left(0, -(5 + \Delta)\right), \left(0, -(7 + \Delta)\right)$$

In an embodiment, $\Delta$ can be expressed as a finite decimal, for example $\Delta = \sqrt{2} - 1 = 1.141 - 1 = 0.141$, and the present disclosure is not limited thereto.

When it is necessary to normalize the power of the second constellation model, each of the two-dimensional coordinates of the sixteen constellation points corresponding to the second constellation model can be multiplied by the same normalization factor.

EXAMPLE EMBODIMENT FIVE

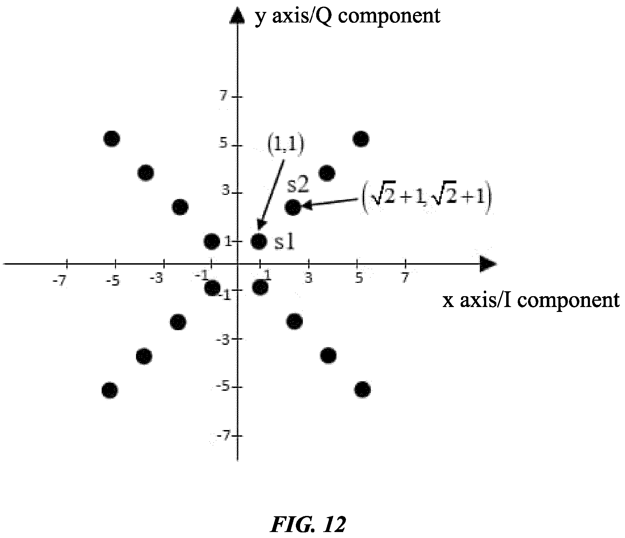

FIG. 12 shows a case where the value of $M2$ is 2, that is, the second constellation model can be used to modulate four bits of information in the data packet to obtain one modulation symbol. Since $N2 = 2^{M2}$ and correspondingly $N2 = 4$, thus, the second constellation model is a cross-shaped constellation diagram including sixteen constellation points. The value of d is 1, that is, the scaling amount of the cross-shaped constellation diagram is 1. The value of $\theta$ is $\pi/4$, that is, the rotation amount of the cross-shaped constellation diagram is $\pi/4$. In other words, half of the constellation points in the cross-shaped constellation diagram are distributed on the line passing through the origin and angled 45° with the positive side of x axis, and the other half of the constellation points in the cross-shaped constellation diagram are distributed on the line passing through the origin and angled 135° with the positive side of x axis. Then, it can be known from $a_n = (2n - 1 + \Delta)d$ that, $a_n = 2n - 1 + \Delta$, and if $\Delta = \sqrt{2} - 1$, then $a_n = 2n - 2 + \sqrt{2}$. Hence, $a_1 = 2 + \sqrt{2} - 2 = \sqrt{2}, \ a_2 = 2*2 + \sqrt{2} - 2 = 2 + \sqrt{2}$, $a_3 = 6 - 2 + \sqrt{2} = 4 + \sqrt{2}, \ a_4 = 8 - 2 + \sqrt{2} = 6 + \sqrt{2}$. Therefore, $a_1 e^{j\pi/4} = \sqrt{2} e^{j\pi/4} = 1 + j$, $a_2 e^{j\pi/4} = (2 + \sqrt{2}) e^{j\pi/4} = (\sqrt{2} + 1) + j(\sqrt{2} + 1)$. The coordinates of the constellation point s1 corresponding to $a_1 e^{j\pi/4}$ are (1,1), and the coordinates of the constellation point $s2$ corresponding to $a_2 e^{j\pi/4}$ are ($\sqrt{2} + 1, \sqrt{2} + 1$). It can be understood that the two-dimensional coordinates of other constellation points can be calculated in the form of complex numbers corresponding to the constellation points in the second constellation model, which is not further discussed here.

Therefore, when the value of $\Delta$ is equal to $\sqrt{2} - 1$, the two-dimensional coordinates of the sixteen constellation points as shown in FIG. 12 are as follows:

$$(1,1), \left(\sqrt{2} + 1, \sqrt{2} + 1\right), \left(2\sqrt{2} + 1, 2\sqrt{2} + 1\right), \left(3\sqrt{2} + 1, 3\sqrt{2} + 1\right),$$

$$(-1,1), \left(-\sqrt{2}-1, \sqrt{2}+1\right), \left(-2\sqrt{2}-1, 2\sqrt{2}+1\right), \left(-2\sqrt{2}-1, 2\sqrt{2}+1\right),$$

$$(-1,-1), \left(-\sqrt{2}-1, -\sqrt{2}-1\right), \left(-2\sqrt{2}-1, -2\sqrt{2}-1\right), \left(-2\sqrt{2}-1, -2\sqrt{2}-1\right),$$

$$(1,-1), \left(\sqrt{2}+1, -\sqrt{2}-1\right), \left(2\sqrt{2}+1, -2\sqrt{2}-1\right), \left(2\sqrt{2}+1, -2\sqrt{2}-1\right)$$

It can be understood that the value of $\Delta$ can also satisfy $\Delta = 1 - \frac{\sqrt{2}}{2}$, where $\Delta$ can be expressed by a finite decimal, for example, $\Delta = 1 - 0.707 = 0.293$ and the present disclosure is not limited thereto.

When the value of $\Delta$ satisfies $\Delta = 1 - \frac{\sqrt{2}}{2}$, the two-dimensional coordinates of the sixteen constellation points can include the following:

$$\left( \left( \frac{\sqrt{2}}{2} + \Delta \right), \left( \frac{\sqrt{2}}{2} + \Delta \right) \right), \left( \left( \frac{3\sqrt{2}}{2} + \Delta \right), \left( \frac{3\sqrt{2}}{2} + \Delta \right) \right),$$

$$\left( \left( \frac{5\sqrt{2}}{2} + \Delta \right), \left( \frac{5\sqrt{2}}{2} + \Delta \right) \right), \left( \left( \frac{7\sqrt{2}}{2} + \Delta \right), \left( \frac{7\sqrt{2}}{2} + \Delta \right) \right),$$

$$\left( -\left( \frac{\sqrt{2}}{2} + \Delta \right), -\left( \frac{\sqrt{2}}{2} + \Delta \right) \right), \left( -\left( \frac{3\sqrt{2}}{2} + \Delta \right), -\left( \frac{3\sqrt{2}}{2} + \Delta \right) \right),$$

$$\left( -\left( \frac{5\sqrt{2}}{2} + \Delta \right), -\left( \frac{5\sqrt{2}}{2} + \Delta \right) \right), \left( -\left( \frac{7\sqrt{2}}{2} + \Delta \right), -\left( \frac{7\sqrt{2}}{2} + \Delta \right) \right),$$

$$\left( \left( \frac{\sqrt{2}}{2} + \Delta \right), -\left( \frac{\sqrt{2}}{2} + \Delta \right) \right), \left( \left( \frac{3\sqrt{2}}{2} + \Delta \right), -\left( \frac{3\sqrt{2}}{2} + \Delta \right) \right),$$

$$\left( \left( \frac{5\sqrt{2}}{2} + \Delta \right), -\left( \frac{5\sqrt{2}}{2} + \Delta \right) \right), \left( \left( \frac{7\sqrt{2}}{2} + \Delta \right), -\left( \frac{7\sqrt{2}}{2} + \Delta \right) \right),$$

$$\left( -\left( \frac{\sqrt{2}}{2} + \Delta \right), \left( \frac{\sqrt{2}}{2} + \Delta \right) \right), \left( -\left( \frac{3\sqrt{2}}{2} + \Delta \right), \left( \frac{3\sqrt{2}}{2} + \Delta \right) \right),$$

$$\left( -\left( \frac{5\sqrt{2}}{2} + \Delta \right), \left( \frac{5\sqrt{2}}{2} + \Delta \right) \right), \left( -\left( \frac{7\sqrt{2}}{2} + \Delta \right), \left( \frac{7\sqrt{2}}{2} + \Delta \right) \right)$$

Since $\left| \sqrt{2}e^{j\pi/4} - (2+\sqrt{2})e^{j\pi/4} \right| = 2$, it can be determined that the distance between $a_1 e^{j\pi/4}$ and $a_2 e^{j\pi/4}$ is 2, that is, the distance between adjacent constellation points on the same line is 2. In addition, since

$$e^{j(\pi/4+\pi/2)} = \cos(\pi/4 + \pi/2) + j\sin(\pi/4 + \pi/2) = -\frac{\sqrt{2}}{2} + \frac{\sqrt{2}}{2}j$$ , hence $\left| \sqrt{2}e^{j(\pi/4)} - \sqrt{2}e^{j(\pi/4+\pi/2)} \right| = 2$ , it can be determined that the distance between $a_1e^{j\pi/4}$ and $a_1e^{j(\pi/4+\pi/2)}$ is 2, that is, the distance between adjacent points of the four constellation points closest to the origin is 2. Therefore, the distance between adjacent points of the four constellation points closest to the origin is equal to the distance between adjacent constellation points on the same line.

When it is necessary to normalize the power of the second constellation model, each of the two-dimensional coordinates of sixteen constellation points corresponding to the second constellation model can be multiplied by the same normalization factor.

EXAMPLE EMBODIMENT SIX

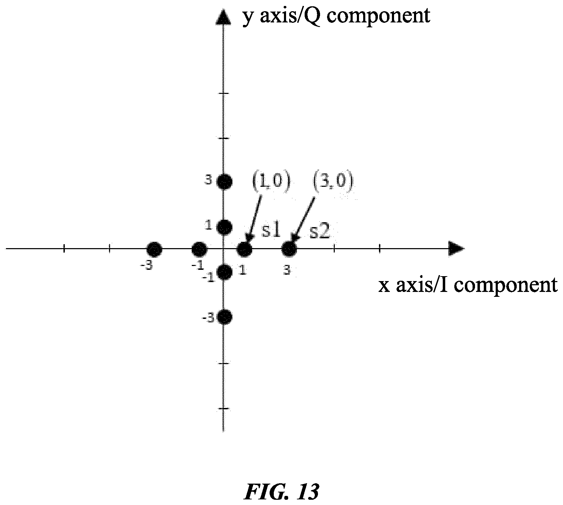

FIG. 13 shows a case where the value of $\Delta$ satisfies $\Delta = 0$. As shown in FIG. 13, when the second constellation model is a cross-shaped constellation diagram, when the value of $M2$ is 1, the second constellation model can be used to modulate three bits of information in the data packet to obtain one modulation symbol. Since $N2 = 2^{M2}$, and correspondingly $N2 = 2$, thus, the second constellation model is a cross-shaped constellation diagram including eight constellation points. The value of $d$ is 1, that is, the scaling amount of the cross-shaped constellation diagram is 1. The value of $\theta$ is 0, that is, the rotation amount of the cross-shaped constellation diagram is 0. In other words, the constellation points in the cross-shaped constellation diagram are distributed on the $x$ axis (I component) and the $y$ axis (Q component). Then, it can be known from $a_n = (2n - 1 + \Delta)d$ that, $a_n = 2n - 1$ therefore, it can be determined that $a_1 = 1$, and $a_2 = 3$. Since $e^{j0} = \cos 0 + j\sin 0 = 1$, hence $a_1e^{j0} = 1$, $a_2e^{j0} = 3$, therefore, the coordinates of the constellation point s1 corresponding to $a_1e^{j0}$ are (1,0), and the coordinates of the constellation point s2 corresponding to $a_2e^{j0}$ are (3,0). It can be understood that the two-dimensional coordinates of other constellation points can be calculated in the form of complex numbers corresponding to the constellation points in the second constellation model, which will not be further described here.

Therefore, when the value of $\Delta$ is equal to 0, the two-dimensional coordinates of the eight constellation points as shown in FIG. 13 are as follows:

$$(1,0), (3,0),$$

$$(0,1), (0,3),$$

$$(-1,0), (-3,0),$$

$$(0,-1), (0,-3)$$

When it is necessary to normalize the power of the second constellation model, each of the two-dimensional coordinates of eight constellation points corresponding to the second constellation model can be multiplied by the same normalization factor (e.g., *1/sqrt(10))*.

EXAMPLE EMBODIMENT SEVEN

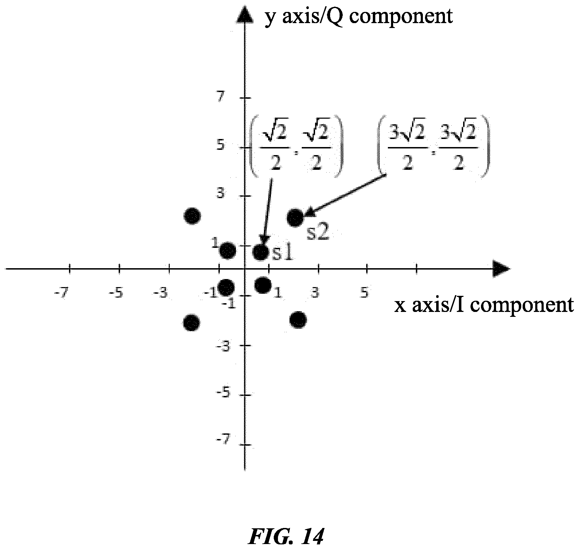

FIG. 14 shows a case where the value of $\Delta$ satisfies $\Delta = 0$. As shown in FIG. 14, the second constellation model is a cross-shaped constellation diagram, the value of $M2$ is 1, that is, the second constellation model can be used to modulate three bits of information in the data packet to obtain one modulation symbol. Since $N2 = 2^{M2}$, thus, $N2 = 2$. Hence, the second constellation model is a cross-shaped constellation diagram including eight constellation points. The value of d is 1, that is, the scaling amount of the cross-shaped constellation diagram is 1. The value of $\theta$ is $\pi/4$, that is, the rotation amount of the cross-shaped constellation diagram is $\pi/4$. In other words, half of the constellation points in the cross-shaped constellation diagram are distributed on the line passing through the origin and angled 45° with the positive side of the x axis, and the other half of the constellation points in the cross-shaped constellation diagram are distributed on the line passing through the origin and angled 135° with the positive side of the x axis. Then, from $a_n = (2n - 1 + \Delta)d$, $a_n = 2n - 1$, then it can be known that $a_1 = 1$, and $a_2 = 3$, then $a_1e^{j\pi/4} = e^{j\pi/4} = \frac{\sqrt{2}}{2} + \frac{\sqrt{2}}{2}j$ , and $a_2e^{j\pi/4} = 3e^{j\pi/4} = \frac{3\sqrt{2}}{2} + \frac{3\sqrt{2}}{2}j$ ,

therefore, the coordinates of the constellation point s1 corresponding to $a_1e^{j\pi/4}$ are ( $\frac{\sqrt{2}}{2}, \frac{\sqrt{2}}{2}$ ), and the coordinates of the constellation point s2 corresponding to $a_2e^{j\pi/4}$ are ( $\frac{3\sqrt{2}}{2}, \frac{3\sqrt{2}}{2}$ ). It can be understood that the two-dimensional coordinates of other constellation points can be calculated in the form of complex numbers corresponding to the constellation points in the second constellation model, which will not be further described here.

Hence, the two-dimensional coordinates of the eight constellation points can include the following:

$$\left(\frac{\sqrt{2}}{2},\frac{\sqrt{2}}{2}\right),\left(\frac{3\sqrt{2}}{2},\frac{3\sqrt{2}}{2}\right),$$

$$\left(-\frac{\sqrt{2}}{2},-\frac{\sqrt{2}}{2}\right),\left(-\frac{3\sqrt{2}}{2},-\frac{3\sqrt{2}}{2}\right),$$

$$\left(\frac{\sqrt{2}}{2},-\frac{\sqrt{2}}{2}\right),\left(\frac{3\sqrt{2}}{2},-\frac{3\sqrt{2}}{2}\right),$$

$$\left(-\frac{\sqrt{2}}{2},\frac{\sqrt{2}}{2}\right),\left(-\frac{3\sqrt{2}}{2},\frac{3\sqrt{2}}{2}\right)$$

When it is necessary to normalize the power of the second constellation model, each of the two-dimensional coordinates of the eight constellation points corresponding to the second constellation model can be multiplied by the same normalization factor (e.g., *1/sqrt(10)).*

EXAMPLE EMBODIMENT EIGHT

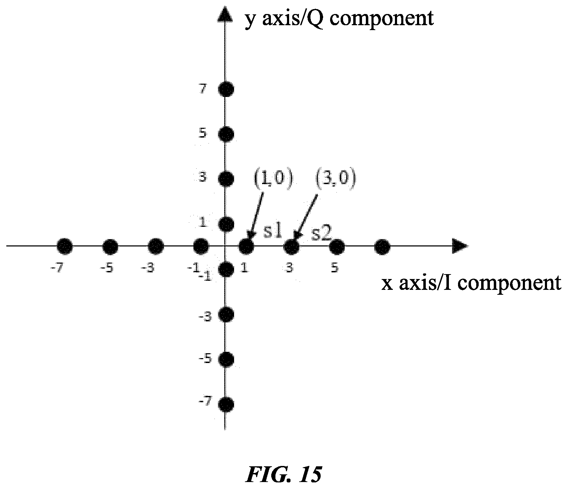

Referring to FIG. 15, the second constellation model is a cross-shaped constellation diagram, and the value of *M2* is 2, that is, the second constellation model can be used to modulate four bits of information in the data packet to obtain one modulation symbol. Since $N2 = 2^{M2}$ and correspondingly $N2 = 4$, thus, the second constellation model is a cross-shaped constellation diagram including sixteen constellation points. The value of $d$ is 1, that is, the scaling amount of the cross-shaped constellation diagram is 1. The value of $\theta$ is 0, that is, the rotation amount of the cross-shaped constellation is 0. In other words, the constellation points in the cross-shaped constellation diagram are distributed on the x axis (I component) and the y axis (Q component).

Then, from $a_n = (2n - 1 + \Delta)d$, it can be known that $a_n = 2n - 1 + \Delta$, , and if $\Delta = 0$, that is $a_n = 2n - 1$, then, $a_1 = 1, and\, a_2 = 3$. Since $e^{j0} = \cos 0 + j \sin 0 = 1$, it can be determined that $a_1 e^{j0} = e^{j0} = 1$, and $a_2 e^{j0} = 3e^{j0} = 3$, therefore, the coordinates of the constellation point $s1$ corresponding to $a_1 e^{j0}$ are (1,0), and the coordinates of the constellation point s2 corresponding to $a_2 e^{j0}$ are (3,0). It can be understood that the two-dimensional coordinates of other constellation points can be calculated in the form of complex numbers corresponding to the constellation points in the second constellation model, which will not be further described here.

Hence, the two-dimensional coordinates of the sixteen constellation points can include the following:

$$(1,0), (3,0), (5,0), (7,0),$$

$$(-1,0), (-3,0), (-5,0), (-7,0),$$

$$(0,1), (0,3), (0,5), (0,7),$$

$$(0,-1), (0,-3), (0,-5), (0,-7)$$

When it is necessary to normalize the power of the second constellation model, each of the two-dimensional coordinates of the sixteen constellation points corresponding to the second constellation model can be multiplied by the same normalization factor (e.g., *1/sqrt(84)).*

EXAMPLE EMBODIMENT NINE

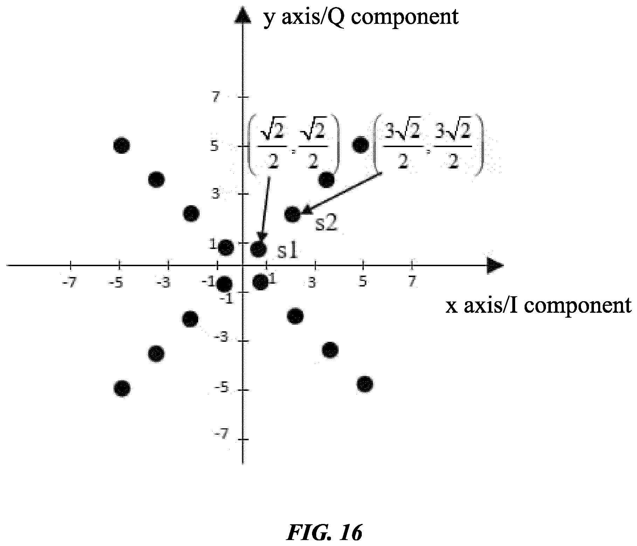

FIG. 16 shows a case where the second constellation model is a cross-shaped constellation diagram and the value of M2 is 2, that is, the second constellation model can be used to modulate four bits of information in the data packet to obtain one modulation symbol. Since $N2 = 2^{M2}$, thus $N2 = 4$, hence the second constellation model is a cross-shaped constellation diagram including sixteen constellation points. The value of $d$ is 1, that is, the scaling amount of the cross-shaped constellation diagram is 1. The value of $\theta$ is $\pi/4$, that is, the rotation amount of the cross-shaped constellation diagram is $\pi/4$. In other words, half of the constellation points in the cross-shaped constellation diagram are distributed on the line passing through the origin and angled 45° with the positive side of the $x$ axis, and the other half of the constellation points in the cross-shaped constellation diagram are distributed on the line passing through the origin and angled 135° with the positive side of the $x$ axis. Then, from $a_n = (2n - 1 + \Delta)d$, it can be known that $a_n = 2n - 1 + \Delta$, and if $\Delta = 0$, that is $a_n = 2n - 1$, then, $a_1 = 1$, and $a_2 = 3$. Then, $a_1 e^{j\pi/4} = e^{j\pi/4} = \frac{\sqrt{2}}{2} + \frac{\sqrt{2}}{2}j$, and $a_2 e^{j\pi/4} = 3e^{j\pi/4} = \frac{3\sqrt{2}}{2} + \frac{3\sqrt{2}}{2}j$. Therefore, the coordinates of the constellation point $s1$ corresponding to $a_1 e^{j\pi/4}$ are ($\frac{\sqrt{2}}{2}, \frac{\sqrt{2}}{2}$), and the coordinates of the constellation point s2 corresponding to $a_2 e^{j\pi/4}$ are ($\frac{3\sqrt{2}}{2}, \frac{3\sqrt{2}}{2}$). It can be understood that the two-dimensional coordinates of other constellation points can be calculated in the form of complex numbers corresponding to the constellation points in the second constellation model, which will not be further described here.

Hence, the two-dimensional coordinates of the sixteen constellation points can include the following:

$$\left(\frac{\sqrt{2}}{2}, \frac{\sqrt{2}}{2}\right), \left(\frac{3\sqrt{2}}{2}, \frac{3\sqrt{2}}{2}\right), \left(\frac{5\sqrt{2}}{2}, \frac{5\sqrt{2}}{2}\right), \left(\frac{7\sqrt{2}}{2}, \frac{7\sqrt{2}}{2}\right),$$

$$\left(-\frac{\sqrt{2}}{2}, -\frac{\sqrt{2}}{2}\right), \left(-\frac{3\sqrt{2}}{2}, -\frac{3\sqrt{2}}{2}\right), \left(-\frac{5\sqrt{2}}{2}, -\frac{5\sqrt{2}}{2}\right), \left(-\frac{7\sqrt{2}}{2}, -\frac{7\sqrt{2}}{2}\right),$$

$$\left(\frac{\sqrt{2}}{2}, -\frac{\sqrt{2}}{2}\right), \left(\frac{3\sqrt{2}}{2}, -\frac{3\sqrt{2}}{2}\right), \left(\frac{5\sqrt{2}}{2}, -\frac{5\sqrt{2}}{2}\right), \left(\frac{7\sqrt{2}}{2}, -\frac{7\sqrt{2}}{2}\right),$$

$$\left(-\frac{\sqrt{2}}{2}, \frac{\sqrt{2}}{2}\right), \left(-\frac{3\sqrt{2}}{2}, \frac{3\sqrt{2}}{2}\right), \left(-\frac{5\sqrt{2}}{2}, \frac{5\sqrt{2}}{2}\right), \left(-\frac{7\sqrt{2}}{2}, \frac{7\sqrt{2}}{2}\right)$$

When it is necessary to normalize the power of the second constellation model, each of the two-dimensional coordinates of the sixteen constellation points corresponding to the second constellation model can be multiplied by the same normalization factor (e.g., *1/sqrt(84))*.

EXAMPLE EMBODIMENT TEN

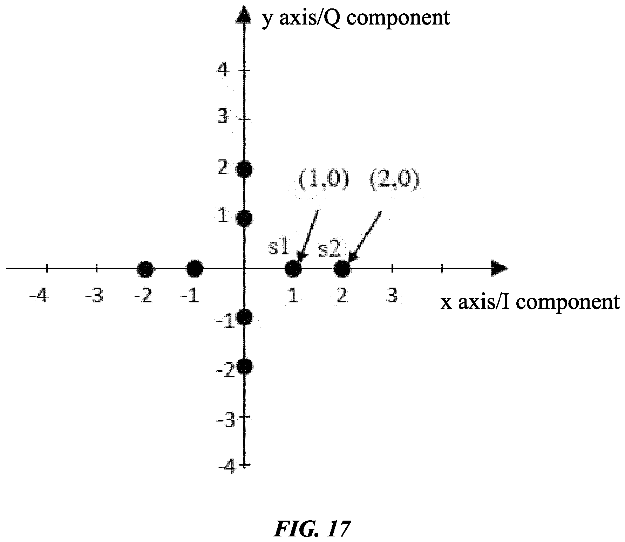

FIG. 17 shows a case where the value of $\Delta$ satisfies $\Delta = 0$. As shown in FIG. 17, the second constellation model is a cross-shaped constellation diagram, and the value of M2 is 1, that is, the second constellation model can be used to modulate three bits of information in the data packet to obtain one modulation symbol. Since $N2 = 2^{M2}$, and correspondingly $N2 = 2$, thus, the second constellation model is a cross-shaped constellation diagram including eight constellation points. The value of d is 1, that is, the scaling amount of the cross-shaped constellation diagram is 1. The value of $\theta$ is 0, that is, the rotation amount of the cross-shaped constellation is 0. In other words, the constellation points in the cross-shaped constellation diagram are distributed on the x axis (I component) and the y axis (Q component). Then, it can be known from $a_n = 2n - 1$ that, $a_1 = 1$, and $a_2 = 2$. Since $e^{j0} = \cos 0 + j \sin 0 = 1$, and $a_1 e^{j0} = 1$, and $a_2 e^{j0} = 2$ can be determined, so the coordinates of the constellation point $s1$ corresponding to $a_1 e^{j0}$ are (1,0), and the coordinates of the constellation point s2 corresponding to $a_2 e^{j0}$ are (2,0). It can be understood that the two-dimensional coordinates of other constellation points can be calculated in the form of complex numbers corresponding to the constellation points in the second constellation model, which will not be further described here.

Hence, the two-dimensional coordinates of the eight constellation points can include the following:

$$(1,0), (2,0),$$

$$(0,1), (0,2),$$

$$(-1,0), (-2,0),$$

$$(0,-1), (0,-2)$$

When it is necessary to normalize the power of the second constellation model, each of the two-dimensional coordinates of the eight constellation points corresponding to the second constellation model can be multiplied by the same normalization factor (e.g., *1/sqrt(5))*.

EXAMPLE EMBODIMENT ELEVEN

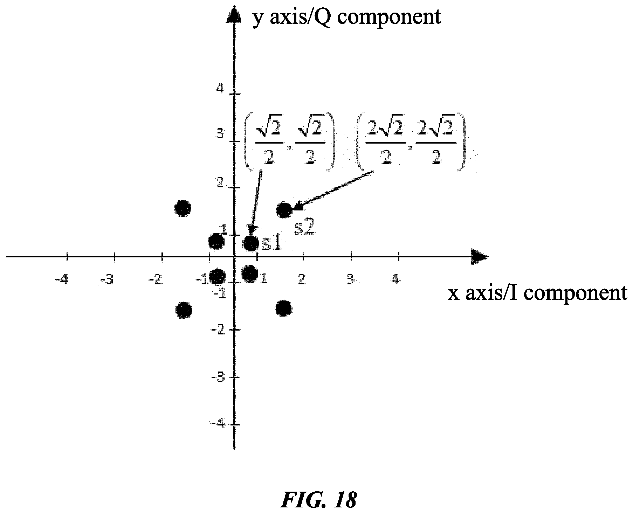

FIG. 18 shows a case where the value of $\Delta$ satisfies $\Delta = 0$. As shown in FIG. 18, the second constellation model is a cross-shaped constellation diagram, the value of *M2* is 1, that is, the second constellation model can be used to modulate three bits of information in the data packet to obtain one modulation symbol. Since N2 = $2^{M2}$, thus, N2 = 2. Hence, the second constellation model is a cross-shaped constellation diagram including eight constellation points. The value of d is 1, that is, the scaling amount of the cross-shaped constellation diagram is 1. The value of $\theta$ is $\pi/4$, that is, the rotation amount of the cross-shaped constellation diagram is $\pi/4$. In other words, half of the constellation points in the cross-shaped constellation diagram are distributed on the line passing through the origin and angled 45° with the positive side of x axis, and the other half of the constellation points in the cross-shaped constellation diagram are distributed on the line passing through the origin and angled 135° with the positive side of x axis. Then, it can be seen from $a_n$ = 2n - 1 that, $a_1$ = 1, and $a_2$ = 2, then, $a_1 e^{j\pi/4} = $ $e^{j\pi/4} = \frac{\sqrt{2}}{2} + \frac{\sqrt{2}}{2}j$ , and $a_2 e^{j\pi/4} = 2e^{j\pi/4} = \sqrt{2} + \sqrt{2}j$ , therefore, the coordinates of the constellation point s1 corresponding to $a_1 e^{j\pi/4}$ are ( $\frac{\sqrt{2}}{2}, \frac{\sqrt{2}}{2}$ ), and the coordinates of the constellation point s2 corresponding to $a_2 e^{j\pi/4}$ are ( $\frac{2\sqrt{2}}{2}, \frac{2\sqrt{2}}{2}$ ). It can be understood that the two-dimensional coordinates of other constellation points can be calculated in the form of complex numbers corresponding to the constellation points in the second constellation model, which will not be further described here.

Thus, the complex forms corresponding to the eight constellation points in the second constellation model include the following:

$$a_1 e^{j\pi/4} = \frac{\sqrt{2}}{2} + \frac{\sqrt{2}}{2}j, a_2 e^{j\pi/4} = \frac{2\sqrt{2}}{2} + \frac{2\sqrt{2}}{2}j,$$

$$a_1 e^{j3\pi/4} = -\frac{\sqrt{2}}{2} + \frac{\sqrt{2}}{2}j, a_2 e^{\frac{j3\pi}{4}} = -\frac{2\sqrt{2}}{2} + \frac{2\sqrt{2}}{2}j,$$

$$a_1 e^{j5\pi/4} = -\frac{\sqrt{2}}{2} - \frac{\sqrt{2}}{2}j, a_2 e^{\frac{j5\pi}{4}} = -\frac{2\sqrt{2}}{2} - \frac{2\sqrt{2}}{2}j,$$

$$a_1 e^{j7\pi/4} = \frac{\sqrt{2}}{2} - \frac{\sqrt{2}}{2}j, a_2 e^{\frac{j7\pi}{4}} = \frac{2\sqrt{2}}{2} - \frac{2\sqrt{2}}{2}j$$

Therefore, the second constellation model can be a cross-shaped constellation diagram with eight constellation points as shown in FIG. 18. The constellation diagram with the value of $\theta$ of $\pi/4$ can be obtained by rotating the corresponding constellation diagram with the value of $\theta$ of 0 by 45°. The two-dimensional coordinates of the eight constellation points include the following:

$$\left(\frac{\sqrt{2}}{2}, \frac{\sqrt{2}}{2}\right), \left(\frac{2\sqrt{2}}{2}, \frac{2\sqrt{2}}{2}\right),$$

$$\left(-\frac{\sqrt{2}}{2}, \frac{\sqrt{2}}{2}\right), \left(-\frac{2\sqrt{2}}{2}, \frac{2\sqrt{2}}{2}\right),$$

$$\left(-\frac{\sqrt{2}}{2}, -\frac{\sqrt{2}}{2}\right), \left(-\frac{2\sqrt{2}}{2}, -\frac{2\sqrt{2}}{2}\right),$$

$$\left(\frac{\sqrt{2}}{2}, -\frac{\sqrt{2}}{2}\right), \left(\frac{2\sqrt{2}}{2}, -\frac{2\sqrt{2}}{2}\right)$$

## EXAMPLE EMBODIMENT TWELVE

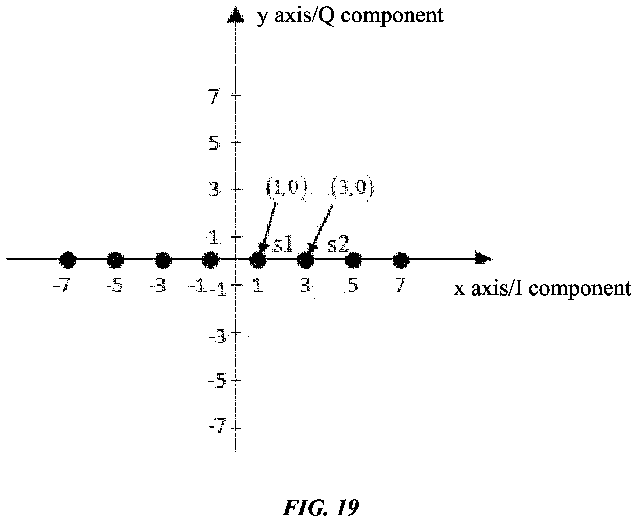

Referring to FIG. 19, the first constellation model is a PAM constellation diagram, and the value of $M1$ is 2, that is, the first constellation model can be used to modulate three bits of information in the data packet to obtain one modulation symbol. Since $N = 2^M$ and correspondingly N1 = 4, thus, the first constellation model is a PAM constellation diagram including eight constellation points. The value of d is 1, that is, the scaling amount of the PAM constellation diagram is 1. The value of $\theta$ is 0, that is, the rotation amount of the PAM constellation diagram is 0. In other words, the constellation points in the PAM constellation diagram are distributed on the x axis (I component). Then, from $a_n = (2n - 1 + \Delta)d$, it can be known that if $\Delta = 0$, that is $a_n = 2n - 1$, then, $a_1 = 1$, and $a_1 = 3$. Then, $a_1 e^{j0} = e^{j0} = 1$, and $a_2 e^{j0} = 3e^{j0} = 3$. Therefore, the coordinates of the constellation point s1 corresponding to $a_1 e^{j0}$ are (1,0), and the coordinates of the constellation point s2 corresponding to $a_2 e^{j0}$ are (3,0). It can be understood that the two-dimensional coordinates of other constellation points can be calculated in the form of complex numbers corresponding to the constellation points in the first constellation model, which will not be further described here.

Hence, the two-dimensional coordinates of the eight constellation points can include the following:

$$(1,0), (3,0), (5,0), (7,0),$$

$$(-1,0), (-3,0), (-5,0), (-7,0)$$

When it is necessary to normalize the power of the first constellation model, each of the two-dimensional coordinates of eight constellation points corresponding to the first constellation model can be multiplied by the same normalization factor (e.g., *1/sqrt(84))*.

## EXAMPLE EMBODIMENT THIRTEEN

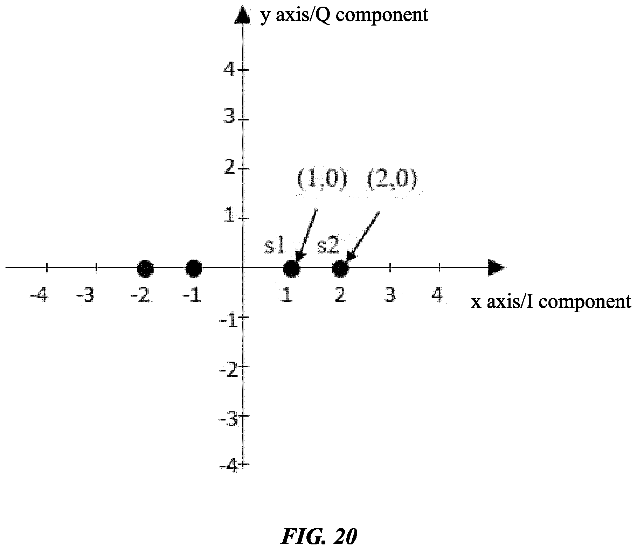

FIG. 20 shows a case where the value of $\Delta$ satisfies $\Delta = 0$. As shown in FIG. 20, the first constellation model is a cross-shaped constellation diagram, the value of M1 is 1, that is, the first constellation model can be used to modulate two bits of information in the data packet to obtain one modulation symbol. Since N1 = $2^{M1}$, and correspondingly $N1 = 2$, thus, the first constellation model is a PAM constellation diagram including four constellation points. The value of d is 1, that is, the scaling amount of the PAM constellation diagram is 1. The value of $\theta$ is 0, that is, the rotation amount of the PAM constellation diagram is 0. In other words, the constellation points in the PAM constellation are distributed on the x axis (I component). Then, it can be seen from $a_n = 2n - 1$ that, $a_2 = 2$. Then, $a_1 e^{j0} = e^{j0} = 1$, and $a_2 e^{j0} = 2e^{j0} = 2$. Therefore, the coordinates of the constellation point s1 corresponding to $a_1 e^{j0}$ are (1,0), and the coordinates of the constellation point s2 corresponding to $a_2 e^{j0}$ are (2,0). It can be understood that the two-dimensional coordinates of other constellation points can be calculated in the form of complex numbers corresponding to the constellation points in the first constellation model, which will not be further described here.

Hence, the two-dimensional coordinates of the four constellation points can include the following:

$$(1,0), (2,0),$$

$$(-1,0), (-2,0)$$

When it is necessary to normalize the power of the first constellation model, each of the two-dimensional coordinates of four constellation points corresponding to the first constellation model can be multiplied by the same normalization factor (e.g., *1/sqrt(5))*.

It can be understood that, the coordinates corresponding to each constellation point in the second constellation model include the following:

$$(a_1 \cos\theta, a_1 \sin\theta), (a_2 \cos\theta, a_2 \sin\theta), \cdots, (a_n \cos\theta, a_n \sin\theta),$$

$$(a_1 \cos(\theta + \pi/2), a_1 \sin(\theta + \pi/2)), (a_2 \cos(\theta + \pi/2), a_2 \sin(\theta + \pi/2)), \cdots, \left(a_n \cos\left(\theta + \frac{\pi}{2}\right), a_n \sin\left(\theta + \frac{\pi}{2}\right)\right),$$

$$(a_1 \cos(\theta + \pi), a_1 \sin(\theta + \pi)), (a_2 \cos(\theta + \pi), a_2 \sin(\theta + \pi)), \cdots, (a_n \cos(\theta + \pi), a_n \sin(\theta + \pi)),$$

$$(a_1 \cos(\theta + 3\pi/2), a_1 \sin(\theta + 3\pi/2)), (a_2 \cos(\theta + 3\pi/2), a_2 \sin(\theta + 3\pi/2)), \cdots, (a_n \cos(\theta + 3\pi/2), a_n \sin(\theta + 3\pi/2)).$$

According to trigonometric equations, the coordinates corresponding to each constellation point in the second constellation model can also be expressed as follows:

$$(a_1 \cos\theta, a_1 \sin\theta), (a_2 \cos\theta, a_2 \sin\theta), \cdots, (a_n \cos\theta, a_n \sin\theta)$$

$$(-a_1 \sin\theta, a_1 \cos\theta), (-a_2 \sin\theta, a_2 \cos\theta), \cdots, (-a_n \sin\theta, a_n \cos\theta)$$

$$(-a_1 \cos\theta, -a_1 \sin\theta), (-a_2 \cos\theta, -a_2 \sin\theta), \cdots, (-a_n \cos\theta, -a_n \sin\theta)$$

$$(a_1 \sin\theta, -a_1 \cos\theta), (a_2 \sin\theta, -a_2 \cos\theta), \cdots, (a_n \sin\theta, -a_n \cos\theta)$$

The trigonometric equations include the following:

$$\cos(\theta + \pi/2) = -\sin\theta$$

$$\sin(\theta + \pi/2) = \cos\theta$$

$$\cos(\theta + \pi) = -\cos\theta$$

$$\sin(\theta + \pi) = -\sin\theta$$

$$\cos(\theta + 3\pi/2) = \sin\theta$$

$$\sin(\theta + 3\pi/2) = -\cos\theta$$

It is worth noting that when the value of $\theta$ is 0, that is, the rotation amount of the cross-shaped constellation diagram is 0. The constellation points in the cross-shaped constellation diagram are distributed on the x axis and the y axis, therefore, the coordinates corresponding to each constellation point in the second constellation model can include the following:

$$(a_1, 0), (a_2, 0), \cdots, (a_n, 0),$$

$$(0, a_1), (0, a_2), \cdots, (0, a_n),$$

$$(-a_1, 0), (-a_2, 0), \cdots, (-a_n, 0),$$

$$(0, -a_1), (0, -a_2), \cdots, (0, -a_n).$$

It is worth noting that when the value of $\theta$ is $\pi/4$, that is, the rotation amount of the cross-shaped constellation

diagram is $\pi/4$, the constellation points in the cross-shaped constellation diagram are respectively distributed on the line passing through the origin and angled with 45° and the the line passing through the origin and angled with 135°, therefore, the coordinates corresponding to each constellation point in the second constellation model can include the following:

$$\left(\frac{\sqrt{2}}{2}a_1, \frac{\sqrt{2}}{2}a_1\right), \left(\frac{\sqrt{2}}{2}a_2, \frac{\sqrt{2}}{2}a_2\right), \cdots, \left(\frac{\sqrt{2}}{2}a_n, \frac{\sqrt{2}}{2}a_n\right),$$

$$\left(-\frac{\sqrt{2}}{2}a_1, \frac{\sqrt{2}}{2}a_1\right), \left(-\frac{\sqrt{2}}{2}a_2, \frac{\sqrt{2}}{2}a_2\right), \cdots, \left(-\frac{\sqrt{2}}{2}a_n, \frac{\sqrt{2}}{2}a_n\right),$$

$$\left(-\frac{\sqrt{2}}{2}a_1, -\frac{\sqrt{2}}{2}a_1\right), \left(-\frac{\sqrt{2}}{2}a_2, -\frac{\sqrt{2}}{2}a_2\right), \cdots, \left(-\frac{\sqrt{2}}{2}a_n, -\frac{\sqrt{2}}{2}a_n\right),$$

$$\left(\frac{\sqrt{2}}{2}a_1, -\frac{\sqrt{2}}{2}a_1\right), \left(\frac{\sqrt{2}}{2}a_2, -\frac{\sqrt{2}}{2}a_2\right), \cdots, \left(\frac{\sqrt{2}}{2}a_n, -\frac{\sqrt{2}}{2}a_n\right)$$

EXAMPLE EMBODIMENT FOURTEEN

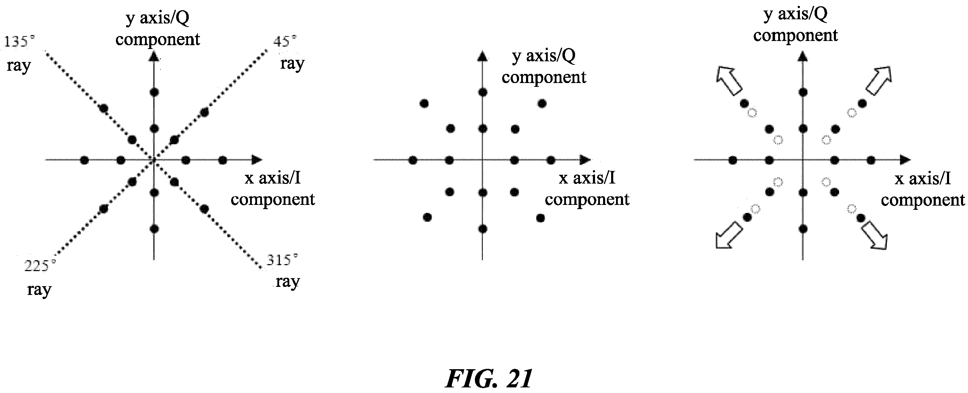

FIG. 21 depicts a schematic diagram showing a third constellation model according to an embodiment of the present disclosure. The third constellation model can be understood as an 8-arm constellation diagram. The constellation points in the 8-arm constellation diagram corresponding to the coordinate system on the left in FIG. 21 are distributed on the line passing through the X axis (i.e. I component) including the positive side and the negative side, the line passing through the Y axis (i.e. Q component) including the positive side and the negative side, the line passing through the origin and angled with 45°, the line passing through the origin and angled with 135°, the line passing through the origin and angled with 225°, and the line passing through the origin and angled with 315° respectively. For the third constellation model, the case where $b_n = a_n$ can correspond to the 8-arm constellation diagram corresponding to the middle coordinate system in FIG. 21, and the case where $b_n = a_n + \beta$ can correspond to the 8-arm constellation diagram corresponding to the right coordinate system in FIG. 21.

It can be understood that the 8-arm constellation corresponding to the right coordinate system in FIG. 21 can be formed by moving the constellation points of four arms (lines passing through the origin angled with 45°, 135°, 225° and 315°) in the 8-arm constellation diagram corresponding to the middle coordinate system in FIG. 21, further away from the origin, such that the constellation points of the constellation diagram more evenly distributed and improve the demodulation performance.

EXAMPLE EMBODIMENT FIFTEEN

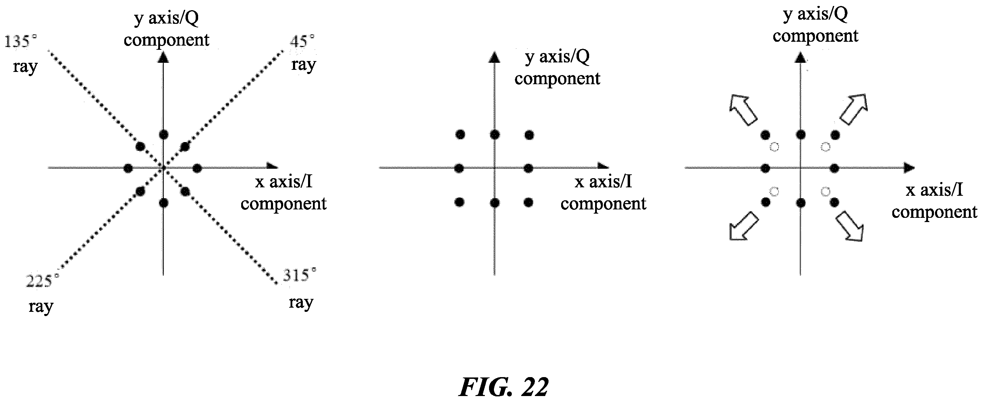

FIG. 22 depicts a schematic diagram showing a third constellation model according to an embodiment of the present disclosure. The third constellation model can be understood as an 8-arm constellation diagram. When M3 = 0, the modulation symbol is obtained by modulating three bits of information in a data packet according to the third constellation model. And from $N3 = 2^{M3}$, it can be obtained $N3 = 1$. Therefore, the third constellation model is an 8-arm constellation diagram including eight constellation points. The constellation points in the 8-arm constellation diagram corresponding to the coordinate system on the left in FIG. 22 are distributed on the line passing through the X axis (i.e. I component) including the positive side and the negative side, the line passing through the Y axis (i.e. Q component) including the positive side and the negative side, the line passing through the origin and angled with 45°, the line passing through the origin and angled with 135°, the line passing through the origin and angled with 225°, and the line passing through the origin and angled with 315° respectively. For the third constellation model, the case where $b_n = a_n$ can correspond to the 8-arm constellation diagram corresponding to the left coordinate system in FIG. 22, and the case where $b_n = a_n + \beta$ can correspond to the 8-arm constellation diagram corresponding to the middle or right coordinate system in FIG. 22.

It can be understood that the 8-arm constellation diagram corresponding to the right coordinate system in FIG. 22 can be formed by moving the constellation points of four arms (lines passing through the origin angled with 45°, 135°, 225° and 315°) in the 8-arm constellation diagram corresponding to the left coordinate system in FIG. 22, further away from the origin, such that the constellation points of the constellation diagram more evenly distributed and improve the demodulation performance.

The method for information transmission according to the above embodiments is illustrated below by taking extremely sparse pilot as an example.

In an embodiment, a set of demodulation reference signals (DMRS) that contains 12 reference signals is defined. The demodulation reference signals can also be called demodulation reference signal ports (DMRS ports), that is, a set of 12 demodulation reference signal ports is defined.

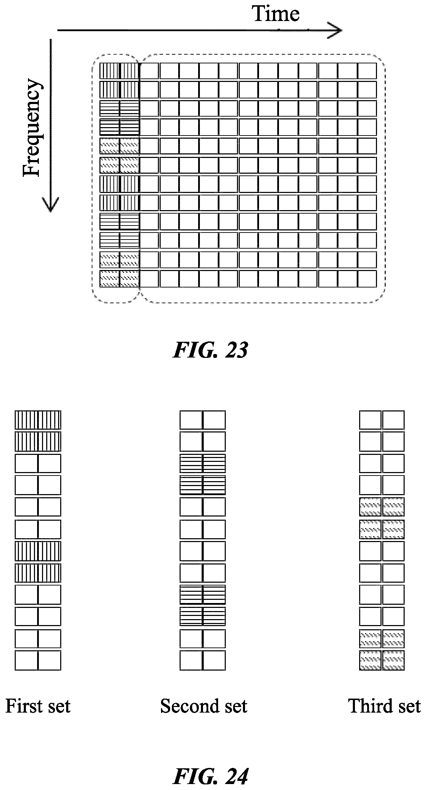

FIG. 23 depicts is a schematic diagram showing the defining of a Physical Resource Blocks (PRB) according to an embodiment. As shown in FIG. 23, a PRB can be defined. The PRB includes 14 orthogonal frequency division multiplexing (OFDM) or, Discrete Fourier Transform-Spread-Orthogonal Frequency Division Multiplexing (DFT-S-OFDM) or Single-Carrier Frequency-Division Multiple Access (SC-FDMA) symbols in the time domain, and 12 subcarriers in the frequency domain. Each cell represents a subcarrier of an OFDM symbol, which is also called a Resource Element (RE), so the PRB contains 12×14=168 REs. Because the first two OFDM symbols are intended to carry the demodulation reference signal (DMRS), that is, the first two OFDM symbols are served as the reference signal (DMRS) area, the resource overhead by the DMRS is 1/7. The area excluding the reference signal (DMRS) area is the modulation symbol area.

FIG. 24 depicts a schematic diagram showing the defining of a DMRS according to an embodiment, twelve DMRS can be divided into three groups from the position of occupied resource element (RE), and the non-zero value symbols (or called non-zero signals, available signals, etc.) of the first set of DMRS are carried over first REs. The four DMRS ports are distinguished by OCC codes. The non-zero symbols of the second set of DMRS are carried over second REs. The four DMRS ports can be distinguished by OCC codes. The non-zero symbols of the third set of DMRS are carried over third REs. The four DMRS ports are distinguished by OCC codes. In FIG. 24, the cells where the first REs are located are filled with vertical lines, the cells where the second REs are located are filled with horizontal lines, and the cells where the third REs are located are filled with wavy lines. Each set of DMRS has a value of 0 (i.e., no signal) on unoccupied and unfilled REs. Thus, for each set of DMRS, not all the REs in the reference signal area carries a signal. However, it is still not possible for a first communication node (such as a terminal device) to use the unoccupied and unfilled REs in the reference signal area for the reference signal ports which the node uses, even if they are unoccupied. Therefore, the resource overhead occupied by reference signals (or reference signal ports) in each set of DMRS is also 1/7.

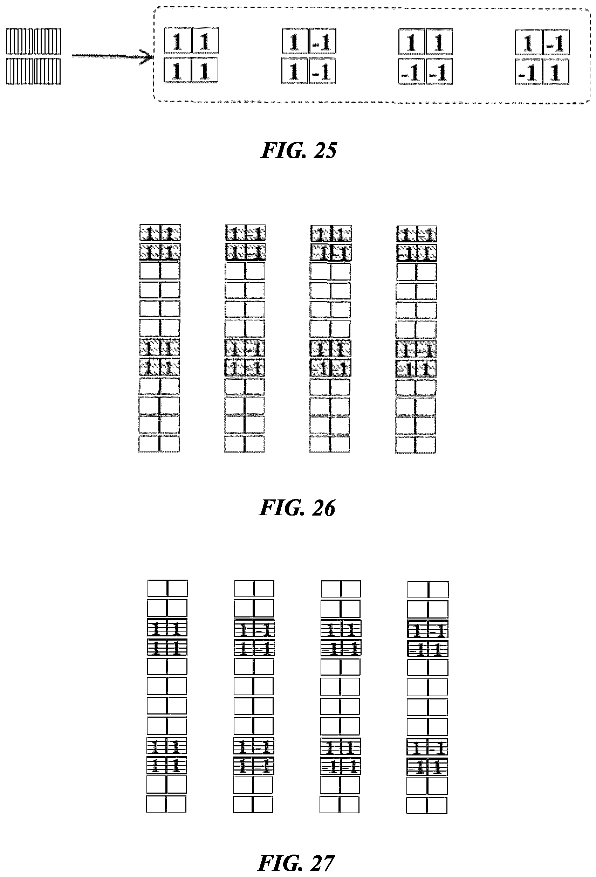

If the non-zero value symbols of each set of DMRS are carried over the same REs, different reference signals can only be distinguished by the non-zero value symbols with different values, for example, different reference signal ports can be identified by time-domain OCC codes and frequency-domain OCC codes. FIG. 25 depicts a schematic diagram showing identifying different reference signal ports through OCC codes according to an embodiment. Taking the first set of four DMRS in FIG. 24 as an example, the four DMRS ports, that is, the set of DMRS ports, can be identified by jointly using two-bit OCC codes in the time domain [1,1], and [1, -1] and two-bit OCC codes in the frequency domain [1,1], and [1,-1]. That is, the different DMRS ports can be identified by carrying different OCC codes over the first REs. The cases in the second set of four reference signals and the third set of four reference signals are similar. Therefore, a total of 12 DMRS, that is, 12 DMRS ports, of this defined set of DMRS can be obtained.

FIG. 26 depicts a schematic diagram showing the defining of DMRS with OCC codes according to an embodiment. For the first set of four DMRS shown in FIG. 24, the four DMRS ports can be identified by jointly using two-bit OCC codes in the time domain [1,1], and [1, -1] and two-bit OCC codes in the frequency domain [1,1], and [1, -1]. As shown in FIG. 26, the figures of the shaded parts in the first column to the third column are "1" from top to bottom. The figures of the shaded part in the fourth column are all "-1" from top to bottom. The figures of the shaded part in the fifth to seventh columns are "1", "-1", "1" and "-1" from top to bottom respectively. The figures of the shaded part in the eighth column are "-1", "1", "-1" and "1" from top to bottom respectively.

FIG. 27 depicts a schematic diagram of the defining of DMRS by OCC codes according to another embodiment. For the second set of four DMRS shown in FIG. 24, the four DMRS ports can be identified by jointly using two-bit OCC codes in the time domain [1,1], and [1, -1] and two-bit OCC codes in the frequency domain [1,1], and [1, -1]. As shown in FIG. 27, the figures of the shaded parts in the first column to the third column are "1" from top to bottom. The figures of the shaded part in the fourth column are all "-1" from top to bottom. The figures of the shaded part in the fifth to seventh columns are "1", "-1", "1" and "-1" from top to bottom respectively. The figures of the shaded part in the eighth column are "-1", "1", "-1" and "1" from top to bottom respectively.

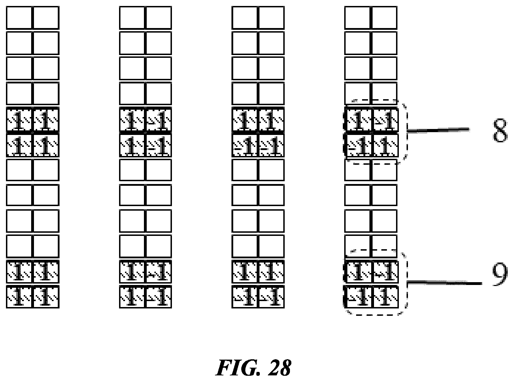

FIG. 28 depicts a schematic diagram of the defining of DMRS by OCC codes according to another embodiment. As shown in FIG. 28, the figure "8" indicates the first reference signal elements, and the figure "9" indicates the second reference signal elements. For the third set of four DMRS shown in FIG. 24, the four DMRS ports can be identified by jointly using two-bit OCC codes in the time domain [1,1], and [1, -1] and two-bit OCC codes in the frequency domain [1,1], and [1, -1]. As shown in FIG. 28, the figures of the shaded parts in the first column to the third column are "1" from top to bottom. The figures of the shaded part in the fourth column are all "-1" from top to bottom. The figures of the shaded part in the fifth to seventh columns are "1", "-1", "1" and "-1" from top to bottom respectively. The figures of the shaded part in the eighth column are "-1", "1", "-1" and "1" from top to bottom respectively.

In the present disclosure, the reference signals carried over several adjacent REs in time domain and frequency domain can be called one Reference Signal Element (RSE). For example, in FIGS. 23 to 28, the reference signals carried over the four consecutive REs in time-frequency domain are called one RSE. Figuratively, the reference signals across a "grid" of four shaded cells is one RSE. From the function of channel estimation, one RSE not only consists of adjacent REs in time domain or frequency domain, but also has a feature that each RSE can estimate a channel value when using reference signals for channel estimation.

According to this definition, as shown in FIGS. 23 to 28, in the defined sets of DMRS, each reference signal has two RSE within one PRB bandwidth, so two channel values at one PRB bandwidth (that is, within 12 subcarrier bandwidths) can be estimated. In addition, the channel values of 12 subcarriers in one PRB bandwidth can be obtained by interpolation of the estimated values of these RSE.

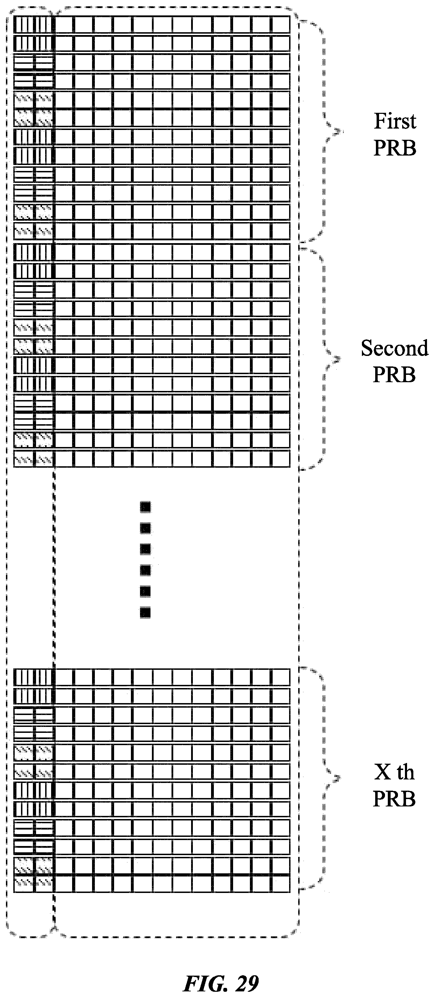

FIG. 29 depicts a schematic diagram showing a PRB-based transmission according to an embodiment. If one transmission contains $X$ number of PRB, then 12 DMRS (or 12 DMRS ports) in the sets of reference signals are as shown in FIG. 29, and each reference signal has $2 \times X$ number of RSE, so the channel values at every $2 \times X$ interval in the whole transmission bandwidth can be estimated, and then the channel values of all $12 \times X$ subcarriers in the transmission bandwidth can be obtained by interpolation.

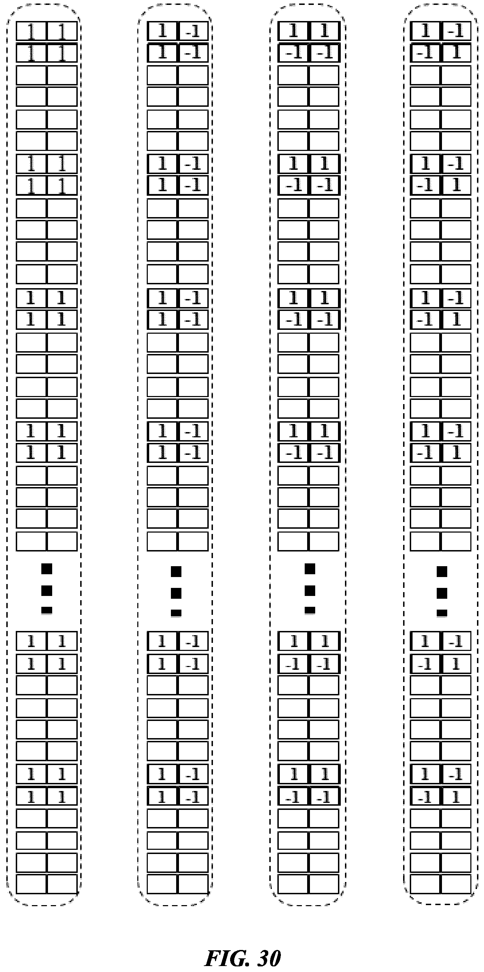

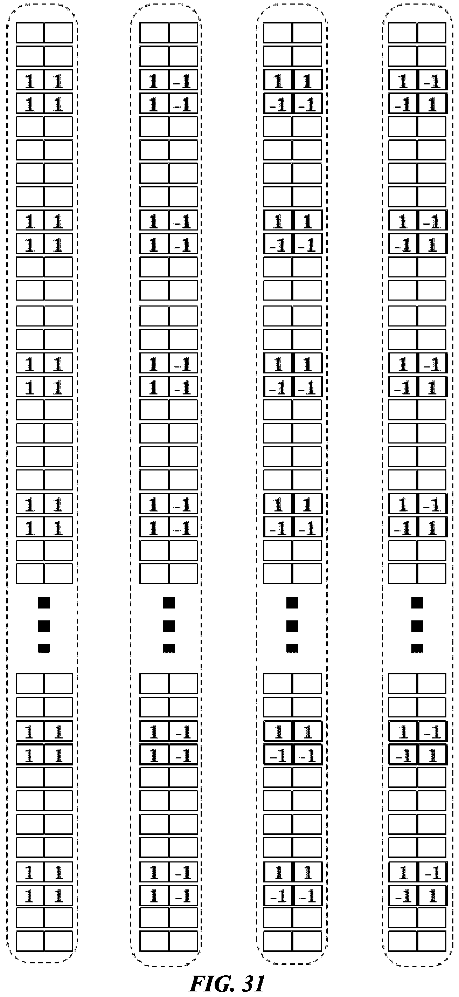

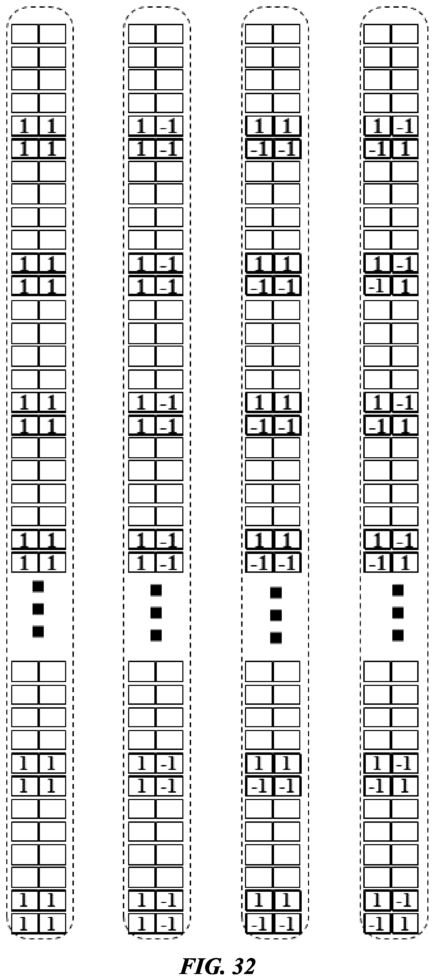

Based on the above embodiment(s), the 12 DMRS can be grouped into three groups from the position of occupied RE. FIG. 30 depicts a schematic diagram showing the defining of DMRS according to another embodiment. As shown in FIG. 30, the four DMRS of the first set can be identified by OCC codes. FIG. 31 depicts a schematic diagram showing the defining of DMRS according to another embodiment. As shown in FIG. 31, the four DMRS of the second set can be identified by OCC codes. FIG. 32 depicts a schematic diagram showing the defining of DMRS according to another embodiment. As shown in FIG. 32, the four DMRS of the third set can be identified by OCC codes.

It can be seen that in order to estimate the channel of the entire transmission bandwidth of each terminal device accessed in a network, the resources occupied by the DMRS (or pilot) are relatively large, in other words, the distribution of the DMRS in the entire transmission bandwidth has a certain density and cannot be too sparse. In the embodiments shown in FIGS. 20 to 32, the density of DMRS in the whole transmission bandwidth is 2 reference signals/RSE per PRB.

For the system, the overhead of reference signals is 1/7, that is to say, the system pays 1/7 of the resources and can only design with 12 DMRS. For information transmission in the connection-free state, the likelihood of collision of reference signals independently selected by any two terminal devices is 1/12, which shows that the likelihood of collision is very high. Therefore, the DMRS will seriously limit the number of terminal devices that transmit information in a connection-free state. For information transmission in SPS scenario, 12 DMRS can only support 12 terminal devices, so it can be seen that DMRS will seriously limit the number of terminal devices transmitting information in SPS scenario.

If the reference signals also need to estimate a certain Frequency Offset, the occupied resources of each reference signal will continue to increase, in other words, the density of each reference signal in the transmission signal will continue to increase. For example, if the reference signal is repeated in the time domain to estimate the frequency offset, the resource occupied by the reference signal will be doubled, that is, the resource overhead will be 2/7. That is to say, in order to estimate the frequency-selective channel and frequency offset, the system can only design with 12 DMRS with 2/7 resources. If the system also needs to cope with a certain Timing Offset, the resources occupied by reference signals will continue to increase. For example, the system will pay 3/7 or even 4/7 overhead in order to design with 12 DMRS. With such a large overhead, only a small number of reference signals (that is, reference signal ports) can be obtained. It can be seen that the likelihood of collision of reference signals transmitted in the Connection-free state is high, and the number of terminal devices transmitting information in SPS scenarios will be limited.

If the multipath channel changes faster in the frequency domain, that is, the frequency selective characteristics are more obvious, in order to ensure the accuracy of channel estimation, the density of DMRS in the frequency domain will continue to increase, and each set of DMRS has three RSE in each PRB bandwidth (figuratively three grids), so there can be three estimated values on each PRB and $3 \times X$ number of estimated values on $X$ number of PRBs. Then, the channels of all subcarriers of $X$ number of PRBs can be obtained by linear interpolation. The reference signals also occupy 1/7 of the transmission resources, but only 8 DMRS (8 DMRS ports) can be identified, which is less than the number of DMRS defined above. It can be seen that the channel estimation capability is usually inversely proportional to the number of reference signals.

Therefore, the problem faced by reference signals applied to connectionless transmission scenarios and SPS-based information transmission scenarios is that the reference signals must estimate the frequency-selective channel and time-frequency offset of the entire transmission channel and identify the terminal device. Therefore, the time-frequency resources occupied by the reference signals increase exponentially, which leads to a serious shortage of reference signals under certain resources, and in turn affects the number of terminal devices that can transmit information in connectionless transmission scenarios and SPS-based information transmission scenarios.

The main starting point of the present disclosure is to greatly reduce the task of reference signals, so that the resources occupied by each reference signal can be minimized. That is, the density of each reference signal in the transmission signal is made as sparsest as possible, and then the number of reference signals can be maximized, and finally the number of terminal devices for information transmission in connectionless transmission scenarios and SPS-based information transmission scenarios can be increased.

Specifically, according to an embodiment of the present disclosure, the channel of the entire transmission bandwidth and the time-frequency offset are estimated through data-based channel estimation technology (not based on reference signal) through the characteristics of the data itself, such as the geometric characteristics of the constellation diagram of the modulation symbols. In other words, it is not necessary to estimate the channel and time-frequency offset of the entire transmission bandwidth with a reference signal. Taking the channel estimation as an example, in order to simplify the description, taking the Block Flat Fading channel as an example, the rotation and scaling amount of the constellation diagram can be estimated by the four sectioning methods as discussed in the above embodiments. That is, the block flat fading channel can be estimated by the four sectioning methods discussed in the above embodiments, and which will not be repeated here.

Therefore, in the embodiments of the present disclosure, the tasks of reference signals are much lower than those in the related schemes, so the resources occupied by each reference signal in the embodiments of the present disclosure are less than those occupied by each reference signal in the related schemes. Therefore, under a certain overhead, the number of reference signals in the present disclosure is more than that in the related schemes.

On the other hand, when a base station has multiple receiving antennas, for example, R number of receiving antennas, theoretically, the R number of receiving antennas can provide very strong spatial capability, thereby improving the performance of multi-terminal device access. In order to obtain the spatial domain capability, in the present disclosure, it is proposed that "extremely sparse" reference signals can be used to estimate the spatial channel $h_k=[h_{k1}, h_{k2}, \cdots, h_{kR}]^t$ experienced by each terminal signal, where t is the transpose operator, and then the spatial channel can be used to obtain the spatial combining weight, and then the received signals of R number of receiving antennas can be spatially combined. In an example where the signals of a terminal device k are spatially combined to obtain modulation symbols $s_k = h_k' * y$, where $y= [y_{k1}, y_{k2},...,y_{kR}]^t$ is the received signals of the R number of receiving antennas, and $h_k'$ is conjugate transpose of $h_k$. Then the receiver estimates the channel of the whole transmission bandwidth experienced by the signals of terminal device k and estimates the time frequency offset by means of the spatially combined modulation symbols, then performs the channel and time frequency offset compensation for the spatially combined modulation symbols $s_k$, and finally demodulates and decodes the modulation symbols with the channel and time frequency offset compensation.

Therefore, according to the present disclosure a reference signal is not required to estimate the channel in the whole transmission bandwidth, and to estimate the time frequency offset.

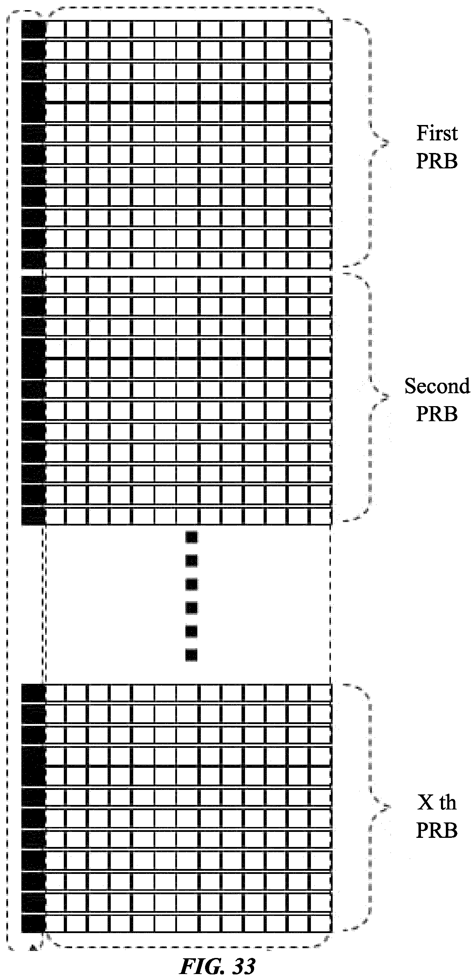

FIG. 33 depicts a schematic diagram showing the defining of a reference signal by a system. It is assumed that the reference signal occupies one OFDM symbol, one transmission contains time-frequency resources of X number of PRBs, and one PRB contains 14 OFDM (or DFT-S-OFDM or SC-FDMA) symbols in the time domain and 12 subcarriers in the frequency domain. The first OFDM symbol is employed to carry the DMRS, that is, the first OFDM symbol serves as an extremely sparse pilot area, and 1/14 of the resources (i.e., 12 ×X number of REs) are employed to transmit the reference signal. The area except the extremely sparse pilot area is the modulation symbol area.

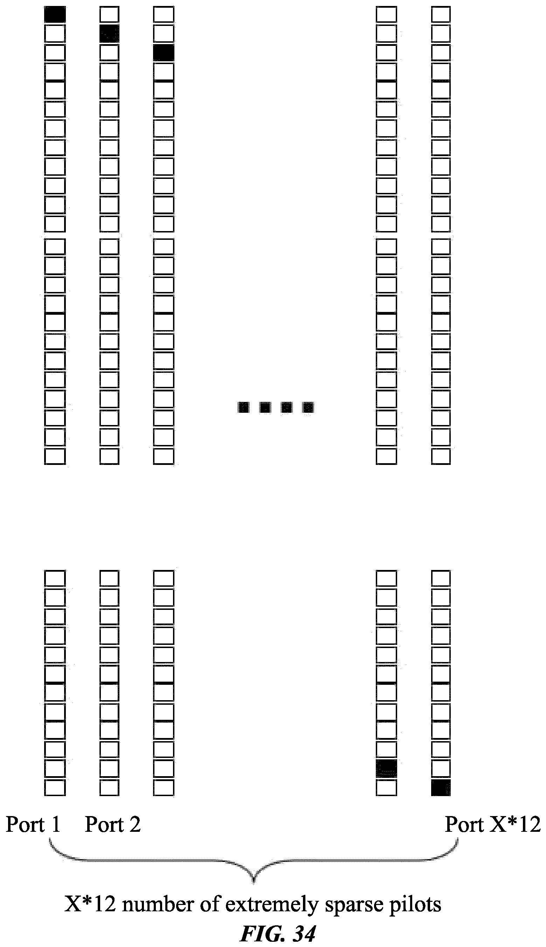

FIG. 34 depicts a schematic diagram showing defining of reference signals (i.e., extremely sparse pilots) according to another embodiment. Each reference signal only has a non-zero value symbol (non-zero signal or available signal) on one RE, and has no signals (i.e., the value is 0) on the other RE, so 1/14 of the reference signal area can be occupied for the overhead, and $12\times X$ number of reference signals can be identified. In particular, if there are 6 PRBs and the resource overhead of each PRB is 1/14 of the resource, $6\times12=72$ reference signals can be identified, which is much greater than the number of reference signals in NR systems (the number of reference signals in NR systems is 8 or 12, and the resource overhead occupied by the reference signals in NR systems is still 1/7).

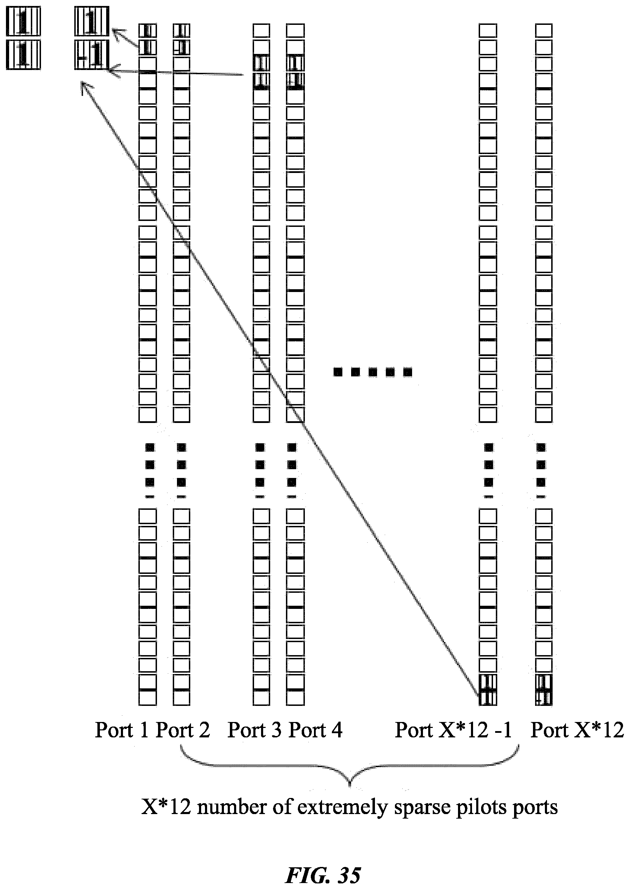

FIG. 35 depicts a schematic diagram showing defining of reference signals (i.e., extremely sparse pilot ports) according to another embodiment. Each reference signal defined by the system only has a non-zero value symbol (or a non-zero signal or an available signal) on two REs, and two reference signals can be identified by the 2 bits of OCC every two REs, and the rest RE have no signals (i.e., the value is 0), and thus 1/14 of the reference signal area can be occupied for the overhead and $12\times X$ number of reference signals can be identified. In particular, if there are 6 PRBs, and the resource overhead of each PRB is 1/14 of the resource, $6\times12=72$ reference signals can be identified, and the number of reference signals is much greater than that in NR systems (the number of reference signals in NR systems is 8 or 12). Therefore, the number of non-zero symbols of extremely sparse pilots is in positive proportion to the number of PRBs.

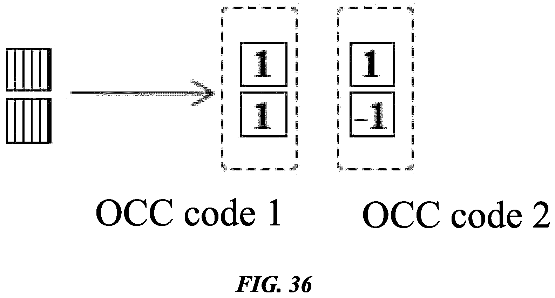

FIG. 36 depicts a schematic diagram showing the generating of DMRS ports according to an embodiment, where different DMRS ports are generated by carrying different OCC codes (such as OCC code 1 and OCC code 2) over two REs represented by two cells filled with vertical lines, as shown in FIG. 36.

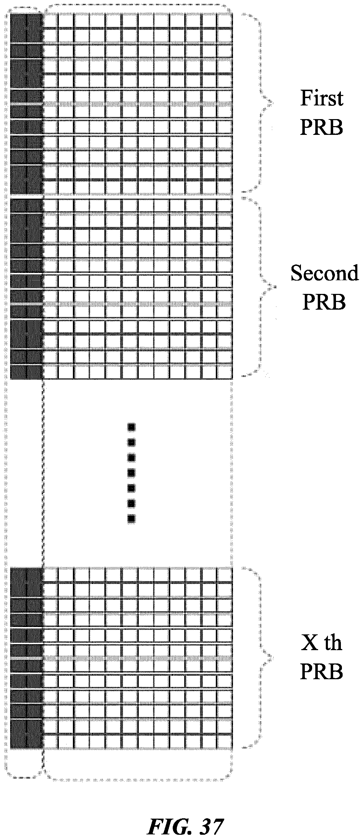

FIG. 37 depicts a schematic diagram showing defining of reference signal according to another embodiment, where the system-defined reference signal occupies 2 OFDM symbols.

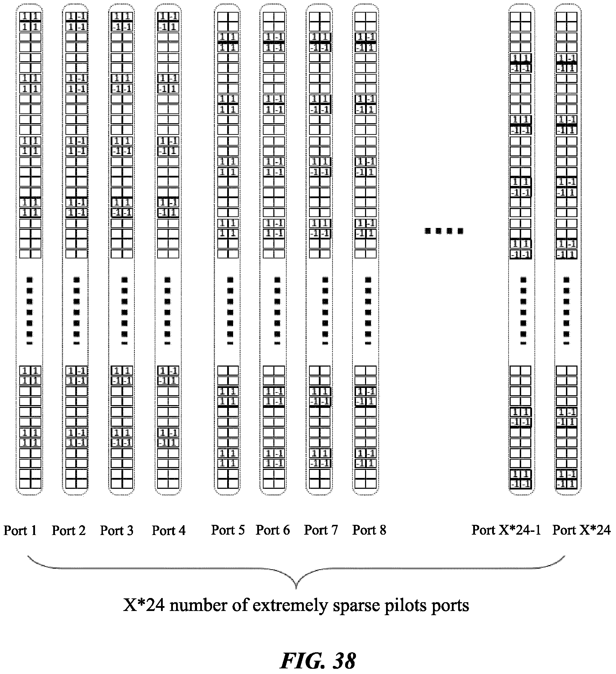

FIG. 38 depicts a schematic diagram showing defining of reference signal according to another embodiment. Each reference signal defined by the system only has a non-zero value symbol (or a non-zero signal or an available signal) on a set of four adjacent REs. For the case where four reference signals multiplex a set of four adjacent REs, the four reference signals can be identified by OCC codes. Therefore, when one transmission includes X number of PRBs, and each PRB occupies 1/7 of the reference signal area for the overhead, a total of 24 ×X number of reference signals can be identified. In particular, if one transmission includes 6 PRBs, and each PRB occupies 1/7 of the resource for overhead, then 6×24=144 reference signals can be identified. Hence, the number of reference signals is much greater than that in NR systems (the number of reference signals in the NR system is 8 or 12). At the same time, it shows that the number of extremely sparse pilots is in positive proportion to the number of PRBs.

It is worth noting that the numerical values shown in all the above embodiments are only exemplary and are not limiting, and the numerical values can be adaptively adjusted according to actual situations.

It can be seen that the extremely sparse pilots are pilots with few (e.g., 1-4) non-zero elements (i.e., non-zero value symbols) in a preset pilot set. Therefore, the scheme of extremely sparse pilot can significantly increase the number of pilots without increasing the pilot overhead, and then significantly reduce the likelihood of pilot collision. In addition, the base station can estimate part of the information of the wireless channel from the extremely sparse pilots without estimating all the information of the wireless channel from the extremely sparse pilots, and the base station can further extract the channel information from the modulation symbols, and then use the channel information to complete the equalization of the modulation symbols.

It should be noted that the extremely sparse pilots are only used for spatial combining, but it cannot be used for channel equalization. Therefore, the extremely sparse pilots can be regarded as reference signals for spatial combining, and the present disclosure is not limited thereto.

It should also be noted that although the extremely sparse reference signals (i.e., extremely sparse pilots) shown in FIGS. 33, 34, 35 and 36 are all located at the first symbol of the transmission resource, or at the first symbol and the second symbol, the present disclosure does not limit the location of the extremely sparse reference signals, for example, the location of the extremely sparse reference signals can also be located in the middle of the transmission resource.

It can be understood that in the information transmission in all the above embodiments, the term information shall be interpreted broadly. That is, the information can be service data or information used for system control, i.e., signaling. Alternatively, the information may include bit data that needs to be transmitted, such as service bit data or signaling bit data, in which different English expressions such as message, information and payload can all represent information.

It can be understood that the first communication node in the above embodiments can be a terminal device, for example, a mobile terminal such as a mobile phone, a smart phone, a notebook computer, a Personal Digital Assistant (PDA), a tablet personal computer (PAD), a navigation device, or the like, and can also be an Internet of Things device terminal, etc., and the present disclosure is not limited thereto.

It can be understood that the second communication node in the above embodiments can be a base station, a receiver, an access point, or the like, and the present disclosure is not limited thereto.

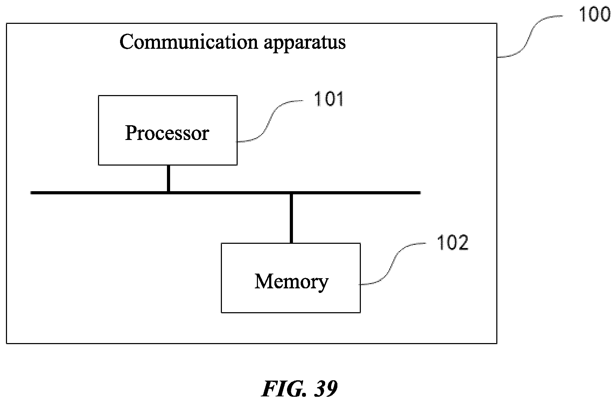

Referring to FIG. 39, a communication apparatus 100 is provided according to an embodiment of the present disclosure. The communication apparatus 100 includes at least one processor 101 and at least one memory 102 for storing at least one program.

The processor 101 and the memory 102 may be connected by a bus or other means.

As a non-transitory computer-readable storage medium, the memory 102 can be configured to store non-transitory software programs and non-transitory computer-executable programs. In addition, the memory 102 can include high-speed random-access memory and non-transitory memory, such as at least one disk memory device, flash memory device, or other non-transitory solid-state memory devices. In some implementations, the memory 102 may include memories remotely located relative to the processor 101, and these remote memories may be connected to the processor 101 through a network. Examples of the above networks include, but are not limited to, the Internet, intranet, local area network, mobile communication network, and combinations thereof.

Non-transitory software programs and instructions for the method for information transmission in any one of the above embodiments are stored in a memory 102 which, when executed by a processor 101, causes the processor 101 to carry out the method for information transmission, e.g., S110 to S120 described in conjunction with FIG. 2, or S210 described in conjunction with FIG. 4.

The above-described device embodiments are only schematic, in which the units illustrated as separate components may or may not be physically separated, that is, the device may be located in one place or distributed over several network units. Some or all of the modules can be selected according to the practical needs to achieve the purpose of this embodiment.

According to an embodiment of the present disclosure, a computer-readable storage medium is provided, which stores a computer-executable instruction which, when executed by a processor or controller, for example, by a processor in the above-described device embodiment, causes the processor to carry out the operations of the method for information transmission as described in any one of the embodiments above, e.g., S110 to S120 described in conjunction with FIG. 2, or S210 described in conjunction with FIG. 4.

According to an embodiment of the present disclosure, a computer program product is provided. The computer program product includes a computer program, or a computer instruction stored in a computer-readable storage medium. A processor of a computer device can read the computer program or computer instruction from the computer-readable storage medium. The computer program or computer instruction which, when executed by the processor, causes the computer device to carry out the operations of the method for information transmission as described in any one of the embodiments above, e.g., S110 to S120 described in conjunction with FIG. 2, or S210 described in conjunction with FIG. 4.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable medium, which can include computer storage medium (or non-transitory medium) and communication medium (or transitory medium). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication medium usually contains computer-readable instructions, data structures, program modules or other data in modulated data signals such as carrier waves or other transmission mechanisms, and can include any information delivery media.

**Claims**

1.    A method for information transmission, applied to a first communication node, the method comprising:

determining a first number of extremely sparse pilots;
transmitting a data packet and the first number of extremely sparse pilots to a second communication node;
wherein the first number is greater than or equal to 1, and the data packet at least contains at least one modulation symbol;
the modulation symbol is acquired by modulating M1 + 1 number of bits of information in the data packet according to a first constellation model; the first constellation model comprises 2 * N1 number of constellation points, wherein M1 is an integer greater than or equal to 1; and N1 and M1 satisfy N1 = $2^{M1}$;
complex forms corresponding to the 2 * $N$1 number of constellation points in the first constellation model comprises:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

wherein $\pi$ denotes Pi; $j$ is an imaginary number; value of $j$ is equal to $\sqrt{-1}$ ; e denotes the natural logarithm; $\theta$ is a real number; $a_1$, $a_2$, $\cdots$, $a_{N1}$ are positive numbers and satisfy: $0 < a_1 < a_2 < ... < a_{N1}$;
or,
the modulation symbol is acquired by modulating M2 + 2 number of bits of information in the data packet according to a second constellation model; the second constellation model comprises 4 * N2 number of constellation points, wherein M2 is an integer greater than or equal to 1; and N2 and M2 satisfy $N2 = 2^{M2}$;
complex forms corresponding to the 4 * N2 number of constellation points in the second constellation model comprises:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

wherein $\pi$ denotes Pi; $j$ is an imaginary number; value of $j$ is equal to $\sqrt{-1}$; e denotes the natural logarithm; $\theta$ is a real number; $a_1, a_2, ..., a_{N2}$ and $b_1, b_2, ..., b_{N2}$ are positive numbers and satisfy: $0 < a_1 < a_2 < \cdots < a_{N2}$, and $0 < b_1 < b_2 < \cdots < b_{N2}$;

or,

the modulation symbol is acquired by modulating M3 + 3 number of bits of information in the data packet according to a third constellation model; the third constellation model comprises 8 * N3 number of constellation points, wherein M3 is an integer greater than or equal to 0; and N3 and M3 satisfy N3 = $2^{M3}$;

complex forms corresponding to the 8 * N3 number of constellation points in the third constellation model comprises:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

wherein $\pi$ denotes Pi; $j$ is an imaginary number; value of $j$ is equal to $\sqrt{-1}$; e denotes the natural logarithm; $\theta$ is a real number; $a_1, a_2, ..., a_{N3}$ and $b_1, b_2, ..., b_{N3}$ are positive numbers and satisfy: $0 < a_1 < a_2 < \cdots < a_{N3}$, and $0 < b_1 < b_2 < \cdots < b_{N3}$.

2. The method according to claim 1, wherein:

when the modulation symbol is modulated according to the first constellation model, each of $a_1, a_2, \cdots, a_{N1}$ is expressed by:

$$a_n = (2n - 1 + \Delta)d;$$

wherein, values of n comprise 1,2,..., $N1$; $d$ is a positive real number, and $\Delta$ is a real number greater than or equal to 0;

or, when the modulation symbol is modulated according to the second constellation model, each of $a_1, a_2, \cdots, a_{N2}$ is expressed by:

$$a_n = (2n - 1 + \Delta)d;$$

each of $b_1, b_2, ..., b_{N2}$ is expressed by

$$b_n = a_n + \beta;$$

wherein, the values of n comprise 1,2,..., $N2$; $d$ is a positive real number, and both $\Delta$ and $\beta$ are real numbers greater than or equal to 0;

or, when the modulation symbol is modulated according to the third constellation model, each of $a_1, a_2, \cdots, a_{N3}$ is expressed by:

$$a_n = (2n - 1 + \Delta)d;$$

each of $b_1, b_2, \cdots, b_{N3}$ is expressed by

$$b_n = a_n + \beta;$$

wherein, values of n comprise 1,2,..., N3; d is a positive real number, and both $\Delta$ and $\beta$ are real numbers greater than or equal to 0.

3. The method according to claim 2, wherein value of $\Delta$ is 0 and value of d is 1, such that $a_n$ satisfies $a_n$ = 2n - 1.

4. The method according to claim 2, wherein value of $\Delta$ is 1, and value of d is 1/2, such that $a_n$ satisfies $a_n$ = n.

5. The method according to claim 2, wherein value of $\Delta$ is 3, and value of d is 1/2, such that $a_n$ satisfies $a_n$ = n + 1.

6. The method according to claim 2, wherein value of $\Delta$ is $\sqrt{2} - 1$.

7. The method according to claim 6, wherein:

   value of d is 1, such that $a_n$ satisfies $a_n = 2n - 2 + \sqrt{2}$; or,
   value of d is 1/2, such that $a_n$ satisfies $a_n = n - 1 + \sqrt{2}/2$.

8. The method according to claim 2, wherein, when the modulation symbol is modulated and obtained according to the second constellation model or the third constellation model, $\beta$ is equal to 0.

9. The method according to claim 2, wherein when the modulation symbol is modulated and obtained according to the third constellation model, $\beta$ is greater than 0.

10. The method according to claim 2, wherein:

    when the modulation symbol is modulated and obtained according to the first constellation model, d takes such a value that an average power of the modulation symbol modulated by the first constellation model equals to 1; or,
    when the modulation symbol is modulated according to the second constellation model, d takes such a value that an average power of the modulation symbol modulated by the second constellation model equals to 1; or,
    when the modulation symbol is modulated according to the third constellation model, d takes such a value that an average power of the modulation symbol modulated by the third constellation model equals to 1.

11. The method according to claim 1, wherein:

    the value of $\theta$ is 0; or,
    the value of $\theta$ satisfies $\theta = \pi/4$; or,
    the value of $\theta$ satisfies $\theta = \pi/8$.

12. The method according to claim 1, wherein

    each of the extremely sparse pilots comprises a second number of non-zero value symbols, the second number is greater than 0 and less than 5, and
    the second number of non-zero value symbols are carried over a third number of adjacent resource elements in time-frequency domain, or over a third number of symbols in a temporal sequence, or over a third number of resource elements in adjacent subcarriers in frequency domain, wherein the third number equals to the second number.

13. The method according to claims 1 or 12, wherein a symbol length of each of the extremely sparse pilots is greater than 24.

14. The method according to claim 12, wherein:

the value of the second number is 1; or,
the value of the second number is 2, and the second number of the non-zero value symbols form a non-zero value symbol pair [p1, p2], and value of *[p1, p2]* is [a1, a2] or *[b1, b2]*, wherein [a1, *a2]* is orthogonal to *[b1, b2]*; or,
the value of the second number is 2, and the second number of the non-zero value symbols form a non-zero value symbol pair *[p1, p2]*, and value of *[p1, p2]* comprises at least of:

$$[p1, p2] = [1,1];$$

$$[p1, p2] = [1, -1];$$

$$[p1, p2] = [1, j];$$

$$[p1, p2] = [1, -j];$$

or,
the value of the second number is 4, and the second number of the non-zero value symbols form a non-zero value symbol set *[p1, p2, p3, p4]*, and value of [p1, p2, p3, p4] is one of [a1, a2, a3, *a4]*, *[b1, b2, b3, b4]*, *[c1, c2, c3, c4]*, or *[d1, d2, d3, d4]*, wherein [a1, *a*2, *a*3, a4], *[b1,b2,b3,b4]*, *[c1, c2, c3, c4]*, [d1, d2, d3, d4] are orthogonal to each other; or,
the value of the second number is 4, and the second number of the non-zero value symbols form a non-zero value symbol set [p1, p2, p3, p4], and the value of [p1, p2, p3, p4] comprises at least of:

$$[p1, p2, p3, p4] = [1,1,1,1];$$

$$[p1, p2, p3, p4] = [1,1, -1, -1];$$

$$[p1, p2, p3, p4] = [1, -1,1, -1];$$

$$[p1, p2, p3, p4] = [1, -1, -1,1];$$

$$[p1, p2, p3, p4] = [1,1, j, -j];$$

$$[p1, p2, p3, p4] = [1,1, -j, j];$$

$$[p1, p2, p3, p4] = [1, -1, j, j];$$

$$[p1, p2, p3, p4] = [1, -1, -j, -j];$$

$$[p1, p2, p3, p4] = [1, j, 1, -j];$$

$$[p1, p2, p3, p4] = [1, j, -1, j];$$

$$[p1, p2, p3, p4] = [1, -j, 1, j];$$

$$[p1, p2, p3, p4] = [1, -j, -1, -j];$$

$$[p1, p2, p3, p4] = [1, j, j, -1];$$

$$[p1, p2, p3, p4] = [1, j, -j, 1];$$

$$[p1, p2, p3, p4] = [1, -j, j, 1];$$

$$[p1, p2, p3, p4] = [1, -j, -j, -1];$$

$$[p1, p2, p3, p4] = [1, 1, 1, -1];$$

$$[p1, p2, p3, p4] = [1, 1, -1, 1];$$

$$[p1, p2, p3, p4] = [1, -1, 1, 1];$$

$$[p1, p2, p3, p4] = [1, -1, -1, -1];$$

$$[p1, p2, p3, p4] = [1, 1, j, j];$$

$$[p1, p2, p3, p4] = [1, 1, -j, -j];$$

$$[p1, p2, p3, p4] = [1, -1, j, -j];$$

$$[p1, p2, p3, p4] = [1, -1, -j, j];$$

$$[p1, p2, p3, p4] = [1, j, 1, j];$$

$$[p1, p2, p3, p4] = [1, j, -1, -j];$$

$$[p1, p2, p3, p4] = [1, -j, 1, -j];$$

$$[p1, p2, p3, p4] = [1, -j, -1, j];$$

$$[p1, p2, p3, p4] = [1, j, j, 1];$$

$$[p1, p2, p3, p4] = [1, j, -j, -1];$$

$$[p1, p2, p3, p4] = [1, -j, j, -1];$$

$$[p1, p2, p3, p4] = [1, -j, -j, 1];$$

$$[p1, p2, p3, p4] = [1, 1, 1, j];$$

$$[p1, p2, p3, p4] = [1, 1, -1, -j];$$

$$[p1, p2, p3, p4] = [1, -1, 1, -j];$$

$$[p1, p2, p3, p4] = [1, -1, -1, j];$$

$$[p1, p2, p3, p4] = [1, 1, j, 1];$$

$$[p1, p2, p3, p4] = [1, 1, -j, -1];$$

$$[p1, p2, p3, p4] = [1, -1, j, -1];$$

$$[p1, p2, p3, p4] = [1, -1, -j, 1];$$

$$[p1, p2, p3, p4] = [1, j, 1, 1];$$

$$[p1, p2, p3, p4] = [1, j, -1, -1];$$

$$[p1, p2, p3, p4] = [1, -j, 1, -1];$$

$$[p1, p2, p3, p4] = [1, -j, -1, 1];$$

$$[p1, p2, p3, p4] = [1, j, j, -j];$$

$$[p1, p2, p3, p4] = [1, j, -j, j];$$

$$[p1, p2, p3, p4] = [1, -j, j, j];$$

$$[p1, p2, p3, p4] = [1, -j, -j, -j];$$

$$[p1, p2, p3, p4] = [1, 1, 1, -j];$$

$$[p1, p2, p3, p4] = [1, 1, -1, j];$$

$$[p1, p2, p3, p4] = [1, -1, 1, j];$$

$$[p1, p2, p3, p4] = [1, -1, -1, -j];$$

$$[p1, p2, p3, p4] = [1, 1, j, -1];$$

$$[p1, p2, p3, p4] = [1, 1, -j, 1];$$

$$[p1, p2, p3, p4] = [1, -1, j, 1];$$

$$[p1, p2, p3, p4] = [1, -1, -j, -j];$$

$$[p1, p2, p3, p4] = [1, j, 1, -1];$$

$$[p1, p2, p3, p4] = [1, j, -1, 1];$$

$$[p1, p2, p3, p4] = [1, -j, 1, 1];$$

$$[p1, p2, p3, p4] = [1, -j, -1, -1];$$

$$[p1, p2, p3, p4] = [1, j, j, j];$$

$$[p1, p2, p3, p4] = [1, j, -j, -j];$$

$$[p1, p2, p3, p4] = [1, -j, j, -j];$$

$$[p1, p2, p3, p4] = [1, -j, -j, j].$$

15. The method according to claim 1, wherein when the value of the first number is greater than or equal to 2:

the first number of the extremely sparse pilots are independent of each other; or,
the first number of the extremely sparse pilots are determined according to information contained in the data packet; or,
the first number of the extremely sparse pilots are determined according to one or more bits of information contained in the data packet; or,
each of the extremely sparse pilots is determined from a preset pilot set according to a fourth number of bits of information contained in the data packet; wherein the preset pilot set comprises a fifth number of pilots, and the fourth number and the fifth number are in a logarithmic function relation with a base of 2.

16. The method according to claim 1, wherein value of the first number is 1 or 2.

17. A method for information transmission, applied to a second communication node, the method comprising:

receiving a data packet sent and a first number of extremely sparse pilots that are sent by a first communication node;
wherein the first number is greater than or equal to 1, and the data packet at least comprises at least one modulation symbol;
the modulation symbol is acquired by modulating M1 + 1 number of bits of information in the data packet according to a first constellation model; the first constellation model comprises 2 * N1 number of constellation points, wherein M1 is an integer greater than or equal to 1; and N1 and M1 satisfy $N1 = 2^{M1}$;
complex forms corresponding to the 2 * $N1$ number of constellation points in the first constellation model comprise:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

wherein $\pi$ denotes Pi; $j$ is an imaginary number; value of $j$ is equal to $\sqrt{-1}$ ; e denotes the natural logarithm; $\theta$ is a real number; $a_1$, $a_2$, $\cdots$, $a_{N1}$ are positive numbers and satisfy: $0 < a_1 < a_2 < \cdots < a_{N1}$;
or,
the modulation symbol is acquired by modulating M2 + 2 number of bits of information in the data packet according to a second constellation model; the second constellation model comprises 4 * N2 number of constellation points, wherein M2 is an integer greater than or equal to 1; and N2 and M2 satisfy $N2 = 2^{M2}$;
complex forms corresponding to the 4 * N2 number of constellation points in the second constellation model comprise:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

wherein $\pi$ denotes Pi; $j$ is an imaginary number; value of $j$ is equal to $\sqrt{-1}$; e denotes the natural logarithm; $\theta$ is a real number; $a_1, a_2, \cdots, a_{N2}$ and $b_1, b_2, ..., b_{N2}$ are positive numbers and satisfy: $0 < a_1 < a_2 < \cdots < a_{N2}$, and $0 < b_1 < b_2 < \cdots < b_{N2}$;
or,
the modulation symbol is acquired by modulating M3 + 3 number of bits of information in the data packet according to a third constellation model; the third constellation model comprises 8 * N3 number of constellation points, wherein M3 is an integer greater than or equal to 0; and N3 and M3 satisfy N3 = $2^{M3}$;
complex forms corresponding to the 8 * N3 number of constellation points in the third constellation model comprises

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

wherein $\pi$ denotes Pi; $j$ is an imaginary number; value of $j$ is equal to $\sqrt{-1}$; e denotes the natural logarithm; $\theta$ is a real number; $a_1, a_2, ..., a_{N3}$ and $b_1, b_2, ..., b_{N3}$ are positive numbers and satisfy: $0 < a_1 < a_2 < \cdots < a_{N3}$, and $0 < b_1 < b_2 < \cdots < b_{N3}$.

18. The method according to claim 17, wherein:

when the modulation symbol is modulated according to the first constellation model, each of $a_1, a_2, \cdots, a_{N1}$ is expressed by:

$$a_n = (2n - 1 + \Delta)d;$$

or, when the modulation symbol is modulated according to the second constellation model, each of $a_1, a_2, \cdots, a_{N2}$ is expressed by:

$$a_n = (2n - 1 + \Delta)d;$$

each of $b_1, b_2, \cdots, b_{N2}$ is expressed by

$$b_n = a_n + \beta;$$

wherein, the values of n comprise 1,2,..., N2; d is a positive real number, and both $\Delta$ and $\beta$ are real numbers greater than or equal to 0;
or, when the modulation symbol is modulated according to the third constellation model, each of $a_1, a_2, \cdots, a_{N3}$ is expressed by:

$$a_n = (2n - 1 + \Delta)d;$$

each of $b_1, b_2, \cdots, b_{N3}$ is expressed by

$$b_n = a_n + \beta;$$

wherein values of n comprise 1,2,..., N3, and d is a positive real number, and both $\Delta$ and $\beta$ are real numbers greater than or equal to 0.

**19.** The method according to claim 18, wherein the value of $\Delta$ is 0 and the value of d is 1, such that $a_n$ satisfies $a_n$ = 2n - 1.

**20.** The method according to claim 18, wherein the value of $\Delta$ is 1, and the value of d is 1/2, such that $a_n$ satisfies $a_n$ = n.

**21.** The method according to claim 18, wherein the value of $\Delta$ is 3, and the value of d is 1/2, such that $a_n$ satisfies $a_n$ = n + 1.

**22.** The method according to claim 18, wherein the value $\Delta$ of is $\sqrt{2} - 1$.

**23.** The method according to claim 22, wherein:

the value of d is 1, such that $a_n$ satisfies $a_n = 2n - 2 + \sqrt{2}$; or,
the value of d is 1/2, such that $a_n$ satisfies $a_n = n - 1 + \sqrt{2}/2$.

**24.** The method according to claim 18, wherein when the modulation symbol is modulated and obtained according to the second constellation model or the third constellation model, $\beta$ equal to 0.

**25.** The method according to claim 18, wherein when the modulation symbol is modulated and obtained according to the third constellation model, $\beta$ is greater than 0.

**26.** The method according to claim 18, wherein:

when the modulation symbol is modulated according to the first constellation model, d takes such a value that an average power of the modulation symbol modulated by the first constellation model equals to 1; or,
when the modulation symbol is modulated according to the second constellation model, d takes such a value that an average power of the modulation symbol modulated by the second constellation model equals to 1; or,
when the modulation symbol is modulated according to the third constellation model, d takes such a value that an average power of the modulation symbol modulated by the third constellation model equals to 1.

**27.** The method according to claim 17, wherein:

value of $\theta$ is 0; or,
value of $\theta$ satisfies $\theta = \pi/4$; or,
value of $\theta$ satisfies $\theta = \pi/8$.

**28.** The method according to claim 17, wherein

each of the extremely sparse pilots comprises a second number of non-zero value symbols, the second number is greater than 0 and less than 5, and

the second number of non-zero value symbols are carried over a third number of adjacent resource elements in time-frequency domain, or over a third number of symbols in a temporal sequence, or over a third number of resource elements in adjacent subcarriers in frequency domain, wherein the third number equals to the second number.

29. The method according to claims 17 or 28, wherein a symbol length of each of the extremely sparse pilots is greater than 24.

30. The method according to claim 28, wherein:

value of the second number is 1; or,
value of the second number is 2, and the second number of the non-zero value symbols form a non-zero value symbol pair *[p1, p2]*, and value of *[p1, p2]* is [a1, a2] or [b1, b2], wherein [a1, a2] is orthogonal to *[b1, b2]*; or,
value of the second number is 2, and the second number of the non-zero value symbols form a non-zero value symbol pair *[p1, p2]*, and value of *[p1, p2]* comprises at least of:

$$[p1, p2] = [1,1];$$

$$[p1, p2] = [1, -1];$$

$$[p1, p2] = [1, j];$$

$$[p1, p2] = [1, -j];$$

or,
value of the second number is 4, and the second number of the non-zero value symbols form a non-zero value symbol set *[p1, p2, p3, p4]*, and the value of [p1, p2, p3, p4] is one of [a1, a2, a3, a4], [b1, b2, b3, b4], *[c1, c2, c3, c4]*, or *[d1, d2, d3, d4]*, wherein [a1, a2, a3, a4], [b1, b2, b3, b4], *[c1, c2, c3, c4]*, [d1, d2, d3, d4] are orthogonal to each other; or,
value of the second number is 4, and the second number of the non-zero value symbols form a non-zero value symbol set *[p1, p2, p3, p4]*, and the value of [p1, p2, p3, p4] comprise at least of:

$$[p1, p2, p3, p4] = [1,1,1,1];$$

$$[p1, p2, p3, p4] = [1,1, -1, -1];$$

$$[p1, p2, p3, p4] = [1, -1,1, -1];$$

$$[p1, p2, p3, p4] = [1, -1, -1,1];$$

$$[p1, p2, p3, p4] = [1,1, j, -j];$$

$$[p1, p2, p3, p4] = [1,1, -j, j];$$

$$[p1, p2, p3, p4] = [1, -1, j, j];$$

$$[p1, p2, p3, p4] = [1, -1, -j, -j];$$

$$[p1, p2, p3, p4] = [1, j, 1, -j];$$

$$[p1, p2, p3, p4] = [1, j, -1, j];$$

$$[p1, p2, p3, p4] = [1, -j, 1, j];$$

$$[p1, p2, p3, p4] = [1, -j, -1, -j];$$

$$[p1, p2, p3, p4] = [1, j, j, -1];$$

$$[p1, p2, p3, p4] = [1, j, -j, 1];$$

$$[p1, p2, p3, p4] = [1, -j, j, 1];$$

$$[p1, p2, p3, p4] = [1, -j, -j, -1];$$

$$[p1, p2, p3, p4] = [1, 1, 1, -1];$$

$$[p1, p2, p3, p4] = [1, 1, -1, 1];$$

$$[p1, p2, p3, p4] = [1, -1, 1, 1];$$

$$[p1, p2, p3, p4] = [1, -1, -1, -1];$$

$$[p1, p2, p3, p4] = [1, 1, j, j];$$

$$[p1, p2, p3, p4] = [1, 1, -j, -j];$$

$$[p1, p2, p3, p4] = [1, -1, j, -j];$$

$$[p1, p2, p3, p4] = [1, -1, -j, j];$$

$$[p1, p2, p3, p4] = [1, j, 1, j];$$

$$[p1, p2, p3, p4] = [1, j, -1, -j];$$

$$[p1, p2, p3, p4] = [1, -j, 1, -j];$$

$$[p1, p2, p3, p4] = [1, -j, -1, j];$$

$$[p1, p2, p3, p4] = [1, j, j, 1];$$

$$[p1, p2, p3, p4] = [1, j, -j, -1];$$

$$[p1, p2, p3, p4] = [1, -j, j, -1];$$

$$[p1, p2, p3, p4] = [1, -j, -j, 1];$$

$$[p1, p2, p3, p4] = [1,1,1,j];$$

$$[p1, p2, p3, p4] = [1,1,-1,-j];$$

$$[p1, p2, p3, p4] = [1,-1,1,-j];$$

$$[p1, p2, p3, p4] = [1,-1,-1,j];$$

$$[p1, p2, p3, p4] = [1,1,j,1];$$

$$[p1, p2, p3, p4] = [1,1,-j,-1];$$

$$[p1, p2, p3, p4] = [1,-1,j,-1];$$

$$[p1, p2, p3, p4] = [1,-1,-j,1];$$

$$[p1, p2, p3, p4] = [1,j,1,1];$$

$$[p1, p2, p3, p4] = [1,j,-1,-1];$$

$$[p1, p2, p3, p4] = [1,-j,1,-1];$$

$$[p1, p2, p3, p4] = [1,-j,-1,1];$$

$$[p1, p2, p3, p4] = [1,j,j,-j];$$

$$[p1, p2, p3, p4] = [1,j,-j,j];$$

$$[p1, p2, p3, p4] = [1,-j,j,j];$$

$$[p1, p2, p3, p4] = [1,-j,-j,-j];$$

$$[p1, p2, p3, p4] = [1,1,1,-j];$$

$$[p1, p2, p3, p4] = [1,1,-1,j];$$

$$[p1, p2, p3, p4] = [1,-1,1,j];$$

$$[p1, p2, p3, p4] = [1,-1,-1,-j];$$

$$[p1, p2, p3, p4] = [1,1,j,-1];$$

$$[p1, p2, p3, p4] = [1,1,-j,1];$$

$$[p1, p2, p3, p4] = [1,-1,j,1];$$

$$[p1, p2, p3, p4] = [1, -1, -j, -j];$$

$$[p1, p2, p3, p4] = [1, j, 1, -1];$$

$$[p1, p2, p3, p4] = [1, j, -1, 1];$$

$$[p1, p2, p3, p4] = [1, -j, 1, 1];$$

$$[p1, p2, p3, p4] = [1, -j, -1, -1];$$

$$[p1, p2, p3, p4] = [1, j, j, j];$$

$$[p1, p2, p3, p4] = [1, j, -j, -j];$$

$$[p1, p2, p3, p4] = [1, -j, j, -j];$$

$$[p1, p2, p3, p4] = [1, -j, -j, j].$$

31. The method according to claim 17, wherein when value of the first number is greater than or equal to 2:

the first number of the extremely sparse pilots are independent of each other; or,
the first number of the extremely sparse pilots are determined according to information contained in the data packet; or,
the first number of the extremely sparse pilots are determined according to one or more bits of information contained in the data packet; or,
each of the extremely sparse pilots is determined from a preset pilot set according to a fourth number of bits of information contained in the data packet; wherein the preset pilot set comprises a fifth number of pilots, and the fourth number and the fifth number are in a logarithmic function relation with a base of 2.

32. The method according to claim 17, wherein value of the first number is 1 or 2.

33. A communication apparatus, comprising:

at least one processor; and
at least one memory configured to store a program which,
when executed by the at least one processor, causes the at least one processor to carry out the method as claimed in any one of claims 1 to 32.

34. A computer-readable storage medium storing a computer-executable instruction which, when executed by a processor, causes the processor to carry out the method of any one of claims 1 to 32.

*FIG. 1*

# EP 4 589 903 A1

Determine a first number of extremely sparse pilots — S110

Send a data packet and the first number of extremely sparse pilots to a second communication node — S120

**FIG. 2**

P1 | P2 | ...... | Pw | Packet

**FIG. 3**

Receive a data packet sent and a first number of extremely sparse pilots that are sent by a first communication node — S210

**FIG. 4**

**FIG. 5**

*FIG. 6*

*FIG. 7*

FIG. 8

*FIG. 9*

*FIG. 10*

*FIG. 11*

**FIG. 12**

**FIG. 13**

FIG. 14

**FIG. 15**

*FIG. 16*

**FIG. 17**

*FIG. 18*

**FIG. 19**

*FIG. 20*

**FIG. 21**

EP 4 589 903 A1

**FIG. 22**

EP 4 589 903 A1

**FIG. 23**

First set          Second set          Third set

**FIG. 24**

**FIG. 25**

**FIG. 26**

**FIG. 27**

**FIG. 28**

First
PRB

Second
PRB

X th
PRB

*FIG. 29*

*FIG. 30*

**FIG. 31**

**FIG. 32**

First
PRB

Second
PRB

X th
PRB

*FIG. 33*

Port 1    Port 2                                    Port X*12

X*12 number of extremely sparse pilots

*FIG. 34*

Port 1 Port 2   Port 3 Port 4        Port X*12 -1   Port X*12

X*12 number of extremely sparse pilots ports

*FIG. 35*

OCC code 1        OCC code 2

*FIG. 36*

First
PRB

Second
PRB

X th
PRB

*FIG. 37*

Port 1   Port 2   Port 3   Port 4      Port 5   Port 6   Port 7   Port 8            Port X*24-1   Port X*24

X*24 number of extremely sparse pilots ports

*FIG. 38*

Communication apparatus — 100

Processor — 101

Memory — 102

**FIG. 39**

## INTERNATIONAL SEARCH REPORT

| International application No. |
| --- |
| **PCT/CN2023/134170** |

### A.    CLASSIFICATION OF SUBJECT MATTER

H04L 27/34(2006.01)i

According to International Patent Classification (IPC) or to both national classification and IPC

### B.    FIELDS SEARCHED

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT; CNKI; VEN; ENTXT; IEEE; 3GPP: 导频, 稀疏, 调制, 正交, 振幅, 阶数, 星座图, 模型, 传输, 传送, 比特, 复数, 指示, 信息, 消息, 符号, 参考, sparse, pilot, overhead, QAM, OFDM, OCC, SPS, RRC, PRB, RS, RE, signal, configuration

### C.    DOCUMENTS CONSIDERED TO BE RELEVANT

| Category* | Citation of document, with indication, where appropriate, of the relevant passages | Relevant to claim No. |
| --- | --- | --- |
| X | CN 115004841 A (ZTE CORP.) 02 September 2022 (2022-09-02) description, paragraphs [0014]-[0139], and figures 1-30 | 1-34 |
| A | CN 105847192 A (SHANGHAI JIAO TONG UNIVERSITY) 10 August 2016 (2016-08-10) entire document | 1-34 |
| A | CN 111726194 A (HUAWEI TECHNOLOGIES CO., LTD.) 29 September 2020 (2020-09-29) entire document | 1-34 |
| A | CN 112887068 A (HUAWEI TECHNOLOGIES CO., LTD.) 01 June 2021 (2021-06-01) entire document | 1-34 |
| A | US 2011128842 A1 (SEQUANS COMMUNICATIONS) 02 June 2011 (2011-06-02) entire document | 1-34 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T"  later document published after the international filing date or priority date and not in conflict with the application but cited to understand the principle or theory underlying the invention |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"  document member of the same patent family |
| "P" | document published prior to the international filing date but later than the priority date claimed | |

| Date of the actual completion of the international search | Date of mailing of the international search report |
| --- | --- |
| **04 February 2024** | **14 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/134170**

| Patent document cited in search report | | | Publication date (day/month/year) | Patent family member(s) | | | Publication date (day/month/year) |
|---|---|---|---|---|---|---|---|
| CN | 115004841 | A | 02 September 2022 | None | | | |
| CN | 105847192 | A | 10 August 2016 | None | | | |
| CN | 111726194 | A | 29 September 2020 | None | | | |
| CN | 112887068 | A | 01 June 2021 | None | | | |
| US | 2011128842 | A1 | 02 June 2011 | EP | 2328310 | A1 | 01 June 2011 |
| | | | | EP | 2328310 | B1 | 11 January 2017 |
| | | | | US | 8917585 | B2 | 23 December 2014 |

Form PCT/ISA/210 (patent family annex) (July 2022)

**EP 4 589 903 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211521420